Europäisches Patentamt

European Patent Office

Office européen des brevets

(19)

(11) **EP 1 431 373 A1**

(12) **EUROPEAN PATENT APPLICATION**
published in accordance with Art. 158(3) EPC

(43) Date of publication:
**23.06.2004 Bulletin 2004/26**

(51) Int Cl.[7]: **C10K 1/26**

(21) Application number: **02800279.8**

(22) Date of filing: **30.09.2002**

(86) International application number:
**PCT/JP2002/010148**

(87) International publication number:
**WO 2003/029390 (10.04.2003 Gazette 2003/15)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **28.09.2001 JP 2001299382**
**13.12.2001 JP 2001380767**

(71) Applicant: **EBARA CORPORATION**
**Ohta-ku, Tokyo 144-8510 (JP)**

(72) Inventors:
• **MOROZUMI, Fumiaki, c/o Ebara Corporation Tokyo 144-8510 (JP)**
• **NARUSE, Katsutoshi, c/o Ebara Corporation Tokyo 144-8510 (JP)**
• **SASAKI, Kaori, c/o Ebara Corporation Tokyo 144-8510 (JP)**

• **IWADATE, Yuki, c/o Ebara Corporation Tokyo 144-8510 (JP)**
• **HAYAKAWA, Junichi, c/o Ebara Corporation Tokyo 144-8510 (JP)**
• **OSHITA, Takahiro, c/o Ebara Corporation Tokyo 144-8510 (JP)**
• **HOSODA, Shugo, c/o Ebara Corporation Tokyo 144-8510 (JP)**
• **MATSUOKA, Kei, c/o Ebara Corporation Tokyo 144-8510 (JP)**
• **IMAIZUMI, Takashi, c/o Ebara Corporation Tokyo 144-8510 (JP)**
• **FUJIMURA, Hiroyuki, c/o Ebara Corporation Tokyo 144-8510 (JP)**

(74) Representative: **Wagner, Karl H., Dipl.-Ing.**
**Wagner & Geyer,**
**Patentanwälte,**
**Gewürzmühlstrasse 5**
**80538 München (DE)**

(54) **PROCESS FOR REFORMING INFLAMMABLE GAS, APPARATUS FOR REFORMING INFLAMMABLE GAS AND GASIFICATION APPARATUS**

(57)    The present invention relates to a combustible gas reforming method, a combustible gas reforming apparatus, and a gasification apparatus for gasifying a combustible material such as coal, biomass, municipal wastes, industrial wastes, RDF (refuse-derived fuel), waste plastics, and the like, and reforming a generated combustible gas. According to a combustible gas reforming method of the present invention, combustibles are gasified in a gasification apparatus (11), a generated gas ($G_A$) produced by gasifying the combustibles is reformed in a gas reforming apparatus (12) using a catalyst to produce a product gas ($G_B$), and a catalyst ($C_A'$) degraded by the gas reforming apparatus (11) is regenerated in a catalyst regenerating apparatus (13). Waste heat ($T_P$) of the combustible gas reforming process is used as heat to regenerate the catalyst in the catalyst regenerating apparatus (13).

## EP 1 431 373 A1

### Description

### Technical Field

The present invention relates to a combustible gas reforming method and a combustible gas reforming apparatus for reforming a combustible gas produced by a gasification apparatus which gasifies combustible materials such as coal, biomass, municipal wastes, industrial wastes, RDF (refuse-derived fuel) and waste plastics, and a gasification apparatus.

### Background Art

A gasification and slagging combustion furnace which has been developed as a technology for incinerating wastes or the like converts wastes into a combustible gas in a gasification apparatus and immediately combusts the combustible gas, thereby achieving high-temperature combustion. The high-temperature combustion is advantageous in that ash is reduced in volume and made harmless by being melted, and the combustion efficiency is improved (unburned combustibles in the incineration ash are reduced and the amount of exhaust gas is reduced due to low-temperature air ratio operation). However, the high-temperature combustion is problematic from the standpoint of energy utilization in that there is a limit to efficiency because all the energy is converted into heat as with a conventional incinerating furnace, and energy which is conservable cannot be produced.

In view of the above drawbacks, there has recently been developed a technology for utilizing a gas generated by a gasification apparatus (hereinafter referred to as "generated gas") as a "gas" to the utmost, rather than combusting the gas. The produced gas (hereinafter referred to as "product gas") is used as a fuel for a gas turbine, a gas engine, and an electric generating apparatus such as a fuel cell, or as a material for synthesizing a liquid fuel.

A cogeneration system which combines the generation of electricity by utilizing a product gas and the generation of electricity by heat recovery improves the energy utilization efficiency, and is being developed not only in the field of wastes, but also in the field of thermal power generation as a highly efficient coal fired power generation technology. The technology of utilizing a product gas as a material for synthesizing a liquid fuel will contribute to energy security in the future because conservable energy can be produced from energy resources which have heretofore been thrown away.

The technology for extracting a generated gas as a product gas was present in the past. However, since a gas produced by gasifying combustible materials in a low temperature range was used as it was at that time, the handling of a tar (macromolecular hydrocarbon: deposited at 400°C or lower and causing fouling trouble) and a char (which is combusted when being in contact with oxygen at high temperatures because it contains fixed carbon) posed problems, which have been responsible for preventing the technology from finding practical use.

According to the present gas utilization technology, in order to avoid the above tar problem, a high-temperature gasification apparatus (operable at a temperature of 1000°C or higher) is provided at a subsequent stage of a low-temperature gasification apparatus (operable at a temperature of 500°C to 900°C), and a generated gas produced by the low-temperature gasification apparatus is reformed with an oxidizing agent (oxygen, steam) in the high-temperature gasification apparatus. Since this process is a two-stage (low temperature + high temperature) gasification process, part of the generated gas produced by the low-temperature gasification apparatus in the first stage is combusted. While the above tar problem can be solved by the process, the energy utilization efficiency is lowered because part of the generated gas is converted into thermal energy.

Use of a catalyst has been considered to solve the above tar problem. The purpose of using a catalyst is to suppress an energy loss that is caused at high temperatures by promoting a decomposition reaction with the catalyst in such a temperature range in which the tar would normally be less liable to be decomposed.

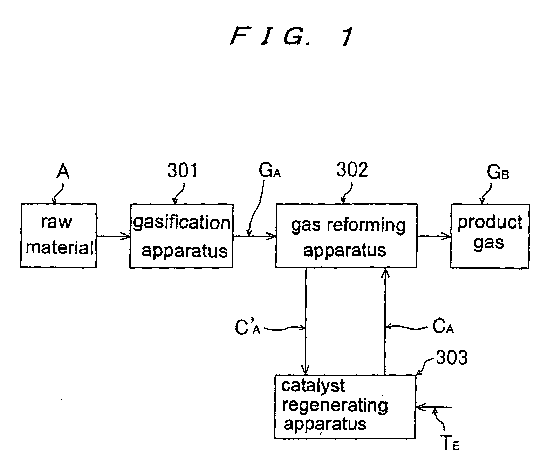

FIG. 1 of the accompanying drawings is a diagram showing a construction of a gas reforming apparatus for carrying out a conventional combustible gas reforming method which uses a catalyst. In FIG. 1, reference numeral 301 represents a gasification apparatus which gasifies a raw material A such as coal, biomass, municipal wastes, industrial wastes, RDF, waste plastics, etc. A generated gas $G_A$ produced by the gasification apparatus 301 is reformed (tar decomposition) into a product gas $G_B$ by a gas reforming apparatus 302 which uses a catalyst $C_A$. The catalyst $C_A$ which has contributed to the reformation of the generated gas $G_A$ is turned into a degraded catalyst $C_A'$, which is delivered to a catalyst regenerating apparatus 303. In the catalyst regenerating apparatus 303, the degraded catalyst $C_A'$ is heated or regenerated by catalyst regenerating heat $T_E$ caused by external energy or combustion of part of the generated gas. The heated or regenerated catalyst $C_A$ is transferred again to the gas reforming apparatus 302.

As described above, the catalyst regenerating heat $T_E$ is required for the catalyst regenerating apparatus 303 to heat or regenerate the catalyst. Heretofore, the catalyst regenerating heat $T_E$ has been produced by combustion of part of the generated gas $G_A$ or external energy such as fossil fuel, electricity, etc. Even if the gas reforming can be performed at a low temperature by using a catalyst to reduce thermal energy loss, energy of high quality is utilized

2

likewise for heating or regenerating the catalyst, and hence the advantages of low-temperature reaction cannot be sufficiently utilized. Therefore, even though the gas reforming process is highly efficient, since the overall amount of consumed energy is increased, the running cost is increased, resulting in a reduction in the evaluation according to LCA. As the process becomes higher in efficiency, the evaluation according to LCA or exergy (the quality of energy), rather than a simple thermal efficiency, becomes important.

In the case where the gas reforming is performed using the catalyst, the supply of heat in the temperature range of 1000°C or less is sufficient differently from the reforming by the high-temperature gasification apparatus, and hence external energy having high quality as energy or combustion of the generated gas is not always necessary. Thus, it is necessary to construct a catalyst reforming process on the basis of the fact that heat required for heating or regenerating the catalyst can be supplied through a heat transfer surface or a medium.

**Disclosure of Invention**

The present invention has been made in view of the above problems. It is therefore an object of the present invention to provide a combustible gas reforming method and a combustible gas reforming apparatus which improve energy utilization efficiency for catalyst regeneration in reforming a gas with a catalyst and facilitate handling of the catalyst in a process for gasifying combustible materials including coal, biomass, municipal wastes, industrial wastes, RDF, waste plastics, etc. with a gasification apparatus and reforming the generated gas into a product gas. That is, it is an object of the present invention to provide a gasification furnace which can suppress generation of tar to a minimum to stably produce a generated gas having an excellent property, and can produce a generated gas capable of being utilized for the recovery of power at high efficiency, power generation, various liquid fuel synthesis processes, and various chemical material synthesis processes.

Another object of the present invention is to provide a combustible gas reforming method and a combustible gas reforming apparatus which improve the energy utilization efficiency in catalyst regeneration and gas reforming, and facilitate handling of the catalyst.

In order to achieve the above objects, according to the invention defined in claim 1, there is provided a combustible gas reforming method comprising: gasifying combustibles in a gasification apparatus; reforming a generated gas produced by gasification in a gas reforming apparatus using a catalyst to produce a product gas; and regenerating the catalyst degraded in the gas reforming apparatus in a catalyst regenerating apparatus; wherein waste heat of the combustible gas reforming process is used as a heat source for regenerating the catalyst in the catalyst regenerating apparatus and/or a heat source for heating.

According to the invention defined in claim 2, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein the catalyst regenerating apparatus uses waste heat of the combustible gas reforming process as a heat source for regenerating the catalyst.

As described above, the waste heat of the combustible gas reforming process is utilized as the heat source required for catalyst regenerating heat in the catalyst regenerating apparatus and gas reforming reaction in the gas reforming apparatus, or the catalyst regenerating apparatus which uses the waste heat of the combustible gas reforming process is used. Therefore, a heat source having a low value such as the sensible heat of exhaust gas that is generated in a gasification process of a raw material can be used as the heat source for regenerating the catalyst or the heat source for gas reforming. Thus, since any external energy or the heat of combustion of the generated gas may be reduced or eliminated, the yield of the generated gas can be increased. As a result, the overall efficiency can be increased. The overall amount of consumed energy is thus reduced, the running cost is low, and an LCA evaluation is high.

According to the invention defined in claim 3, there is provided a combustible gas reforming method comprising: gasifying combustibles in a gasification apparatus; reforming a generated gas produced by gasification in a gas reforming apparatus using a catalyst to produce a product gas; and regenerating the catalyst degraded in the gas reforming apparatus in a catalyst regenerating apparatus; wherein char (unburned carbon) produced by gasifying the combustibles in the gasification apparatus is combusted in a char combustion apparatus, and the heat of combustion of the char is used as a heat source for regenerating the catalyst in the catalyst regenerating apparatus and/or a heat source for heating.

According to the invention defined in claim 4, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein a char combustion apparatus is provided for combusting char (unburned carbon) produced by gasifying the combustibles in the gasification apparatus, and the catalyst regenerating apparatus uses the heat of combustion of the char generated in the char combustion apparatus for heating and regenerating the catalyst.

As described above, the char produced by gasifying the combustibles in the gasification apparatus is combusted in the char combustion apparatus, and the heat of combustion of the char is used as the heat source required for the catalyst regenerating heat or the gas reforming reaction in the gas reforming apparatus. Because any external energy or the heat of combustion of the generated gas may be reduced or eliminated, the yield of the generated gas can be increased. As a result, the overall efficiency can be increased. Specifically, the catalyst can be regenerated without combusting part of the product gas or without using external energy. Since the heat of combustion of the char, which is higher in temperature than the waste heat of the combustible gas reforming process, is used, the efficiency of heating and regenerating the catalyst is increased. Therefore, the overall amount of consumed energy is reduced, the running cost is low, and an LCA evaluation is high.

According to the invention defined in claim 5, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein the gasification apparatus comprises a gasification chamber and a combustion chamber each having a fluidized bed, the gasification chamber being constructed to gasify the combustibles to produce a generated gas and the combustion chamber being constructed to combust char (unburned carbon) produced by gasifying the combustibles; and wherein the generated gas produced in the gasification chamber is delivered to the gas reforming apparatus and reformed in the gas reforming apparatus, and a combustion exhaust gas from the combustion chamber is delivered to the catalyst regenerating apparatus to heat and regenerate the catalyst with the heat of the combustion exhaust gas.

As described above, the gasification chamber and the combustion chamber each having a fluidized bed are integrated into a furnace. In addition to the effect of the invention of claim 4, the gasification apparatus has a function to gasify a raw material and a function to combust char. Since char generated in the same apparatus is combusted, any trouble caused by the delivery of the char is avoided. Since the raw material is gasified in the fluidized bed and the char is combusted in the fluidized bed, the diffusion of heat is excellent, and stable operation can be performed.

According to the invention defined in claim 6, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein the gasification apparatus comprises a gasification apparatus having a fluidized bed which uses catalyst particles as at least part of a bed material, and a char combustion apparatus is provided for combusting char (unburned carbon) produced by gasifying the combustibles in the gasification apparatus; and wherein at the same time that the combustibles are gasified to produce a generated gas in the gasification apparatus, the generated gas is reformed by the catalyst particles, and the catalyst particles degraded by reforming the generated gas are delivered to the char combustion apparatus, and heated and regenerated in the char combustion apparatus, and the regenerated catalyst particles are returned to the gasification apparatus.

As described above, the gasification apparatus comprises a gasification apparatus having a fluidized bed which uses catalyst particles as at least part of a bed material, and at the same time that the combustibles are gasified to produce the generated gas in the gasification apparatus, the generated gas is reformed (tar decomposition) by bringing the generated gas and the catalyst particles as a bed material into contact with each other. Therefore, the generated gas is reformed efficiently, and catalyst particles that function as a desulfurizing agent and a dechlorinating agent can be used, and the generated gas can be desulfurized and dechlorinated. In addition to the effect of claims 3 and 4, gasification of the raw material and reforming of the gas, and combustion of the char and regeneration of the catalyst can be performed in one apparatus. Consequently, a catalyst regenerating apparatus can be eliminated, and the initial cost of the apparatus can be reduced.

According to the invention defined in claim 7, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein the gasification apparatus comprises a gasification chamber and a combustion chamber each having a fluidized bed which uses catalyst particles as at least part of a bed material, the gasification chamber being constructed to gasify the combustibles to produce a generated gas and the combustion chamber being constructed to combust char (unburned carbon) produced by gasifying the combustibles; and wherein at the same time that the combustibles are gasified to produce a generated gas in the gasification chamber, the generated gas is reformed by the catalyst particles, and the catalyst particles degraded by reforming the generated gas are delivered to the combustion chamber, and heated and regenerated in the combustion chamber, and the regenerated catalyst particles are returned to the gasification chamber.

As described above, the gasification apparatus comprises a gasification chamber and a combustion chamber each having a fluidized bed which uses catalyst particles as at least part of a bed material, and at the same time that the combustibles are gasified into the generated gas in the gasification chamber, the generated gas is reformed by the catalyst particles, and the degraded catalyst particles are delivered to the combustion chamber, and heated and regenerated in the combustion chamber. Consequently, in addition to the effect of the invention of claim 6, the problem of handling of particles including char from the gasification chamber to the combustion chamber can be solved, and the heat efficiency is improved.

According to the invention defined in claim 8, there is provided a combustible gas reforming apparatus comprising: a gasification apparatus for gasifying combustibles; and a gas reforming apparatus for reforming a generated gas produced in the gasification apparatus using a catalyst to produce a product gas; wherein the gas reforming apparatus comprises a dust collecting and catalytic reaction apparatus having a dust collecting function to remove dust contained in the generated gas and a gas reforming function to reform the generated gas with the catalyst.

As described above, inasmuch as the dust collecting and catalytic reaction apparatus having a dust collecting function and a gas reforming function performs dust collecting of the generated gas from the gasification apparatus before the generated gas is reformed (tar decomposition) by the catalyst, the catalyst is prevented from being degraded and from being mixed with a dust. Further, separation of the catalyst is eliminated. In addition, the catalytic reaction apparatus may be of such a type as a reactor having a fixed bed which may possibly be clogged and may not be used in the presence of dust. Furthermore, the arrangement is suitable for preventing the catalyst, which decomposes tar at a low temperature, from being degraded or contaminated.

According to the invention defined in claim 9, there is provided a combustible gas reforming apparatus according to claim 8, wherein a char combustion apparatus and a catalyst regenerating apparatus are provided; and wherein the catalyst degraded by reforming the generated gas in the dust collecting and catalytic reaction apparatus is delivered to the catalyst regenerating apparatus, char (unburned carbon) produced when the combustibles are gasified to produce the generated gas by the gasification apparatus is delivered to the char combustion apparatus and combusted in the char combustion apparatus, and a combustion exhaust gas from the char combustion apparatus is delivered to the catalyst regenerating apparatus to heat and regenerate the catalyst.

As described above, since the catalyst degraded by reforming the generated gas is heated and regenerated by the catalyst regenerating apparatus with the heat of the combustion exhaust gas from the char combustion apparatus, in addition to the effect of the invention of claim 8, the catalyst can efficiently be regenerated and heated by the high-temperature heat of combustion of the char without using external energy or combusting part of the generated gas. It is thus possible to increase the yield of the generated gas. The overall amount of consumed energy is reduced, the running cost is low, and an LCA evaluation is high.

According to the invention defined in claim 10, there is provided a combustible gas reforming apparatus according to claim 8, wherein the gasification apparatus comprises a gasification chamber and a combustion chamber each having a fluidized bed, the gasification chamber being constructed to gasify the combustibles to produce a generated gas and the combustion chamber being constructed to combust char (unburned carbon) produced by gasifying the combustibles; and wherein a catalyst regenerating apparatus is further provided, the catalyst degraded by reforming the generated gas in the dust collecting and catalytic reaction apparatus is delivered to the catalyst regenerating apparatus, and a combustion exhaust gas from the combustion chamber is delivered to the catalyst regenerating apparatus to heat and regenerate the catalyst.

As described above, since the gasification apparatus comprises a gasification chamber and a combustion chamber each having a fluidized bed, and the catalyst degraded by reforming the generated gas is heated and regenerated by the catalyst regenerating apparatus with the combustion exhaust gas from the combustion chamber, in addition to the effect of the invention of claim 9, the problem of handling of particles including char from the gasification chamber to the combustion chamber can be solved, a heat loss due to a heat radiation is reduced, and the heat efficiency is improved.

According to the invention defined in claim 11, there is provided a combustible gas reforming apparatus according to claim 8, wherein the gasification apparatus comprises a gasification chamber, a combustion chamber, and a dust collecting and catalyst reaction chamber each having a fluidized bed, the gasification chamber being constructed to gasify the combustibles to produce a generated gas, the combustion chamber being constructed to combust char (unburned carbon) produced by gasifying the combustibles, and the dust collecting and catalyst reaction chamber being constructed to reform the generated gas from the gasification chamber; and wherein a catalyst regenerating apparatus is further provided, the catalyst degraded by reforming the generated gas in the dust collecting and catalyst reaction chamber is delivered to the catalyst regenerating apparatus, a combustion exhaust gas from the combustion chamber is delivered to the catalyst regenerating apparatus to heat and regenerate the catalyst, and the heated and regenerated catalyst is returned to the dust collecting and catalyst reaction chamber.

As described above, since the gasification apparatus comprises a gasification chamber, a combustion chamber, and a dust collecting and catalyst reaction chamber each having a fluidized bed, in addition to the effect of the invention of claim 10, the problem of handling of particles including char from the dust collecting and catalyst reaction chamber to the combustion chamber can be solved, and the heat efficiency is improved. Because the dust collecting and catalyst reaction chamber is integrally combined with the gasification apparatus, the initial cost of the apparatus is lowered.

According to the invention defined in claim 12, there is provided a combustible gas reforming apparatus according to claim 8, wherein the gasification apparatus comprises a fluidized-bed furnace having a gasification chamber, a combustion chamber, and a dust collecting and catalyst reaction chamber, the gasification chamber being constructed to gasify the combustibles to produce a generated gas, the combustion chamber being constructed to combust char (unburned carbon) produced by gasifying the combustibles, and the dust collecting and catalyst reaction chamber being constructed to reform the generated gas from the gasification chamber; and wherein the catalyst degraded by reforming the generated gas in the dust collecting and catalyst reaction chamber is delivered to the combustion chamber, heated and regenerated in the combustion chamber, and then the regenerated catalyst is returned to the dust collecting and catalyst reaction chamber.

As described above, since the catalyst degraded by reforming the generated gas in the dust collecting and catalyst reaction chamber is delivered to the combustion chamber, heated and regenerated in the combustion chamber, and then the regenerated catalyst is returned to the dust collecting and catalyst reaction chamber, in addition to the effect of the invention of claim 11, a catalyst regenerating apparatus can be eliminated. Therefore, the heat efficiency is improved and the initial cost of the apparatus is lowered.

According to the invention defined in claim 13, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; a catalytic reaction apparatus comprising the gas reforming apparatus and the catalyst regenerating apparatus, and a char combustion apparatus for combusting char (unburned carbon) produced by gasifying the combustibles in the gasification apparatus are provided; wherein the catalytic reaction apparatus is constructed to integrate a gas reforming chamber for reforming the generated gas using catalyst particles and a catalyst regeneration chamber for regenerating the catalyst, the catalyst regeneration chamber being constructed to heat and regenerate the catalyst degraded by reforming the generated gas in the gas reforming chamber, and return the regenerated catalyst to the gas reforming chamber; and wherein the generated gas from the gasification apparatus is delivered to the gas reforming chamber and reformed to produce a product gas, and a combustion exhaust gas from the char combustion apparatus is delivered to the catalyst regenerating apparatus to heat and regenerate the catalyst with the heat of the combustion exhaust gas.

As described above, since the gas reforming apparatus and the catalyst regenerating apparatus comprise a catalytic reaction apparatus which comprises an integral combination of a gas reforming chamber for reforming the generated gas with catalyst particles and a catalyst regeneration chamber for regenerating the catalyst, the generated gas can efficiently be reformed by fluidization of catalyst particles, and catalyst particles degraded by reforming the generated gas can efficiently be heated and regenerated. A heat loss due to a heat radiation is reduced, and the heat efficiency is improved. In addition, the initial cost of the apparatus is lowered. Therefore, the overall amount of consumed energy is reduced, the running cost is low, and an LCA evaluation is high.

According to the invention defined in claim 14, there is provided a combustible gas reforming apparatus according to claim 13, wherein the gasification apparatus comprises a gasification chamber and a combustion chamber each having a fluidized bed, the gasification chamber being constructed to gasify the combustibles to produce a generated gas and the combustion chamber being constructed to combust char (unburned carbon) produced by gasifying the combustibles; and wherein the generated gas produced in the gasification chamber is delivered to the gas reforming chamber and reformed in the gas reforming chamber, and a combustion exhaust gas from the combustion chamber is delivered to the catalyst regeneration chamber to heat and regenerate the catalyst with the heat of the combustion exhaust gas.

As described above, because the gasification apparatus comprises a gasification chamber and a combustion chamber each having a fluidized bed, in addition to the effect of the invention of claim 13, the problem of handling of particles including char from the gasification chamber to the combustion chamber can be solved, and the heat efficiency is improved.

According to the invention defined in claim 15, there is provided a combustible gas reforming apparatus comprising: a gasification apparatus for gasifying combustibles; a gas reforming apparatus for reforming a generated gas produced in the gasification apparatus using a catalyst to produce a product gas; and a catalyst regenerating apparatus for regenerating the catalyst degraded in the gas reforming apparatus; wherein the gasification apparatus comprises a gasification chamber and a combustion chamber each having a fluidized bed, the gasification chamber being constructed to gasify the combustibles to produce a generated gas and the combustion chamber being constructed to combust char (unburned carbon) produced by gasifying the combustibles; wherein the gas reforming apparatus and the catalyst regenerating apparatus have a gas reforming chamber and a catalyst regeneration chamber each having a fluidized bed which uses catalyst particles as at least part of a bed material, the catalyst regeneration chamber being constructed to heat and regenerate the catalyst degraded by gas reforming in the gas reforming chamber, and return the regenerated catalyst to the gas reforming chamber; wherein the gasification chamber, the combustion chamber, the gas reforming chamber, and the catalyst regeneration chamber are integrated into a single furnace, the generated gas from the gasification apparatus is delivered to the gas reforming chamber and reformed to produce a product gas in the gas reforming chamber, and a combustion exhaust gas from the combustion chamber is delivered to the catalyst regeneration chamber to heat and regenerate the catalyst with the heat of the combustion exhaust gas.

As described above, because the gasification chamber, the combustion chamber, the gas reforming chamber, and the catalyst regeneration chamber are combined into a single furnace, in addition to the effect of the invention of claim 14, the heat efficiency is further improved. Further, the initial cost of the apparatus is further lowered.

According to the invention defined in claim 16, there is provided a combustible gas reforming method according to claim 1 or 3, wherein the catalyst regenerating apparatus is supplied with a gas containing one or more of oxygen, steam, and hydrogen as a regenerating gas, and heat of reaction produced when the catalyst is regenerated is used together with process waste heat to heat and regenerate the catalyst particles.

According to the invention defined in claim 17, there is provided a combustible gas reforming apparatus according to any one of claims 2, 4, and 5 through 15, wherein the catalyst regenerating apparatus is supplied with a gas containing one or more of oxygen, steam, and hydrogen as a regenerating gas, and heat of reaction produced when the catalyst is regenerated is used together with process waste heat to heat and regenerate the catalyst particles.

According to the inventions defined in claims 16 and 17, a gas containing one or more of oxygen, steam, and hydrogen is supplied as a regenerating gas for regenerating the catalyst, and heat of reaction generated when the catalyst is regenerated and process waste heat are used to heat and regenerate catalyst particles. Since a shortage of the process waste heat can be supplemented with the heat of reaction, the yield of the generated gas can further be improved.

According to the invention defined in claim 18, there is provided a combustible gas reforming apparatus according to any one of claims 2, 4, and 5 through 17, wherein the gasification apparatus is charged with an absorbent for absorbing chlorine compounds or sulfur compounds when the raw material is gasified.

As described above, since the gasification apparatus is charged with an absorbent for absorbing chlorine compounds or sulfur compounds, the chlorine compounds and the sulfur compounds can be reduced, and harm to the catalyst is reduced. Since the service life of the catalyst is increased, the running cost of the apparatus is lowered.

**Brief Description of Drawings**

FIG. 1 is a view showing a system construction of an apparatus for carrying out a conventional combustible gasification method which uses a catalyst;

FIG. 2 is a view showing an example of a system construction of an apparatus for carrying out a combustible gas reforming method according to the present invention;

FIG. 3 is a view showing an example of a system construction of an apparatus for carrying out a combustible gas reforming method according to the present invention;

FIG. 4 is a view showing an example of a system construction of an apparatus for carrying out a combustible gas reforming method according to the present invention;

FIG. 5 is a view showing an example of a system construction of an apparatus for carrying out a combustible gas reforming method according to the present invention;

FIG. 6 is a view showing an example of a system construction of an apparatus for carrying out a combustible gas reforming method according to the present invention;

FIG. 7 is a view showing an example of a system construction of an apparatus for carrying out a combustible gas reforming method according to the present invention;

FIG. 8 is a view showing an example of a system construction of an apparatus for carrying out a combustible gas reforming method according to the present invention;

FIG. 9 is a view showing an example of a system construction of an apparatus for carrying out a combustible gas reforming method according to the present invention;

FIG. 10 is a view showing an example of a system construction of an apparatus for carrying out a combustible gas reforming method according to the present invention;

FIG. 11 is a view showing an example of a system construction of an apparatus for carrying out a combustible gas reforming method according to the present invention;

FIG. 12 is a view showing an example of a system construction of an apparatus for carrying out a combustible gas reforming method according to the present invention;

FIG. 13 is a view showing an example of a system construction of an apparatus for carrying out a combustible gas reforming method according to the present invention;

FIG. 14 is a view showing an example of a system construction of an apparatus for carrying out a combustible gas reforming method according to the present invention;

FIG. 15 is a view showing an example of a system construction of an apparatus for carrying out a combustible gas reforming method according to the present invention;

FIG. 16 is a view showing an example of a system construction of an apparatus for carrying out a combustible gas reforming method according to the present invention;

FIG. 17 is a view showing an example of a system construction of an apparatus for carrying out a combustible gas reforming method according to the present invention;

FIG. 18 is a view showing an example of a construction of a dust collecting and catalytic reaction apparatus for use in an apparatus for carrying out a combustible gas reforming method according to the present invention;

FIG. 19 is a view showing an example of a construction of a dust collecting and catalytic reaction apparatus for use in an apparatus for carrying out a combustible gas reforming method according to the present invention;

FIG. 20 is a view showing an example of a construction of a dust collecting and catalytic reaction apparatus for use in an apparatus for carrying out a combustible gas reforming method according to the present invention;

FIG. 21 is a view showing an example of a construction of a dust collecting and catalytic reaction apparatus for use in an apparatus for carrying out a combustible gas reforming method according to the present invention;

FIG. 22 is a view showing an example of a construction of a dust collecting and catalytic reaction apparatus for use in an apparatus for carrying out a combustible gas reforming method according to the present invention;

FIG. 23 is a view showing an example of a system construction of an apparatus for carrying out a combustible gas reforming method according to the present invention;

FIG. 24 is a view showing an example of a system construction of an apparatus for carrying out a combustible gas reforming method according to the present invention;

FIG. 25 is a view showing an example of a system construction of an apparatus for carrying out a combustible gas reforming method according to the present invention;

FIG. 26 is a view showing an example of a system construction of an apparatus for carrying out a combustible gas reforming method according to the present invention;

FIG. 27 is a view showing an example of a system construction of an apparatus for carrying out a combustible gas reforming method according to the present invention;

FIG. 28 is a view showing an example of a system construction of an apparatus for carrying out a combustible gas reforming method according to the present invention;

FIG. 29 is a view showing a construction of a furnace section of the apparatus shown in FIG. 28;

FIG. 30 is a view showing an example of a system construction of an apparatus for carrying out a combustible gas reforming method according to the present invention;

FIG. 31 is a view showing a construction of a furnace section of the apparatus shown in FIG. 30;

FIG. 32 is a view showing an example of a system construction of an apparatus for carrying out a combustible gas reforming method according to the present invention;

FIG. 33 is a view showing an example of a system construction of an apparatus for carrying out a combustible gas reforming method according to the present invention;

FIG. 34 is a view showing an example of a system construction of an apparatus for carrying out a combustible gas reforming method according to the present invention;

FIG. 35 is a view showing an example of a construction of a catalyst regenerating and gas reforming apparatus according to the present invention;

FIG. 36 is a view showing an example of a construction of a catalyst regenerating and gas reforming apparatus according to the present invention;

FIG. 37 is a view showing an example of a construction of a catalyst regenerating and gas reforming apparatus according to the present invention;

FIG. 38 is a view showing an example of a construction of a catalyst regenerating and gas reforming apparatus according to the present invention;

FIG. 39 is a view showing an example of a construction of a catalyst regenerating and gas reforming apparatus according to the present invention;

FIG. 40 is a view showing an example of a construction of a catalyst regenerating and gas reforming apparatus according to the present invention;

FIG. 41 is a view showing an example of a construction of a catalyst regenerating and gas reforming apparatus according to the present invention;

FIG. 42 is a view showing an example of a construction of a catalyst regenerating and gas reforming apparatus according to the present invention;

FIG. 43 is a view showing an example of a construction of a catalyst regenerating and gas reforming apparatus according to the present invention;

FIG. 44 is a view showing an example of a construction of a catalyst regenerating and gas reforming apparatus according to the present invention;

FIG. 45 is a view showing an example of a construction of a catalyst regenerating and gas reforming apparatus according to the present invention;

FIG. 46 is a view showing an example of a construction of a catalyst regenerating and gas reforming apparatus according to the present invention;

FIG. 47 is a view showing an example of a construction of a catalyst regenerating and gas reforming apparatus according to the present invention;

FIG. 48 is a view showing an example of a construction of a catalyst regenerating and gas reforming apparatus according to the present invention;

FIG. 49 is a view showing an example of a construction of a catalyst regenerating and gas reforming apparatus according to the present invention;

FIG. 50 is a view showing an example of a construction of a catalyst regenerating and gas reforming apparatus according to the present invention;

FIG. 51 is a view showing an example of a construction of a catalyst regenerating and gas reforming apparatus according to the present invention;

FIG. 52 is a view showing an example of a construction of a catalyst regenerating and gas reforming apparatus according to the present invention;

FIG. 53 is a view showing an example of a construction of a catalyst regenerating and gas reforming apparatus according to the present invention;

FIG. 54 is a view showing an example of a construction of a catalyst regenerating and gas reforming apparatus according to the present invention;

FIG. 55 is a view showing an example of a construction of a catalyst regenerating and gas reforming apparatus according to the present invention;

FIG. 56 is a view showing an example of a construction of a catalyst regenerating and gas reforming apparatus according to the present invention;

FIG. 57 is a view showing an example of a construction of a catalyst regenerating and gas reforming apparatus according to the present invention;

FIG. 58 is a view showing an example of a construction of a catalyst regenerating and gas reforming apparatus according to the present invention;

FIG. 59 is a view showing an example of a construction of a catalyst regenerating and gas reforming apparatus according to the present invention;

FIG. 60 is a view showing an example of a construction of a catalyst regenerating and gas reforming apparatus according to the present invention;

FIG. 61 is a view showing an example of a construction of a catalyst regenerating and gas reforming apparatus according to the present invention;

FIGS. 62A and 62B are views showing an example of a construction of a catalyst regenerating and gas reforming apparatus according to the present invention;

FIGS. 63A through 63C are views showing an example of a construction of a catalyst regenerating and gas reforming apparatus according to the present invention;

FIG. 64 is a view showing an example of a construction of a gasification apparatus according to the present invention;

FIG. 65 is a view showing an example of a construction of a gasification apparatus according to the present invention;

FIG. 66 is a view showing an example of a construction of a gasification apparatus according to the present invention;

FIG. 67 is a view showing an example of a construction of a gasification apparatus according to the present invention;

FIG. 68 is a view showing an example of a construction of a cracking apparatus for use in a gasification apparatus according to the present invention;

FIG. 69 is a view showing an example of a construction of a gasification apparatus according to the present invention; and

FIG. 70 is a view showing an example of a construction of a gasification apparatus according to the present invention.

## Best Mode for Carrying Out the Invention

Embodiments of the present invention will be described below. Reactions (tar decomposition) in a combustible gas reforming apparatus include the following reactions by representing tar component with $C_nH_m$:

① Cracking:

$$CnHmOk + catalyst \rightarrow CpHq + H_2 + C \text{ (deposited carbon)} + CO$$

② Steam reforming:

$$CnHmOk + H_2O + catalyst \rightarrow CO + H_2$$

③ Carbon dioxide reforming:

$$CnHmOk + CO_2 + catalyst \rightarrow CO + H_2$$

In the cracking (pyrolysis reaction), pyrolysis occurs on the catalyst, decomposing the tar into low molecular hydrocarbon and carbon monoxide. At the same time, carbon is deposited on the surface of the catalyst. The deposited carbon is one of the causes of deterioration of the catalyst (If the carbon covers the catalyst, then the catalyst is inactivated. The carbon deposited on the catalyst needs to be combusted away in a high-temperature oxidizing atmosphere with a regenerating apparatus). The above reaction is referred to as "cracking". Industrially, this reaction is equivalent to a reaction for lightening macromolecular hydrocarbons such as normal-pressure residual oil, similar to a tar, in a petroleum refining process. Catalysts for promoting the cracking, such as silica alumina, zeolite, or activated clay are known and in general use.

In the steam reforming and the carbon dioxide reforming, the tar reacts with steam ($H_2O$) and carbon dioxide ($CO_2$), and is reformed into CO and $H_2$. The reactions between hydrocarbon and $H_2O$ and $CO_2$ in the presence of a catalyst are equivalent to a process of manufacturing hydrogen from a natural gas and, in recent years, a process of manufacturing a synthesis gas from macromolecular hydrocarbons such as naphtha, kerosene, etc. Catalysts for promoting the reforming, such as an Ni-based catalyst, etc. are known and in general use.

The above reactions of the cracking, the steam reforming, and the carbon dioxide reforming can be promoted at a low temperature by using catalysts. These catalysts contribute to any of the above reactions of the cracking, the steam reforming, and the carbon dioxide reforming. For the cracking reaction, however, typical metals (Al, Si, Ca, Mg) and their oxides, or their mixtures should preferably be used as catalysts. Specifically, these catalysts include zeolite (hydrated aluminosilicate), silica alumina ($SiO_2$-$Al_2O_3$), activated alumina ($Al_2O_3$), activated clay ($SiO_2$-$Al_2O_3$), dolomite (CaO, MgO), limestone ($CaCO_3$), calcium oxide (CaO), etc. Among these materials, the materials which have pores that have diameters of about 10 to 150 angstroms and allow the tar to be diffused in catalyst particles are preferred, and the materials having an excellent ability to adsorb macromolecular hydrocarbons are preferred.

In order to promote the reactions of the steam reforming and the carbon dioxide reforming, it is preferable to use catalysts (e.g., Ni/$Al_2O_3$, Ni/CaO·$Al_2O_3$, Ru/MgO·$Al_2O_3$) which comprise at least one of metals (Rh, Ru, Ni, Pd, Pt, Co, Mo, Ir, Re, Fe, Na, K) or oxides of these metals diffused in and carried on the surface of the above catalysts used as a carrier.

Of the above catalysts, some are highly active with respect to the reaction of the cracking and some are highly active with respect to the reactions of the steam reforming and the carbon dioxide reforming. By selecting those catalysts suitably, it is possible not only to decompose the tar, but also to change the composition of the reformed gas to adjust the composition of the product gas after gas reforming. If a catalyst that is highly active with respect to the reaction of the cracking is used, then a gas containing a large amount of hydrocarbon such as methane ($CH_4$) or ethylene ($C_2H_2$) can be produced. In the reactions of the steam reforming and the carbon dioxide reforming, a mixed gas of $H_2$ and CO is produced. In the reaction of the steam reforming, an $H_2$-rich gas is produced. In the reaction of the carbon dioxide reforming, a CO-rich gas is produced. Therefore, by changing the partial pressures of the reforming gas, it is possible to change the ratio of $H_2$/CO in the product gas.

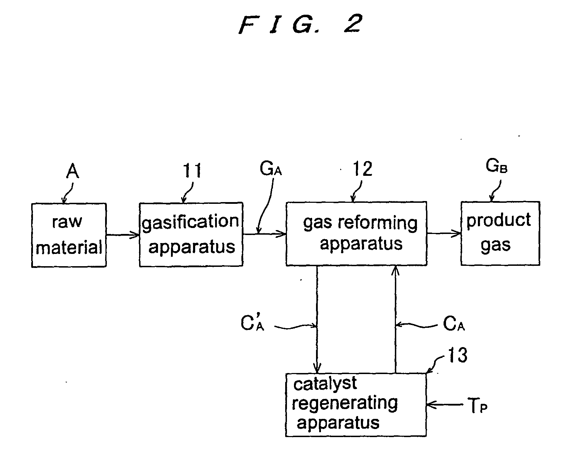

FIG. 2 is a view showing an example of a system construction of an apparatus for carrying out a combustible gas reforming method according to the present invention. In FIG. 2, reference numeral 11 represents a gasification apparatus. A raw material A such as coal, biomass, municipal wastes, industrial wastes, RDF, waste plastics, etc. is charged into the gasification apparatus 11, and the raw material A is gasified into a generated gas $G_A$. In a gas reforming apparatus 12 which uses a catalyst (catalyst particles) $C_A$, a tar in the generated gas $G_A$ is decomposed to reform the generated gas $G_A$, producing a product gas $G_B$. The catalyst $C_A$ which has contributed to the reformation of the generated gas $G_A$ in the gas reforming apparatus 12 is turned into a degraded catalyst $C_A'$, which is delivered to a catalyst regenerating apparatus 13. In the catalyst regenerating apparatus 13, the degraded catalyst $C_A'$ is regenerated by process waste heat $T_P$ generated in the gasification process. The regenerated catalyst $C_A$ is transferred again to the gas reforming apparatus 12. A temperature optimum for reforming the gas with the catalyst $C_A$ is in the range of 800°C to 1100°C (preferably 900°C).

Since the process waste heat $T_P$ is used to regenerate the degraded catalyst $C_A'$ in the catalyst regenerating apparatus 13, the consumption of external energy is suppressed, and the effective heat utilization rate is improved. A reduction in the running cost due to a reduction in the consumption of external energy is achieved, and the evaluation according to LCA is improved.

The above advantages are obtained when the process waste heat $T_P$ is used to regenerate the catalyst in the catalyst regenerating apparatus 13. The heat required to regenerate the catalyst $C_A$ is often large in quantity and high at temperature. Most of the heat generated in the process is used to recover steam and preheat the gas to be charged, and hence excess waste heat is low-temperature (low-temperature-level) waste heat which is difficult to be used. If part of the high-temperature heat is used to regenerate the catalyst, then the amount of heat required to recover steam and preheat the gas to be charged becomes insufficient, resulting in a need for an auxiliary fuel. Therefore, the consumption of external energy may be increased. A temperature optimum for regenerating the catalyst $C_A$ is in the range from 950°C to 1100°C (preferably from 950°C to 1000°C).

For example, the catalyst is generally regenerated at a temperature considerably higher than the reaction temperature for acting as the catalyst. In order to make the gas reformed by the catalyst $C_A$ higher than the catalyst reaction temperature, part of the product gas $G_B$ has to be combusted or an auxiliary fuel has to be used. If part of the product gas $G_B$ is combusted, then the advantages of the catalyst utilization method that a low-temperature gas reforming can be performed, in comparison with a gas reforming involving a high-temperature process, are lost.

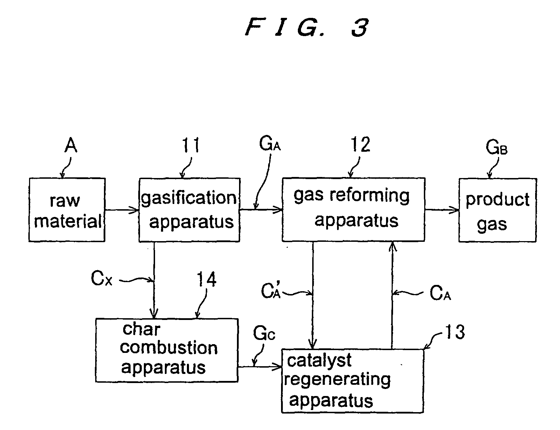

FIG. 3 is a view showing an example of a system construction of an apparatus for carrying out a combustible gas reforming method according to the present invention. Those parts shown in FIG. 3 which are identical or correspond to those shown in FIG. 2 are denoted by identical reference characters. Those parts shown in other figures which are identical or correspond to those shown in FIG. 2 are also denoted by identical reference characters. The apparatus shown in FIG. 3 is constructed to solve the problems which are caused by using the process waste heat $T_P$ as the catalyst regenerating heat. The apparatus includes a char combustion apparatus 14 for combusting a char (unburned carbon) $C_X$ which is produced when the raw material A is gasified in the gasification apparatus 11 of the apparatus shown in FIG. 2. The char combustion apparatus 14 supplies the heat of a combustion exhaust gas $G_C$ which is generated by combustion of the char, as the catalyst regenerating heat, to the catalyst regenerating apparatus 13.

When the catalyst $C_A$ in the gas reforming apparatus 12 reforms the generated gas $G_A$ (tar decomposition) from the gasification apparatus 11, the catalytic function is degraded due to the deposition of carbonous material, etc. The catalyst regenerating apparatus 13 heats and regenerates the catalyst $C_A'$ having degraded catalytic function by the combustion exhaust gas $G_C$ supplied from the char combustion apparatus 14, and charges the regenerated catalyst $C_A$ again into the gas reforming apparatus 12.

When the raw material A such as coal or ligneous biomass containing a large amount of fixed carbon is gasified in the gasification apparatus 11, a char $C_X$ containing a large amount of fixed carbon is generated. Since the char $C_X$ has its combustion rate extremely lower than volatile gas, the char $C_X$ is accumulated in the gasification apparatus 11. The char $C_X$ accumulated in the gasification apparatus 11 often poses operational problems. For example, if the gasification apparatus 11 comprises a fluidized-bed furnace, then the char $C_X$ is accumulated on the surface of the fluidized bed because the specific gravity of the char $C_X$ is lower than the specific gravity of the bed material. Even when the bed material is withdrawn from the bottom of the furnace for discharging incombustibles, the char $C_X$ is not withdrawn, but only the bed material is withdrawn and a char bed is formed in the furnace, thus tending to shut off the gasification apparatus 11.

Since the char combustion rate and the gas combustion rate are related to each other by char combustion rate $\leqq$ the gas combustion rate, the gas combustion normally consumes oxygen earlier than the char combustion. Therefore, even if oxygen is supplied to increase the combustion of the char $C_X$ in order to suppress the accumulation of char $C_X$, the combustible gas is combusted (the energy of the combustible gas is converted into heat more than necessary). Since the temperature in the furnace is increased by such a degree corresponding to the supplied oxygen, the char combustion efficiency is improved due to the increased temperature, but the increased temperature does not have a large effect on the char combustion rate (but larger effect on increase of gas reactivity).

By providing the char combustion apparatus 14 separately from the gasification apparatus 11 for removing the char from the gasification apparatus 11 and combusting the removed char, the following advantages can be obtained:

① The char can be combusted under conditions (combustion temperature, residence time, etc.) suitable for the char combustion independently of the gasification apparatus 11.
② The gas to be turned into the product gas is not combusted by oxygen which is charged for the purpose of combusting the char.

③ The combustible gas is not diluted by the char combustion gas (a high-calorie gas can be extracted).

④ The combustible gas which has great value as the product gas and the combustion gas which has little value can be used independently of each other.

⑤ In the case where the raw material A contains a large amount of fixed carbon, like coal or ligneous biomass, if the char $C_X$ which is discharged in a large quantity is withdrawn and discarded, then the energy utilization ratio of the fuel is lower than that in complete combustion. When the char $C_X$ is combusted by the char combustion apparatus 14 and its heat is used, the energy efficiency of the raw material A is improved.

If the raw material A such as coal or biomass, which contains a large amount of fixed carbon, is to be gasified, the above problem of the char produced in the gasification apparatus 11 can be solved by combusting the char $C_X$ withdrawn from the gasification apparatus 11 with the char combustion apparatus 14, supplying the combustion exhaust gas $G_C$ to the catalyst regenerating apparatus 13, and using the heat of the combustion exhaust gas $G_C$ as the heat to regenerate the catalyst, thereby making it possible to regenerate the degraded catalyst $C_A'$ without combusting part of the product gas $G_B$ or using external energy.

It is difficult to gasify all the char $C_X$ into the product gas $G_B$ (because the reaction is complex or the gasification rate is low to cause imbalance between the char supply rate and the gas generation rate, though details are not known). Therefore, a conversion ratio of carbon (how much carbon in the fuel can be converted into a gas) is frequently used as an evaluation standard for the gasification of the raw material A which has a large fixed carbon content. However, the energy of fixed carbon which cannot easily be gasified or is difficult to be gasified can be used by combusting the fixed carbon in the char combustion apparatus 14 even though the fixed carbon is not gasified (if the fixed carbon is not combusted, such condition directly results in an energy loss.

According to the conventional idea of cogeneration based on gasification, the combustion exhaust gas $G_C$ produced by combusting the char $C_X$ can also be used by recovering its sensible heat with steam and using the recovered sensible heat for electric power generation. However, if a gasified gas is produced at a relatively low temperature with the catalyst $C_A$, then since high-temperature sensible heat is obtained in a limited portion, heat should be used for regenerating the catalyst (if the gas is heated with part of the recovered electric energy, then the consumption of external energy is suppressed, but the efficiency is lowered by a conversion loss caused by conversion from heat to electric energy).

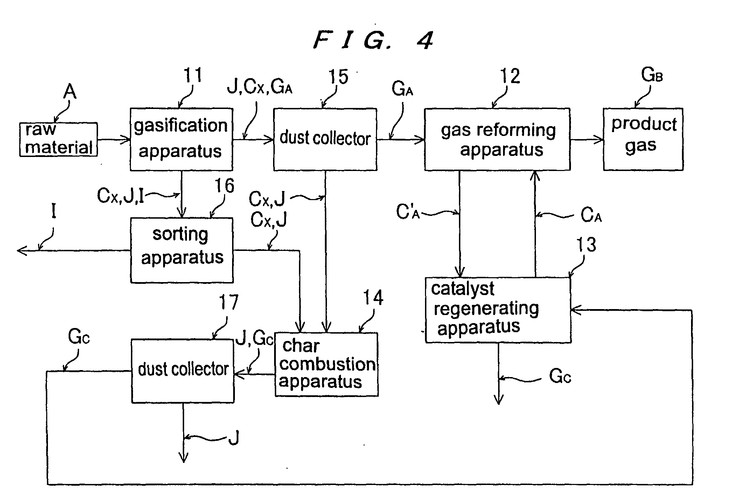

FIG. 4 is a view showing an example of a system construction of an apparatus for carrying out a combustible gas reforming method according to the present invention. The apparatus shown in FIG. 4 differs from the apparatus shown in FIG. 3 in that the apparatus includes a dust collector 15 for removing dust contained in the generated gas $G_A$ supplied from the gasification apparatus 11, a sorting apparatus 16 for removing incombustibles I from a mixture of incombustibles I, ash J, and char $C_X$ discharged from the gasification apparatus 11, and a dust collector 17 for removing ash J from the combustion exhaust gas $G_C$ containing ash J and discharged from the char combustion apparatus 14.

Since the apparatus for reforming a combustible gas is constructed as described above, the ash J and the char $C_X$ are removed from the generated gas $G_A$, containing the ash J and the char $C_X$, discharged from the gasification apparatus 11 by the dust collector 15, and then the generated gas $G_A$ is supplied to the gas reforming apparatus 12 and the ash J and the char $C_X$ which have been removed is supplied to the char combustion apparatus 14. The sorting apparatus 16 selectively removes incombustibles I from the mixture of the incombustibles I, the ash J, and the char $C_X$ discharged from the gasification apparatus 11, and supplies the ash J and the char $C_X$ to the char combustion apparatus 14. The dust collector 17 removes ash J from the combustion exhaust gas $G_C$ discharged from the char combustion apparatus 14, and supplies the combustion exhaust gas $G_C$ to the catalyst regenerating apparatus 13, where the sensible heat of the combustion exhaust gas $G_C$ is used as the heat to regenerate the catalyst.

In the above apparatus for reforming a combustible gas, the char $C_X$ discharged from the gasification apparatus 11 having a reducing atmosphere is combusted when the char $C_X$ is withdrawn with retaining a high temperature and brought into contact with oxygen. Therefore, in order to withdraw the char $C_X$ from the gasification apparatus 11, the following measures should be taken:

a) The char $C_X$ should be withdrawn with retaining a high temperature, while keeping a reducing atmosphere (e. g., nitrogen filling or steam purging).

b) The char $C_X$ should be withdrawn while being cooled (steam purging is needed to prevent the trouble of tar adhesion).

However, in the case of a), there is the possibility that oxygen leaks in from the exterior for various reasons, i.e., a shortage of the filled nitrogen or purge gas, a sealing failure in the feed path, and a pressure imbalance in the gasification apparatus (furnace). Even in a leakage of a small amount of oxygen, an abrupt temperature increase is caused by local combustion, resulting in an adhesion trouble and a blocking trouble caused by clinker.

Further, in the case of b), safety is ensured relatively with respect to the combustion of the char $C_X$. However, the tar which is present in the gasification furnace may possibly be accompanied by the char $C_X$, and may possibly be deposited and solidified, thus possibly causing a blocking of the path. Therefore, the path needs to be purged with steam to discharge the tar. The combustion of the discharged char to utilize its heat is not preferable from the standpoint of efficiency because the char has to be reheated after it is cooled.

Further, the flow rate of the char $C_X$ that is transferred is also important. The char $C_X$ has to be discharged such that it stays in a certain amount in the furnace. If the material to be gasified produces a large amount of char $C_X$, then the amount of char $C_X$ that is transferred is very large, and the feeder to be used is large in scale. The amount of the char that is transferred is expressed as follows: The transferred amount of the char = generated amount of the char ÷ the concentration of the char in the furnace. If the char $C_X$ in the gasification apparatus (furnace) 11 is of the same concentration, then the generated amount of the char and the transferred amount of the char are proportional to each other.

If the gasification apparatus 1 comprises a fluidized-bed furnace, then it is difficult to selectively discharge the char $C_X$ (a certain amount of char can be selectively discharged based on the tendency of the char to stay on the surface layer). In most cases, the char is discharged together with the bed material. Therefore, it is necessary to provide an apparatus for sorting out the discharged bed material and the discharged char $C_X$ from each other (by way of centrifugation, sieving, different specific gravities), or to employ a fluidized-bed furnace for the char combustion apparatus 14 and circulate the bed material between the gasification apparatus 1 and the char combustion apparatus 14.

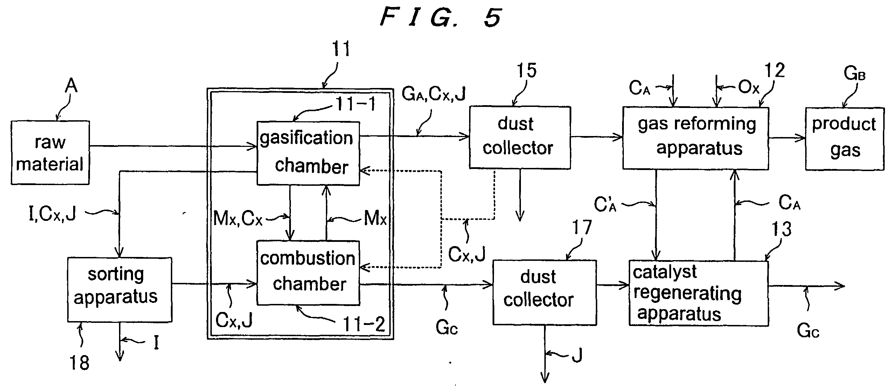

FIG. 5 is a view showing an example of a system construction of an apparatus for carrying out a combustible gas reforming method according to the present invention. The apparatus shown in FIG. 5 is constructed to solve the above problems of the apparatus shown in FIG. 4. The apparatus shown in FIG. 5 differs from the apparatus shown in FIG. 4 in that the gasification apparatus 11 comprises an integrated-type furnace including a gasification chamber 11-1 having a fluidized bed and a combustion chamber 11-2 having a fluidized bed, and there is provided a sorting apparatus 18 for separating incombustibles I from a mixture of incombustibles I, char $C_X$, and ash J withdrawn from the gasification chamber 11-1 and supplying the char $C_X$ and the ash J to the combustion chamber 11-2.

Because the gasification apparatus 11 comprises the integrated-type furnace having the gasification chamber 11-1 and the combustion chamber 11-2, the gasification apparatus 11 has a function to gasify the raw material A and a function to combust the char. Since the char $C_X$ is combusted in the same apparatus in which it is produced, the apparatus shown in FIG. 5 is free of the trouble relating to the feeding of the char $C_X$.

The interior of the gasification apparatus 11 is divided into a compartment (gasification chamber) for gasifying the raw material A and a compartment (combustion chamber) for combusting the char $C_X$, so that the generated gas $G_A$ produced by gasifying the raw material A and the combustion exhaust gas $G_C$ produced by combusting the char $C_X$ can be taken out independently of each other. For example, the freeboard is divided by a partition plate to separate the compartments completely from each other. The compartments should preferably be isolated from each other not only in the freeboard but also in the furnace bottom to prevent oxygen supplied to the combustion chamber 11-2 for thereby combusting the char $C_X$ from leaking into the gasification chamber 11-1.

As described above, the interior of the gasification apparatus 11 is divided into the gasification chamber 11-1 and the combustion chamber 11-2, and the char $C_X$ is fed from the gasification chamber 11-1 to the combustion chamber 11-2 by a feeding medium, which should be a bed material $M_X$ in the fluidized bed. The char $C_X$ generated in the gasification chamber 11-1 is delivered together with the bed material $M_X$ into the combustion chamber 11-2, and the char $C_X$ is combusted in the combustion chamber 11-2. The bed material $M_X$ that is heated with the combustion heat of the char $C_X$ is returned again to the gasification chamber 11-1.

Since the bed material $M_X$ is returned from the combustion chamber 11-2 to the gasification chamber 11-1, part of the heat of the combustion chamber 11-2 is used as a heat source for pyrolysis in the gasification chamber 11-1. In this case, both the compartments in the furnace bottom where the bed material $M_X$ is present require a passage for moving the bed material. The presence of the bed material $M_X$ and the maintenance of an appropriate fluidizing velocity make it possible to prevent oxygen from leaking from the combustion chamber 11-2 into the gasification chamber 11-1 to a certain extent. In addition, it is desirable that a bed in which the bed material moves be disposed between the gasification chamber 11-1 and the combustion chamber 11-2, like an internal circulating fluidized-bed gasification furnace, or the bed material be returned to the furnace bottom of the gasification chamber 11-1 where the concentration of the raw material is low.

If the raw material A contains a large amount of incombustibles, then a discharge mechanism (incombustible discharge apparatus, sorting apparatus) is needed for removing incombustibles from the gasification chamber 11-1 as with the conventional gasification apparatus. In FIG. 5, the sorting apparatus 18 is provided for separating incombustibles I from a mixture of incombustibles I, char $C_X$, and ash J discharged from the gasification chamber 11-1 and supplying the char $C_X$ and the ash J to the combustion chamber 11-2. For handling the char $C_X$ that accompanies the incombustibles I discharged from the gasification chamber 11-1, care should be taken to isolate the char from oxygen and prevent fouling. However, the danger of the trouble is reduced because all the amount of the char corresponding to the amount of char to be generated is not discharged from the gasification chamber 11-1.

The generated gas $G_A$ containing the char $C_X$ and the ash J and discharged from the gasification chamber 11-1 is passed through the dust collector 15, which removes the char $C_X$ and the ash J. The removed char $C_X$ is returned to the combustion chamber 11-2 (for the purpose of combusting the char $C_X$) and to the gasification chamber 11-1 (for the purpose of gasifying the char $C_X$), if necessary (if a large amount of char $C_X$ is removed). The gas reforming apparatus 12 can be replenished with the catalyst (catalyst particles) $C_A$, and can be supplied with an oxidizing agent $O_X$ (e.g. steam + oxygen) under certain catalyst reaction conditions for achieving higher temperatures.

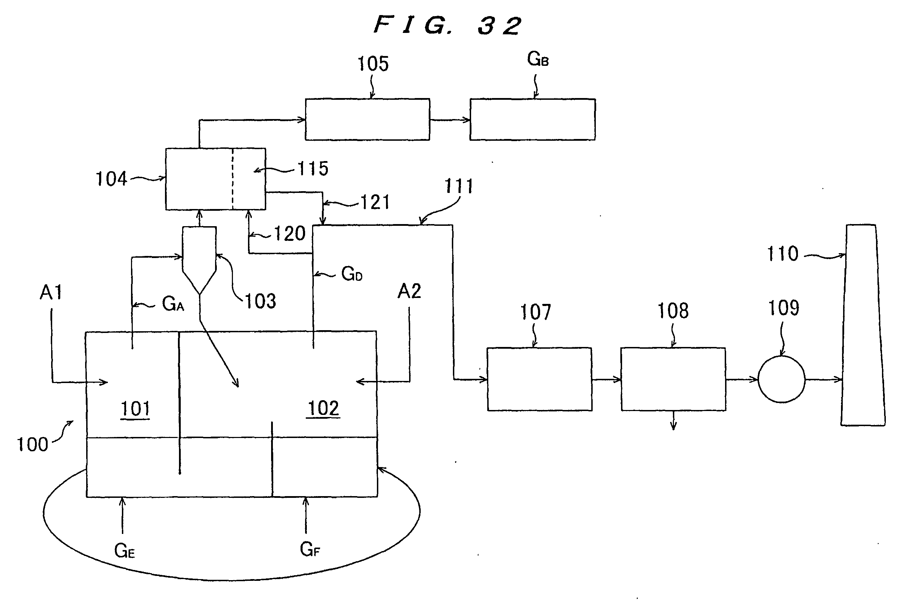

FIG. 32 is a view of a system construction of an apparatus for carrying out a combustible gas reforming method according to the present invention. The apparatus shown in FIG. 32 is another example of the apparatus shown in FIG. 5, and has a preferred construction for solving the problem which occurs if the char $C_X$ generated when the raw material A1 is pyrolyzed is in a small quantity.

The above problem can be solved by supplying a raw material A1 to a gasification chamber 101 and supplying a raw material A2 to a combustion chamber 102 for thereby making up for a shortage of the quantity of heat given to the bed material in the combustion chamber 102. Specifically, the quantity of heat given to the bed material in the combustion chamber 102 can effectively be used as a heat source for gasifying the raw material A1 in the gasification chamber 101.

In the present embodiment, the integrated-type gasification furnace 100 is constructed such that the gasification chamber 101 and the combustion chamber 102 are supplied with the raw material A1 and the raw material A2, respectively.

A burner may be installed in an upper portion of the combustion chamber 102 to combust a combustible gas introduced as the raw material A2. Alternatively, the combustion chamber 102 may be supplied with a combustible gas as the raw material A2.

In the present embodiment, a generated gas $G_A$ generated in the gasification chamber 101 is passed through a dust collector 103, a gas reforming apparatus 104, and a gas temperature reducing and cleaning apparatus 104, and then a product gas $G_B$ is produced. On the other hand, a combustion gas $G_D$ obtained from the combustion chamber 102 is passed through a waste heat recovery device 107 (e.g., a waste heat boiler), a dust collector 108, and an induced draft fan 109, and then the gas is discharged from a stack 110 into the atmosphere.

The dust collector 108 may comprise a bag filter or, in particular, an electrostatic precipitator if the concentrations of heavy metals and chlorine components contained in the raw materials A1, A2 are low. If the waste heat recovery device 107 comprises a boiler, then steam produced by the boiler may be used as a gas $G_E$ introduced into the gasification chamber 101.

Further, part of the combustion gas $G_D$ is introduced via a branch pipe 120 into the catalyst regenerating apparatus 115 to supply the quantity of heat which is necessary to regenerate the catalyst. The gas, from which the quantity of heat is removed, is returned from the catalyst regenerating apparatus 115 via a branch pipe 121 to a passage 111 of the combustion gas $G_D$.

The raw material A2 may be the same as the raw material A1 or may be an auxiliary fuel. If the raw materials A1, A2 contain a large amount of incombustibles, then there may be provided not only an incombustible discharge mechanism for discharging incombustibles from the gasification chamber 101, but also an incombustible discharge mechanism for discharging incombustibles from the combustion chamber 102. The incombustibles discharged from the gasification chamber 101 and the combustion chamber 102 may be sorted by a common mechanism or respective separate mechanisms.

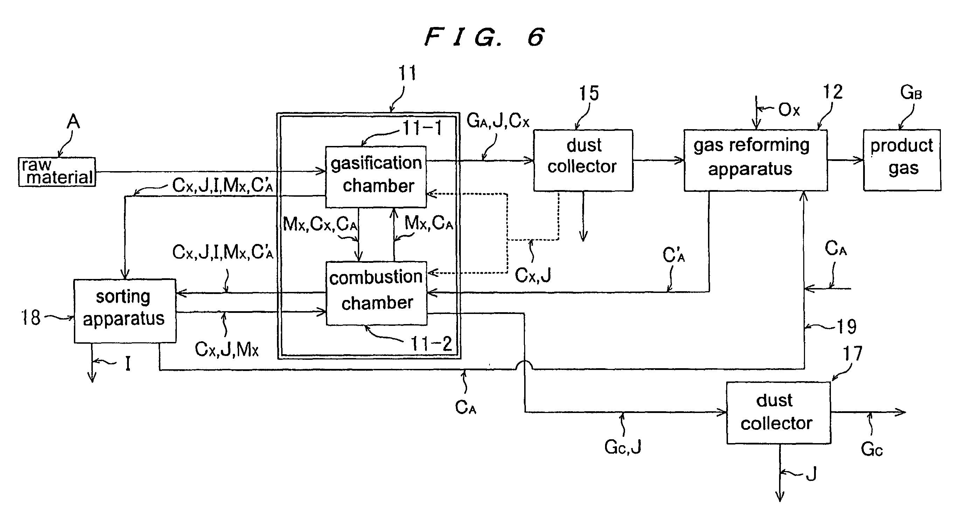

FIG. 6 is a view showing an example of a system construction of an apparatus for carrying out a combustible gas reforming method according to the present invention. The apparatus shown in FIG. 6 differs from the apparatus shown in FIG. 5 in that a bed material of the fluidized bed of the gasification apparatus 11 comprises a mixture of a bed material (sand) $M_X$ and a catalyst (catalyst particles) $C_A$; a mixture of char $C_X$, ash J, incombustibles I, a bed material $M_X$, and a catalyst $C_A'$ discharged from the gasification chamber 11-1 or the combustion chamber 11-2 of the gasification apparatus 11 is introduced into the sorting apparatus 18; the incombustibles I are removed by the sorting apparatus 18; the char $C_X$ and the ash J are returned to the combustion chamber 11-1; the catalyst $C_A$ is returned through a feed passage 19 to the gas reforming apparatus 12; and the catalyst $C_A'$ which has contributed to the gas reforming and has been degraded in the gas reforming apparatus 12 is returned to the combustion chamber 11-2.

Since the apparatus for carrying out the combustible gas reforming method is constructed as described above, the catalyst $C_A'$ which has been degraded can be heated and regenerated by heat, for example, the combustion heat of the char $C_X$ in the combustion chamber 11-2 of the gasification apparatus 11. Therefore, the catalyst regenerating apparatus 13 in the apparatus shown in FIG. 5 can be eliminated. The degraded catalyst $C_A'$ is charged directly into the combustion chamber 11-2 to combust and remove deposited carbon which is one of the causes of the degradation of the catalyst, and hence the catalyst is regenerated. The feed passage 19 may be replenished with the catalyst $C_A$. The mixture of the char $C_X$, the ash J, the incombustibles I, the bed material $M_X$, and the catalyst $C_A$ may be discharged from the gasification chamber 11-1 if the incombustibles I are present in a large amount, otherwise may be discharged from either the gasification chamber 11-1 or the combustion chamber 11-2.

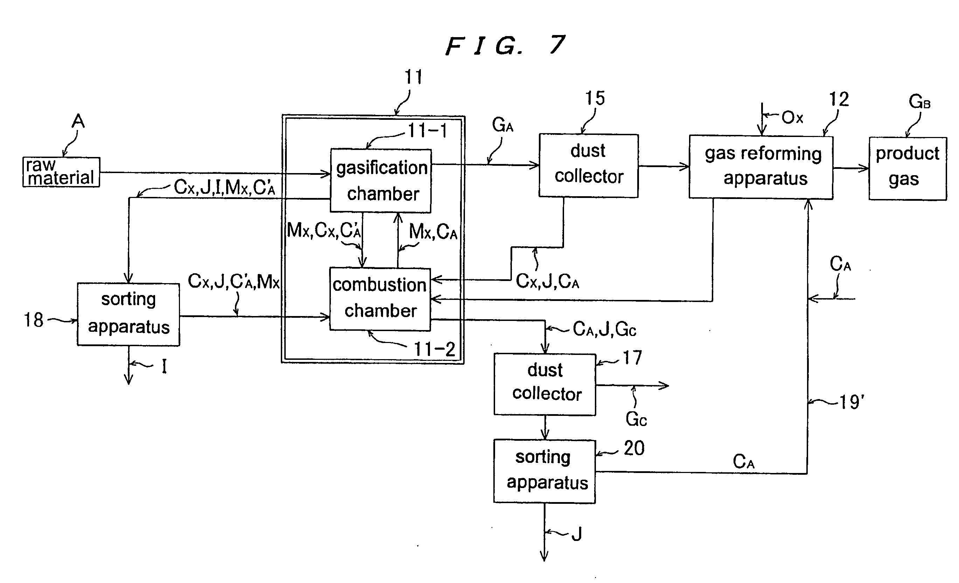

FIG. 7 is a view showing an example of a system construction of an apparatus for carrying out a combustible gas reforming method according to the present invention. The apparatus shown in FIG. 7 differs from the apparatus shown in FIG. 6 in that the combustion exhaust gas $G_C$ containing the regenerated catalyst $C_A$ and the ash J and discharged from the combustion chamber 11-2 of the gasification apparatus 11 is introduced into the dust collector 17, which removes the catalyst $C_A$ and the ash J from the combustion exhaust gas $G_C$; the removed catalyst $C_A$ and ash J are introduced into a sorting apparatus 20, which selectively removes the ash J; and the remaining catalyst $C_A$ is returned via a feed passage 19' to the gas reforming apparatus 12. The gas reforming apparatus 12 is replenished with the catalyst $C_A$ via the feed passage 19'.

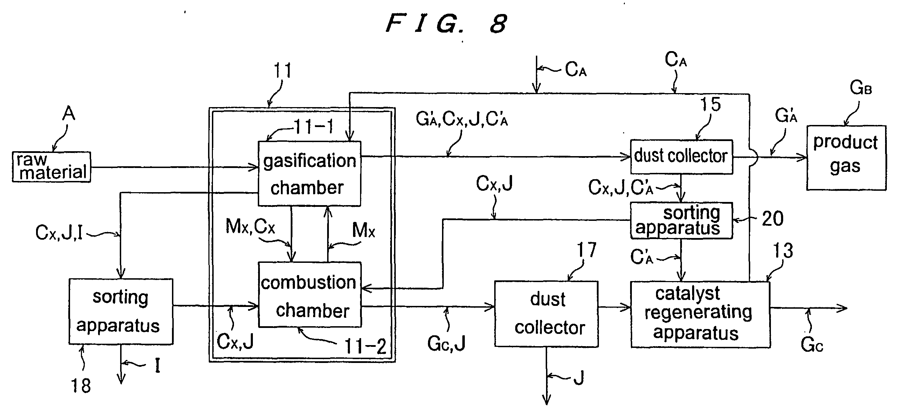

FIG. 8 is a view showing an example of a system construction of an apparatus for carrying out a combustible gas reforming method according to the present invention. The apparatus shown in FIG. 8 differs from the apparatus shown in FIG. 5 in that the catalyst $C_A$ regenerated by the catalyst regenerating apparatus 13 is introduced into the gasification chamber 11-1 of the gasification apparatus 11; the raw material A is gasified in the gasification chamber 11-1 and the generated gas $G_A$ is reformed (tar decomposition) in the gasification chamber 11-1; a mixture of reformed generated gas $G_A$', char $C_X$, ash J, and degraded catalyst $C_A$' which has contributed to the gas reforming is introduced into the dust collector 15, which removes the char $C_X$, the ash J, and the degraded catalyst $C_A$'; and the reformed generated gas $G_A$' is obtained as the product gas $G_B$.

The char $C_X$, the ash J, and the degraded catalyst $C_A$' which have been removed by the dust collector 15 are introduced into the sorting apparatus 20, which sorts the char $C_X$ and the ash J, and the sorted char $C_X$ and ash J are delivered to the combustion chamber 11-2, and the remaining degraded catalyst $C_A$' is delivered to the catalyst regenerating apparatus 13. The catalyst $C_A$ heated and regenerated by the catalyst regenerating apparatus 13 is fed to the gasification apparatus 11-1 as described above. A feed passage for feeding the catalyst $C_A$ to the gasification chamber 11-1 can be replenished with the catalyst $C_A$.

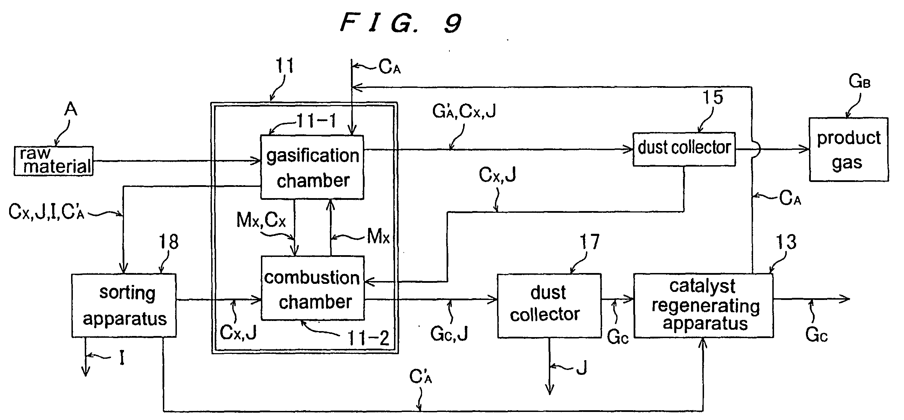

FIG. 9 is a view showing an example of a system construction of an apparatus for carrying out a combustible gas reforming method according to the present invention. The apparatus shown in FIG. 9 differs from the apparatus shown in FIG. 8 in that the char $C_X$ and the ash J removed from the reformed generated gas $G_A$' by the dust collector 15 are returned to the combustion chamber 11-2 of the gasification apparatus 11; and a mixture of the char $C_X$, the ash J, the incombustibles I, and the degraded catalyst $C_A$' discharged from the gasification chamber 11-1 of the gasification apparatus 11 is introduced into the sorting apparatus 18, which selectively discharges the incombustibles I; and the char $C_X$ and the ash J are returned to the combustion chamber 11-2, and the degraded catalyst $C_A$' is transferred to the catalyst regenerating apparatus 13. The gasification chamber 11-1 can be replenished with the catalyst $C_A$.

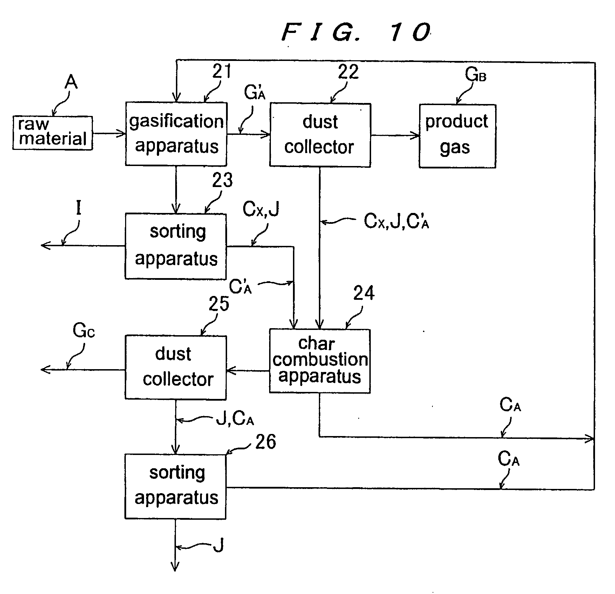

FIG. 10 is a view showing an example of a system construction of an apparatus for carrying out a combustible gas reforming method according to the present invention. The apparatus shown in FIG. 10 includes a gasification apparatus comprising a fluidized-bed furnace which employs catalyst particles as a bed material. Reference numeral 21 represents a gasification apparatus having a fluidized-bed gasification furnace which uses the catalyst (catalyst particles) $C_A$ as a bed material. The gasification apparatus 21 gasifies the raw material A and at the same time reforms the gas (tar decomposition). The reformed generated gas $G_A$' is passed through a dust collector 22, which removes the char $C_X$, the ash J, and the degraded catalyst (catalyst particles used as the bed material and degraded) $C_A$', producing the product gas $G_B$. The char $C_X$, the ash J, and the catalyst $C_A$' removed by the dust collector 22 are delivered to a char combustion apparatus 24, which combusts the char $C_X$.

The mixture of the incombustibles I, the char $C_X$, the ash J, and the catalyst $C_A$' removed from the gasification apparatus 21 is delivered to a sorting apparatus 23, which selectively removes and discharges the incombustibles I by way of sieving, magnetic separation, and separation based on different specific gravities, etc. The remaining char $C_X$, the ash J, and the catalyst $C_A$' are supplied to the char combustion apparatus 24. In the char combustion apparatus 24, the supplied char $C_X$ is combusted together with the char $C_X$ supplied from the dust collector 22. The degraded catalyst $C_A$' is heated and regenerated into the catalyst $C_A$ by the sensible heat produced upon combustion of the char. The catalyst $C_A$ is removed from the furnace bottom of the char combustion apparatus 24, and delivered again to the gasification apparatus 21 for use as the bed material and the catalyst again.

If the catalyst particles from the char combustion apparatus 24 are broken into smaller particles or particles of the catalyst $C_A$ are originally small, then since the catalyst particles tend to be scattered in a large quantity with the combustion exhaust gas $G_C$, the catalyst particles are delivered to the dust collector 25, which traps the catalyst $C_A$ and the ash J and thus removes them from the combustion exhaust gas $G_C$. The trapped and removed catalyst $C_A$ and the ash J are fed to a sorting apparatus 26, which separates the catalyst $C_A$ and ash J from each other. The ash J is selectively removed and discharged from the sorting apparatus 26, and the catalyst $C_A$ is delivered to the gasification apparatus 21. In the gasification apparatus 21, the catalyst $C_A$ is used as the bed material and the catalyst as with the catalyst $C_A$ supplied from the char combustion apparatus 24. The sorting apparatus 26 sorts out the catalyst $C_A$ and the ash J from each other by way of sorting based on different specific gravities or centrifugation, depending on the state of the particles of the catalyst $C_A$.

With the apparatus shown in FIG. 10, the handling of the particles including the char $C_X$ is required, and oxygen blocking is required. Since the tar is decomposed by the catalyst at the same time that the raw material is gasified, the trouble of tar adhesion is less liable to occur even if the feed passage is cooled, and the particles including the char $C_X$ can be cooled and fed. However, cooling the catalyst $C_A$ and returning the catalyst $C_A$ to the gasification apparatus 21 leads to a reduction in the thermal efficiency.

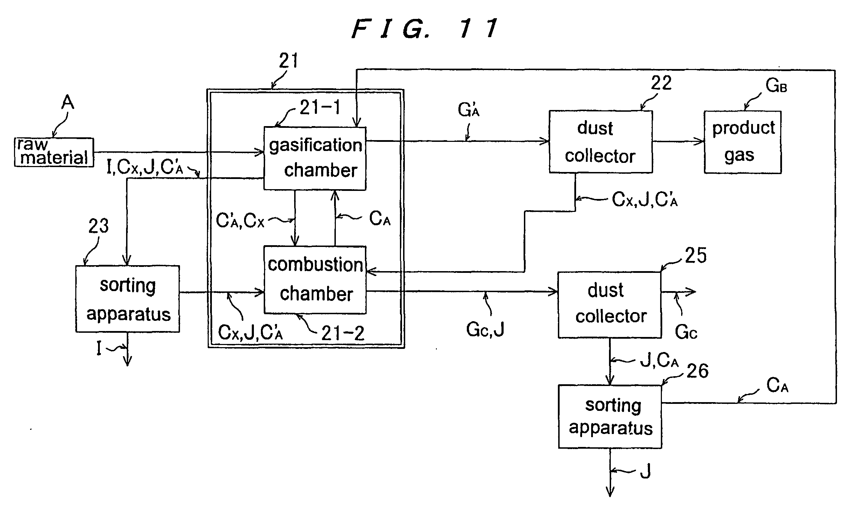

FIG. 11 is a view showing an example of a system construction of an apparatus for carrying out a combustible gas reforming method according to the present invention. The apparatus shown in FIG. 11 is constructed to solve the above problems of the apparatus shown in FIG. 10. The apparatus shown in FIG. 11 is different from the apparatus shown in FIG. 10 in that the gasification apparatus 21 comprises an integrated-type furnace including a gasification chamber 21-1 having a fluidized bed and a combustion chamber 21-2 having a fluidized bed. At the same time that the raw material A is gasified in the gasification chamber 21-1, the generated gas $G_A$ is brought into contact with the catalyst $C_A$ serving as the bed material and is reformed. The reformed generated gas $G_A'$ is passed through the dust collector 22, which removes the char $C_X$, the ash J, and the catalyst (degraded catalyst) $C_A'$ contained therein, producing the product gas $G_B$. The char $C_X$, the ash J, and the catalyst $C_A'$ removed by the dust collector 22 are delivered into the combustion chamber 21-1 and combusted therein.

The catalyst (bed material) $C_A'$ containing the char $C_X$ and discharged from the gasification chamber 21-1 is introduced into the combustion chamber 21-2, and the catalyst $C_A'$ is heated and regenerated by the combustion heat of the char $C_X$ in the combustion chamber 21-2. The regenerated catalyst $C_A$ is delivered again into the gasification chamber 21-1. Further, the mixture of the incombustibles I, the char $C_X$, the ash J, and the catalyst $C_A'$ removed from the gasification chamber 21-1 is delivered to the sorting apparatus 23, which selectively removes and discharges the incombustibles I. The remaining char $C_X$, ash J, and catalyst $C_A'$ are sent to the combustion chamber 21-2, and the char $C_X$ is combusted to contribute to the heating and regeneration of the degraded catalyst $C_A'$ in the combustion chamber 21-2. The exhaust gas $G_C$ containing the ash J and the char $C_X$ discharged from the combustion chamber 21-2 is sent to the dust collector 25, which removes and discharges the ash J and the catalyst $C_A$. The removed ash J and catalyst $C_A$ are delivered to the sorting apparatus 26, which separates the ash J and the catalyst $C_A$ from each other. The separated catalyst $C_A$ is delivered again into the gasification chamber 21-1.

The particulate catalyst $C_A$ as the bed material is directly moved in the same fluidized-bed furnace. As with the internal circulating fluidized-bed gasification furnace, the bed material (catalyst $C_A$) is moved based on the difference between the fluidizing velocities of the bed material in the gasification chamber 21-1 and the combustion chamber 21-2. As with the apparatus shown in FIG. 10, if the catalyst $C_A$ can easily be scattered because it tends to be broken into smaller particles or it is originally in the form of small particles, then the catalyst $C_A$ should be sorted out by the sorting apparatus 26 from the mixture of the ash J and the catalyst $C_A$ trapped by the dust collector 25, and returned to the gasification chamber 21-1. Further, the gasification chamber 21-1 and the combustion chamber 21-2 should be isolated from each other, and a means for preventing oxygen from leaking from the combustion chamber 21-2 into the gasification chamber 21-1 should be provided, as with the above embodiments.

If the bed material for use in the fluidized-bed furnace of the gasification apparatus 21 comprises catalyst particles (CaO, $Al_2O_3Ni$, $FeSiO_2$, $MgSiO_2$, etc.) for decomposing tar, then the gasification of the raw material A and the tar decomposition based on the catalytic action can simultaneously be performed. Since CaO or the like functions as a desulfurizing agent and a dechlorinating agent, desulfurization and dechlorination can also be carried out simultaneously.

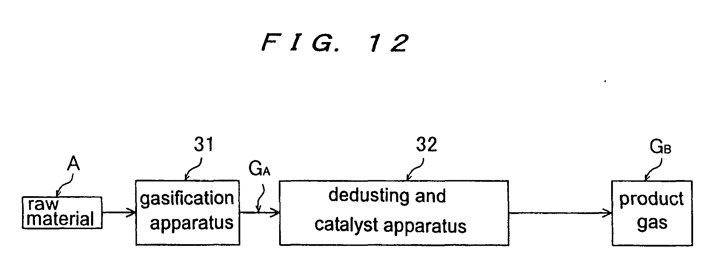

FIG. 12 is a view showing an example of a system construction of an apparatus for carrying out a combustible gas reforming method according to the present invention. In the apparatus shown in FIG. 12, a raw material A such as biomass, municipal wastes, industrial wastes, RDF, waste plastics, etc. is gasified in a gasification apparatus 31, and dust collecting of a generated gas $G_A$ and reformation of the generated gas are performed by a dust collecting and catalytic reaction apparatus 32, thus producing a product gas $G_B$.

The generated gas $G_A$ discharged from the gasification apparatus 31 contains tar, dust, and char, as described above, which need to be removed. If the gas has been reformed (tar decomposition), then the dust and char can be removed from the gas by a wet-type gas cleaning. Because the gas before decomposition of tar causes the problem of tar deposition upon cooling of the gas, the tar has to be decomposed before the gas is cooled. The dust collecting of the gas should preferably be performed in a stage prior to the catalytic reaction apparatus in order to prevent the catalyst which decomposes the tar at a low temperature from being degraded and contaminated.

A ceramic filter has been used as a high-temperature dust collector for use in a temperature range for gasifying the raw material A. When dust collecting is performed in such a state that the tar is not decomposed, no problem arises when the apparatus operates at a high temperature. However, when the apparatus is stopped, oxygen and tar may react with each other, causing the damage due to local high temperatures or the trouble of clogging due to tar deposition.

In order to solve the above problems, the system shown in FIG. 12 employs the dust collecting and catalytic reaction apparatus 32 disposed in a stage subsequent to the gasification apparatus 31. Specifically, the dust collecting and catalytic reaction apparatus 32 includes a filter section of a dust collecting apparatus which carries a catalyst or a particulate filter filled with catalyst particles. When the generated gas $G_A$ passes through the filter which has a catalytic function, the dust collecting of the generated gas $G_A$ is performed by the filter, and the decomposition of the tar is accelerated by a catalytic reaction.

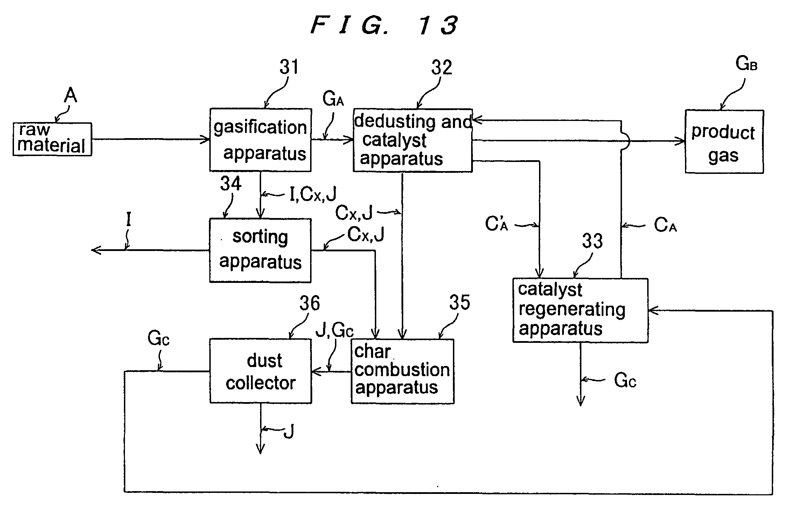

FIG. 13 is a view showing an example of a system construction of an apparatus for carrying out a combustible gas reforming method according to the present invention. The apparatus shown in FIG. 13 employs an arrangement which is a development of the apparatus shown in FIG. 12. As shown in FIG. 13, the degraded catalyst $C_A$' which has contributed to gas reforming (tar decomposition) in the dust collecting and catalytic reaction apparatus 32 is removed from the dust collecting and catalytic reaction apparatus 32, and delivered to a catalyst regenerating apparatus 33, which regenerates the degraded catalyst $C_A$'. The regenerated catalyst $C_A$ is supplied again to the dust collecting and catalytic reaction apparatus 32.

A mixture of incombustibles I, char $C_X$, and ash J removed from the gasification apparatus 31 is sent to a sorting apparatus 34, which selectively removes the incombustibles I, and the remaining char $C_X$ and ash J are fed to a char combustion apparatus 35 in which the char $C_X$ is combusted. A combustion exhaust gas $G_C$ containing the ash J is delivered from the char combustion apparatus 35 to a dust collector 36, which removes the ash J, and the remaining combustion exhaust gas $G_C$ is delivered from the dust collector 36 to the catalyst regenerating apparatus 33. The degraded catalyst $C_A$' is heated and regenerated with the sensible heat of the combustion exhaust gas $G_C$ by the catalyst regenerating apparatus 33. The degraded catalyst $C_A$' which has contributed to gas reforming (tar decomposition) in the dust collecting and catalytic reaction apparatus 32 may be charged into the catalyst regenerating apparatus 33, and the heated and regenerated catalyst $C_A$ may be sorted and returned to the dust collecting and catalytic reaction apparatus 32.

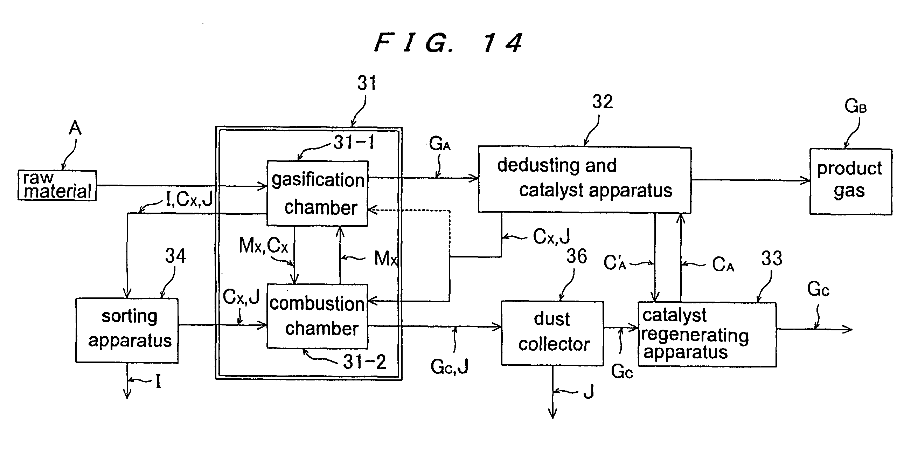

FIG. 14 is a view showing an example of a system construction of an apparatus for carrying out a combustible gas reforming method according to the present invention, the apparatus being developed from the apparatus shown in FIG. 9. The apparatus shown in FIG. 14 is different from the apparatus shown in FIG. 9 in that a gasification apparatus 31 comprises an integrated-type furnace which includes a gasification chamber 31-1 having a fluidized bed and a combustion chamber 31-2 having a fluidized bed. Because the gasification apparatus 31 comprises the integrated-type furnace having the gasification chamber 31-1 for gasifying the raw material A and the combustion chamber 31-2 for combusting the char, the gasification apparatus 31 has a function to gasify the raw material A and a function to combust the char.

For example, the freeboard is divided by a partition plate to separate the compartments completely from each other, so that the gasification chamber 31-1 and the combustion chamber 31-2 in the gasification apparatus 31 can take out the generated gas $G_A$ produced by gasifying the raw material A and the combustion exhaust gas $G_C$ produced by combusting the char $C_X$, independently of each other. The compartments should preferably be isolated from each other not only in the freeboard but also in the furnace bottom to prevent oxygen sufficiently supplied to the combustion chamber 31-2 for combusting the char $C_X$ from leaking into the gasification chamber 31-1.

As described above, the interior of the gasification apparatus 31 is divided into the gasification chamber 31-1 and the combustion chamber 31-2, and the char $C_X$ is transferred from the gasification chamber 31-1 to the combustion chamber 31-2 by a bed material $M_X$ in the fluidized bed. Specifically, the char $C_X$ generated in the gasification chamber 31-1 is delivered together with the bed material $M_X$ into the combustion chamber 31-2, and the char $C_X$ is combusted in the combustion chamber 31-2, and then the bed material $M_X$ that is heated with the combustion heat of the char $C_X$ is returned to the gasification chamber 31-1.

Since the bed material $M_X$ is returned from the combustion chamber 31-2 to the gasification chamber 31-1, part of the heat of the combustion chamber 31-2 is used as a heat source for pyrolysis in the gasification chamber 31-1. In this case, the compartments in the furnace bottom where the bed material $M_X$ is present require a passage for moving the bed material $M_X$. The presence of the bed material $M_X$ and the maintenance of an appropriate fluidizing velocity make it possible to prevent oxygen from leaking from the combustion chamber 31-2 into the gasification chamber 31-1 to a certain extent. In addition, it is desirable that a bed in which the bed material moves be disposed between the gasification chamber 31-1 and the combustion chamber 31-2, like the internal circulating fluidized-bed gasification furnace, or the bed material $M_X$ be returned to the furnace bottom of the gasification chamber 31-1 where the concentration of the raw material is low.

If the raw material A contains a large amount of incombustibles I, then an incombustible discharge mechanism (incombustible discharge apparatus, sorting apparatus) is needed for removing the incombustibles I from the gasification chamber 31-1 as with the conventional gasification apparatus. In FIG. 14, a sorting apparatus 34 is provided for separating the incombustibles I from a mixture of the incombustibles I, the char $C_X$, and the ash J removed from the gasification chamber 31-1 and supplying the char $C_X$ and the ash J to the combustion chamber 31-2. For handling the char $C_X$ that accompanies the incombustibles I removed from the gasification chamber 31-1, care should be taken to intercept oxygen and prevent a blocking. However, the danger of the trouble is reduced because all the amount of char corresponding to the amount of char to be generated is not removed from the gasification chamber 31-1 unlike the conventional process.

The char $C_X$ removed by a dust collecting and catalytic reaction apparatus 32 is returned to the combustion chamber 31-2 (for the purpose of combustion) or to the gasification chamber 31-1. (for the purpose of gasification), if necessary (if the amount of char $C_X$ is large). In the above example, a catalyst $C_A'$ degraded in the dust collecting and catalytic reaction apparatus 32 is heated and regenerated by a catalyst regenerating apparatus 33, and returned again to the dust collecting and catalytic reaction apparatus 32. The combustion chamber 31-2 may be used to regenerate the catalyst. That is, the degraded catalyst $C_A'$ which has contributed to gas reforming (tar decomposition) in the dust collecting and catalytic reaction apparatus 32 may be charged into the combustion chamber 31-2, and the heated and regenerated catalyst $C_A'$ may be selected and returned to the dust collecting and catalytic reaction apparatus 32.

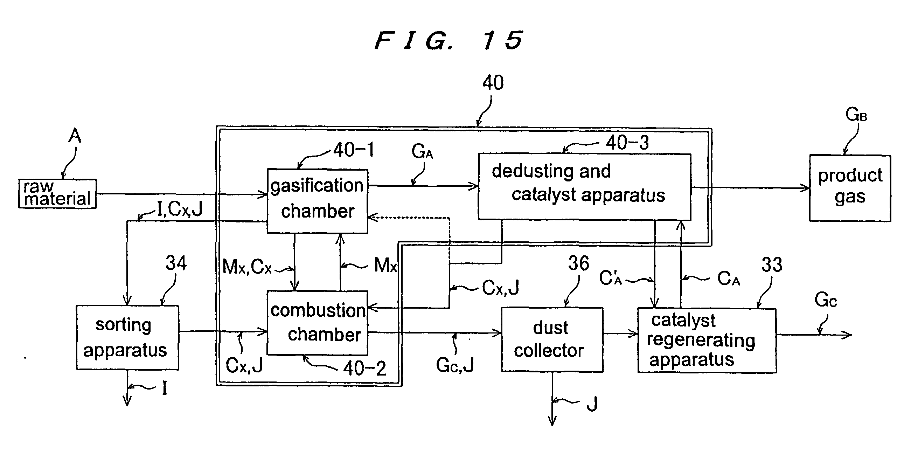

FIG. 15 is a view of an example of a system construction of an apparatus for carrying out a combustible gas reforming method according to the present invention, the apparatus being developed from the apparatus shown in FIG. 13. The apparatus shown in FIG. 15 includes a gasification, combustion, dust collecting and reforming apparatus 40 for performing, in a single fluidized-bed furnace, the gasification function of the gasification apparatus 31 shown in FIG. 13, the char combustion function of the char combustion apparatus 35 shown in FIG. 13, and the dust collecting and reforming function of the dust collecting and catalytic reaction apparatus 32. Specifically, the gasification, combustion, dust collecting and reforming apparatus 40 comprises a gasification chamber 40-1 for gasifying the raw material A, a combustion chamber 40-2 for combusting the char $C_X$, and a dust collecting and catalyst reaction chamber 40-3 for dust collecting and reforming (decomposing tar) the generated gas $G_A$.

As shown in FIG. 13, if the dust collecting and catalytic reaction apparatus 32 is provided and employs a particulate filter comprising catalyst particles, then a fixed bed (packed bed) may be used. With respect to the handling of the catalyst particles, the handling of the catalyst particles is facilitated by using the fluidized bed as shown in FIG. 13.

For heating and regenerating the catalyst particles of a degraded filter for reuse, if the degraded catalyst particles are regenerated with the heat of combustion of the char $C_X$ and the regenerated catalyst particles are supplied to the filter, then the handling of the catalyst particles is needed in many situations, e.g., when the catalyst particles are removed from the filter and supplied to the regenerating apparatus, and when the regenerated catalyst particles are supplied to the filter. Unlike the method of removing the catalyst particles with batch processing in the fixed bed, using the gasification apparatus 31 and the gasification-combustion-dust collecting-reforming apparatus 40 which utilize the fluidized-bed (moving bed) technology as shown in FIGS. 14 and 15 makes it possible to continuously remove and supply the catalyst (catalyst particles) $C_A$.

In the catalyst regenerating apparatus 33, the fluidized bed is effective to increase the ratio of contact between the combustion exhaust gas $G_C$ serving as a heat source and the catalyst $C_A$, and makes it easier to remove the regenerated catalyst $C_A$ from the catalyst regenerating apparatus 33 than in the case where the combustion exhaust gas $G_C$ is brought into contact with the catalyst $C_A$ in the packed bed.

With a cyclone-type dust collector or a centrifugal-separation dust collector, after the catalyst particles are introduced to reform the combustible gas in a stage prior to the dust collector, the catalyst $C_A$ is trapped together with the char $C_X$ and the dust in the generated gas $G_A$, separated from the generated gas $G_A$, and delivered to the char combustion chamber (catalyst regeneration chamber). In this manner, the gas can simultaneously be dedusted and reformed (tar decomposition).

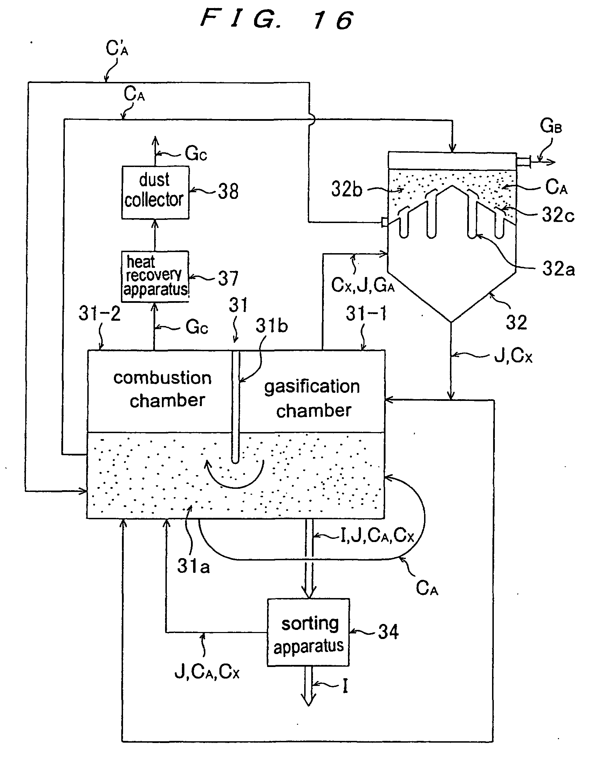

FIG. 16 shows an example of a construction wherein the catalyst is regenerated by a combustion chamber 31-2, rather than being regenerated by the catalyst regenerating apparatus 33 in FIG. 14. As shown in FIG. 16, the gasification apparatus 31 has a fluidized-bed furnace with a fluidized bed 31a, and the fluidized-bed furnace is divided into a gasification chamber 31-1 and a combustion chamber 31-2 by a partition wall 31b. A region of the fluidized bed 31a beneath the lower end of the partition wall 31b serves as a passage for moving the bed material therethrough. The dust collecting and catalytic reaction apparatus 32 has a filter 32a, and a catalyst $C_A$ is charged on the filter 32a.

When a generated gas $G_A$ containing char $C_X$ and ash J from the gasification chamber 31-1 is supplied to a region below the filter 32a of the dust collecting and catalytic reaction apparatus 32, the char $C_X$ and the ash J are trapped and removed by the filter 32a, and the generated gas $G_A$ is injected from a distributor nozzle 32c into a fixed bed (packed bed) 32b of the catalyst $C_A$ and reformed (tar decomposition) while passing through the fixed bed 32b of the catalyst $C_A$, thus producing a product gas $G_B$. The char $C_X$ and the ash J which have been trapped and removed by the filter 32a are supplied, if necessary, to the combustion chamber 31-2 and the gasification chamber 31-1.

The mixture of the incombustibles I, the ash J, the char $C_X$, and the catalyst $C_A$ serving as a bed material, which is removed from the fluidized bed 31a in the gasification chamber 31-1, is supplied to the sorting apparatus 34. The incombustibles I are selectively removed from the sorting apparatus 34, and the ash J, the catalyst $C_A$, and the char $C_X$ which remain in the sorting apparatus 34 are returned to the combustion chamber 31-2. The degraded catalyst $C_A'$ (whose catalytic function has been lowered) which has contributed to the reforming of the generated gas $G_A$ in the dust collecting and catalytic reaction apparatus 32 is delivered to the combustion chamber 31-2. In the combustion chamber 31-2, the degraded catalyst $C_A'$ is heated and regenerated into a regenerated catalyst $C_A$ that is returned to the dust collecting and catalytic reaction apparatus 32. The catalyst $C_A$ which has been heated and regenerated in the combustion chamber 31-2 is delivered to the gasification chamber 31-1. A combustion exhaust gas $G_C$ from the combustion chamber 31-2 passes through a heat recovery apparatus 37, and hence heat recovery is performed. Thereafter, the combustion exhaust gas $G_C$ passes through a dust collector 38, which removes dust from the combustion exhaust gas $G_C$, and is then discharged from the dust collector 38.

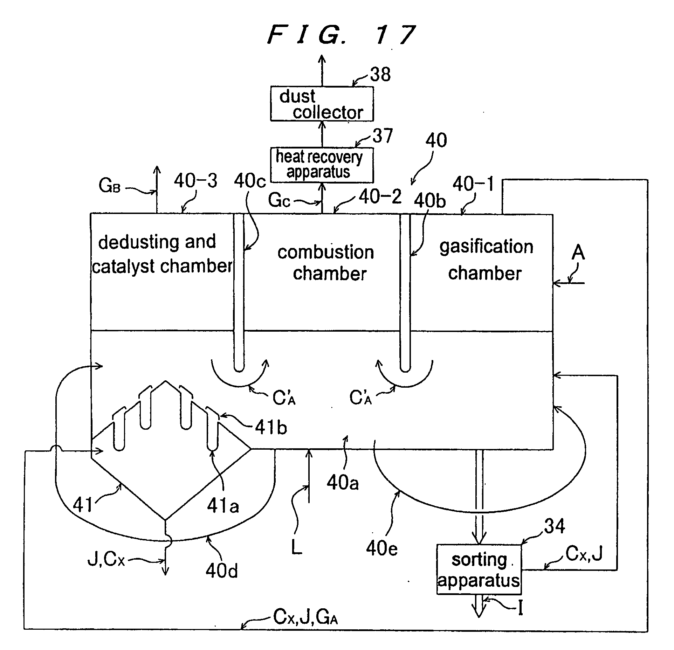

FIG. 17 is a view showing an example of a system construction of an apparatus for carrying out a combustible gas reforming method according to the present invention. The system construction shown in FIG. 17 performs the gasification function, the catalyst regenerating function, the dust collecting function, and the gas reforming function illustrated in FIG. 11 in a single fluidized-bed furnace. As shown in FIG. 17, a gasification-combustion-dust collecting-reforming apparatus 40 includes a fluidized-bed furnace which has a fluidized bed 40a and is divided into a gasification chamber 40-1, a combustion chamber 40-2, and a dust collecting and catalyst reaction chamber 40-3 by partition walls 40b, 40c. Regions of the fluidized bed 40a beneath the lower ends of the partition walls 40b, 40c serve as passages for moving the degraded catalyst $C_A$' as a bed material therethrough.

A dust collecting chamber 41 is disposed below the dust collecting and catalyst reaction chamber 40-3. A filter 41a is provided in the dust collecting chamber 41. A generated gas $C_A$ containing char $C_X$ and ash J and produced by gasification of a raw material A in the gasification chamber 40-1, is introduced into a region below the filter 41a of the dust collecting chamber 41. The char $C_X$ and the ash J are trapped by the filter 41a, whereas the remaining generated gas $G_A$ is injected through distributor nozzles 41b into the fluidized bed 40a and reformed (tar decomposition) by the catalyst $C_A$ as a bed material of the fluidized bed 40a, thus producing a product gas $G_B$ that is discharged from the dust collecting and catalytic reaction chamber 40-3. Air L, serving as a fluidizing gas and an oxidizing agent, is usually introduced into the bottom of the fluidized bed 40a.

The degraded catalyst $C_A$' which has contributed to the reforming of the generated gas $G_A$ (tar decomposition) in the dust collecting and catalyst reaction chamber 40-3 is delivered to the combustion chamber 40-2. In the combustion chamber 40-2, the degraded catalyst $C_A$' is heated and regenerated, and the regenerated catalyst is returned through a feed passage 40d to the dust collecting and catalyst reaction chamber 40-3. A combustion exhaust gas $G_C$ from the combustion chamber 40-2 passes through a heat recovery apparatus 37, and hence heat recovery is performed. Thereafter, the combustion exhaust gas $G_C$ passes through the dust collector 38, which removes dust from the combustion exhaust gas $G_C$, and is then discharged from the dust collector 38. The catalyst which has heated and regenerated in the combustion chamber 40-2 is returned through a feed passage 40e to the gasification chamber 40-1.

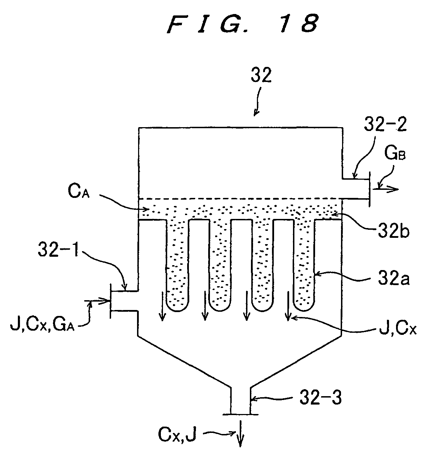

FIG. 18 is a view showing an example of a construction of the dust collecting and catalytic reaction apparatus 32. As shown in FIG. 18, the dust collecting and catalytic reaction apparatus 32 has a filter 32a housed therein. A generated gas $G_A$ containing ash J and char $C_X$ is introduced from a gas inlet 32-1 into the filter 32a, and the ash J and the char $C_X$ are separated from the generated gas $G_A$ by the filter 32a. The generated gas $G_A$ from which the ash J and the char $C_X$ have been removed by the filter 32a is reformed (tar decomposition) while passing through the packed bed 32b of the catalyst $C_A$ formed on the filter 32a. The reformed gas is then discharged as a product gas $G_B$ from a gas outlet 32-2. The filter 32a comprises a ceramic filter or a metal filter. The ash J and the char $C_X$ which have been separated are discharged from an outlet 32-3.

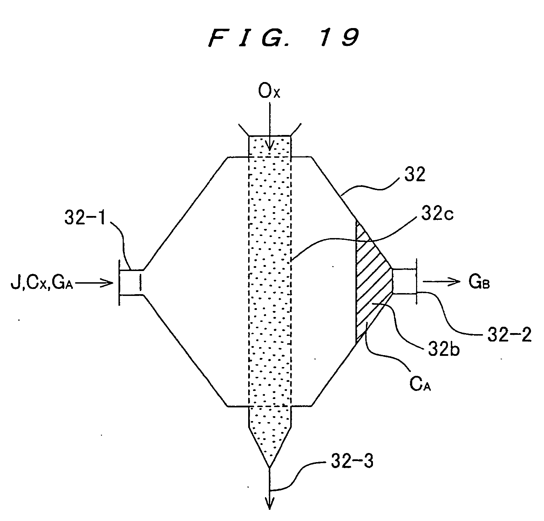

The dust collecting and catalytic reaction apparatus 32 may be constructed such that as shown in FIG. 19, a packed bed 32c which is filled with sand or ceramic particles as a filler $O_X$, instead of a filter, is provided, and a generated gas $G_A$ containing ash J and char $C_X$ is introduced from the gas inlet 32-1 into the dust collecting and catalytic reaction apparatus 32, and then the ash J and the char $C_X$ are separated from the generated gas $G_A$ by the packed bed 32c. In the packed bed 32c, the filler $O_X$ moves by flowing-down or the like. When the generated gas $G_A$ containing the ash J and the char $C_X$ passes through the packed bed 32c, the particles of the filler $O_X$ in the packed bed 32c contact and trap the ash J and the char $C_X$, thus separating the ash J and the char $C_X$ from the generated gas $G_A$. The generated gas $G_A$ which has passed through the packed bed 32c is reformed (tar decomposition) while passing through a packed bed 32b of the catalyst $C_A$ that is disposed in a flow passage from the packed bed 32c to the gas outlet 32-2. The reformed gas is discharged as a product gas $G_B$ from the gas outlet 32-2. Since the catalyst $C_A$ is used in the form of a mixture of the catalyst $C_A$ and the filler $O_X$, the filler $O_X$ may be replaced in its entirety with the catalyst $C_A$.

The filler $O_X$, the ash J, and the char $C_X$ which are discharged from the outlet 32-3 are classified by a gravity separator based on the different specific gravities of the filler $O_X$, the ash J, and the char $C_X$. The classified filler $O_X$ is returned to the packed bed 32c of the dust collecting and catalytic reaction apparatus 32. The ash J is recovered after it is cooled. The filler $O_X$, the ash J, and the char $C_X$ are classified in a reducing atmosphere.

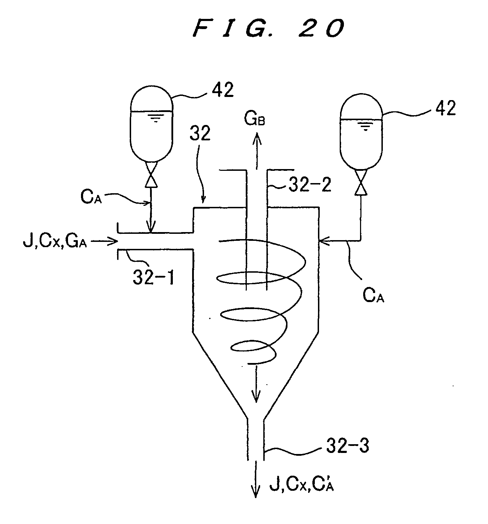

As shown in FIG. 20, the dust collecting and catalytic reaction apparatus 32 may comprise a cyclone-type centrifugal separator for separating, under the centrifugal forces of swirling flows, ash J and char $C_X$ from a generated gas $G_A$ which contains the ash J and the char $C_X$ and is introduced from the gas inlet 32-1. A catalyst (catalyst particles) $C_A$ is introduced into the generated gas $G_A$ within the dust collecting and catalytic reaction apparatus 32 or near the gas inlet 32-1 through an apparatus, such as a lock hopper 42 or the like, which isolates the atmosphere of the generated gas $G_A$ and the external atmosphere from each other, whereby tar contained in the generated gas $G_A$ is decomposed by the catalyst $C_A$ due to a mixing and stirring action of the swirling flows. In the dust collecting and catalytic reaction apparatus 32, after decomposition of the tar, the ash J, the char $C_X$, and the degraded catalyst $C_A$' are separated from the generated gas $G_A$, and discharged from the outlet 32-3. After decomposition of the tar, the generated gas $G_A$ is discharged as a product gas $G_B$ from the gas outlet 32-2.

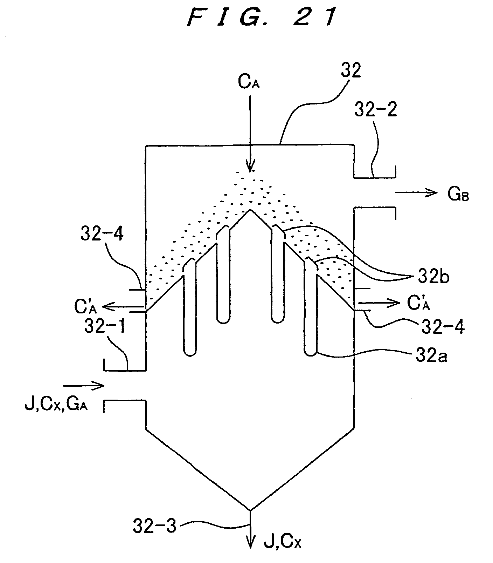

The dust collecting and catalytic reaction apparatus 32 may be constructed as shown in FIG. 21 such that the filter 32a is housed within the apparatus; a generated gas $G_A$ containing ash J and char $C_X$ is introduced from the gas inlet 32-1 into the dust collecting and catalytic reaction apparatus 32; and then the generated gas $G_A$ is passed through the filter 32a to trap and separate the ash J and the char $C_X$ from the generated gas $G_A$, and the separated ash J and char $C_X$ are discharged from the outlet 32-3.

Tar contained in the generated gas $G_A$ is decomposed by the catalyst $C_A$ that is filled in a flow passage from the filter 32a to the gas outlet 32-2, and the generated gas $G_A$ that has been reformed is discharged as a product gas $G_B$ from the gas outlet 32-2. The filter 32a comprises a ceramic filter or a metal filter.

After the catalyst $C_A$ is used to decompose the tar, the catalyst $C_A$ is degraded. In order to regenerate the catalyst $C_A$, a distribution means such as distributor nozzles 32b or the like are disposed above the filter 32a. The generated gas $G_A$ is ejected through the distribution means to fluidize and move the catalyst $C_A$, thereby discharging the degraded catalyst $C_A'$ from a catalyst outlet 32-4. The filter 32a in the dust collecting and catalytic reaction apparatus 32 should preferably have a slanted surface which is progressively lower toward the catalytic outlet 32-4 for effectively discharging the degraded catalyst $C_A'$.

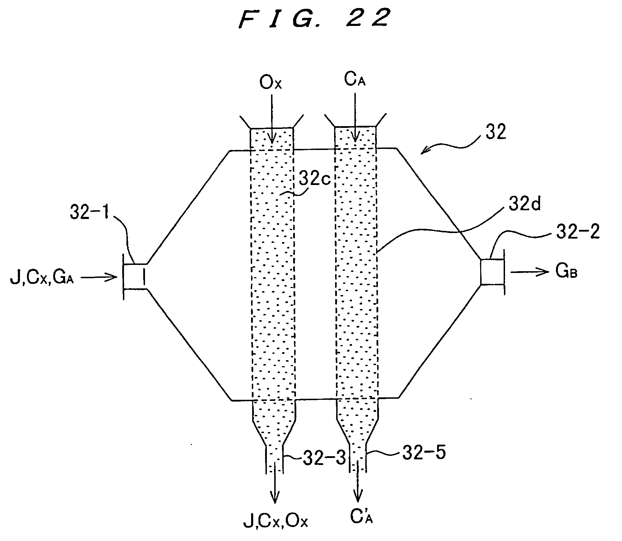

FIG. 22 is a view showing an example of another construction of the dust collecting and catalytic reaction apparatus 32. As shown in FIG. 22, the dust collecting and catalytic reaction apparatus 32 has a packed bed 32c filled with sand or ceramic particles as a filler $O_X$, instead of a filter to separate the ash J and char $C_X$ from the generated gas $G_A$. In the packed bed 32c, the filler $O_X$ moves by flowing-down or the like. A generated gas $G_A$ containing ash J and char $C_X$ is introduced from the gas inlet 32-1 into the dust collecting and catalytic reaction apparatus 32. When the generated gas $G_A$ containing the ash J and the char $C_X$ passes through the packed bed 32c, the ash J and the char $C_X$ are contacted and trapped by the particles of the filler $O_X$ of the packed bed 32c, and are thus separated from the generated gas $G_A$. The ash J and the char $C_X$ that have been separated by the packed bed 32c are discharged from the outlet 32-3 to the outside.

The dust collecting and catalytic reaction apparatus 32 also has a catalyst packed bed 32d filled with a regenerated catalyst $C_A$. In the catalyst packed bed 32d, the catalyst $C_A$ moves by flowing-down or the like as with the packed bed 32c. When the generated gas $G_A$ passes through the catalyst packed bed 32d, the catalyst $C_A$ decomposes tar contained in the generated gas $G_A$, and the degraded catalyst $C_A'$ is discharged from a catalyst outlet 32-5.

In the dust collecting and catalytic reaction apparatus 32 constructed as shown in FIG. 22, the catalyst $C_A$ may be in the form of particles as with the filler $O_X$ and mixed with the filler $O_X$, or the filler $O_X$ may be replaced in its entirety with the catalyst $C_A$. In this case, the ash J and the char $C_X$ which have been separated by the packed bed 32c are classified by a gravity separator based on the different specific gravities of the filler $O_X$ (the catalyst $C_A$), the ash J, and the char $C_X$.

In the case where the catalyst $C_A$ is in the form of particles as with the filler $O_X$ and mixed with the filler $O_X$, or the filler $O_X$ is replaced in its entirety with the catalyst $C_A$, if the temperature in the dust collecting and catalytic reaction apparatus 32 is in a high temperature range from 900°C to 1000°C, then since salts are volatilized and do not remain in the ash J, the ash J and the char $C_X$ which have been separated by the packed bed 32c can be supplied together with the filler $O_X$ and the catalyst $C_A$ to the char combustion apparatus or the combustion chamber.

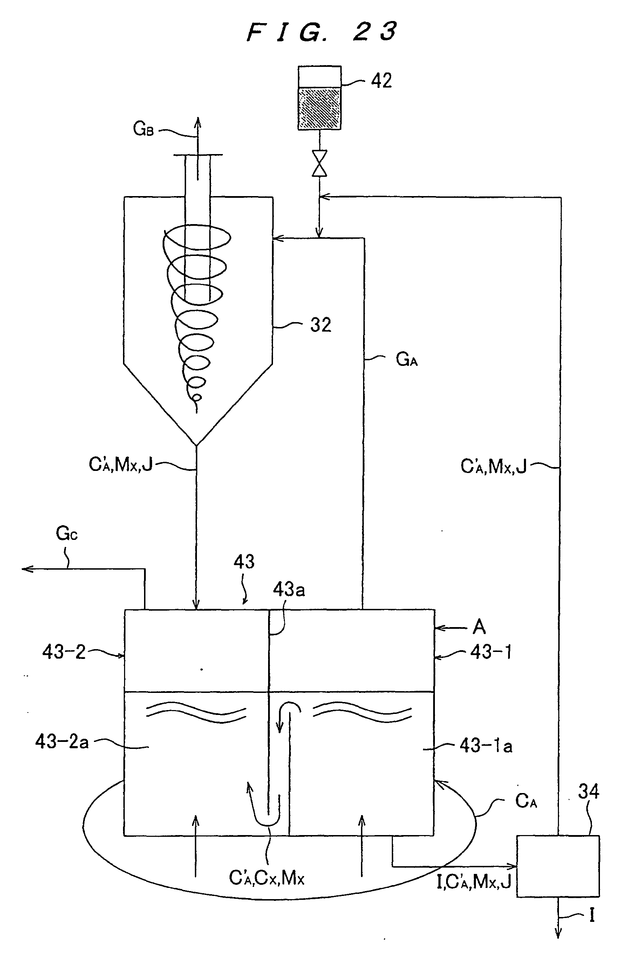

FIG. 23 is a view showing an example of a system construction of an apparatus for carrying out a combustible gas reforming method according to the present invention. The apparatus shown in FIG. 23 has a gasification apparatus 43 comprising a fluidized-bed furnace which is divided into a gasification chamber 43-1 and a combustion chamber 43-2 by a partition wall 43a. A bed material (sand) $M_X$, a degraded catalyst $C_A'$, and char $C_X$ move from the gasification chamber 43-1 in a reducing atmosphere into the combustion chamber 43-2 in an oxidizing atmosphere. In the combustion chamber 43-2, the char $C_X$ is combusted, and the degraded catalyst $C_A'$ is heated and regenerated into the catalyst $C_A$. The regenerated catalyst $C_A$ moves again into the gasification chamber 43-1, and a combustion exhaust gas $G_C$ is discharged.

A fluidized bed 43-1a in the gasification chamber 43-1 contains the bed material (sand) $M_X$ and the catalyst $C_A$, and the raw material A is gasified and simultaneously reformed (tar decomposition) by the catalyst $C_A$. The reformed generated gas $G_A$ is introduced into a dust collecting and catalytic reaction apparatus 32 which comprises a cyclone-type centrifugal separator that is of essentially the same structure as the cyclone-type centrifugal separator shown in FIG. 20. A mixture of incombustibles I, the degraded catalyst $C_A'$ including unreacted components, the bed material $M_X$ and the ash J, which is removed from the fluidized bed 43-1a in the gasification chamber 43-1, is delivered to the sorting apparatus 34, and the incombustibles I are selectively separated out by the sorting apparatus 34, and the catalyst $C_A'$, the bed material $M_X$, and the ash J which remain in the sorting apparatus 34 are supplied to the dust collecting and catalytic reaction apparatus 32.

In the dust collecting and catalytic reaction apparatus 32, as with the arrangement shown in FIG. 20, the generated gas $G_A$ is further reformed by a gas-phase mixture of the generated gas $G_A$ and the catalyst $C_A$, thus producing a product gas $G_B$. The catalyst $C_A'$, the bed material $M_X$, and the ash J from the dust collecting and catalytic reaction apparatus 32 are returned to the combustion chamber 43-2 of the gasification apparatus 43.

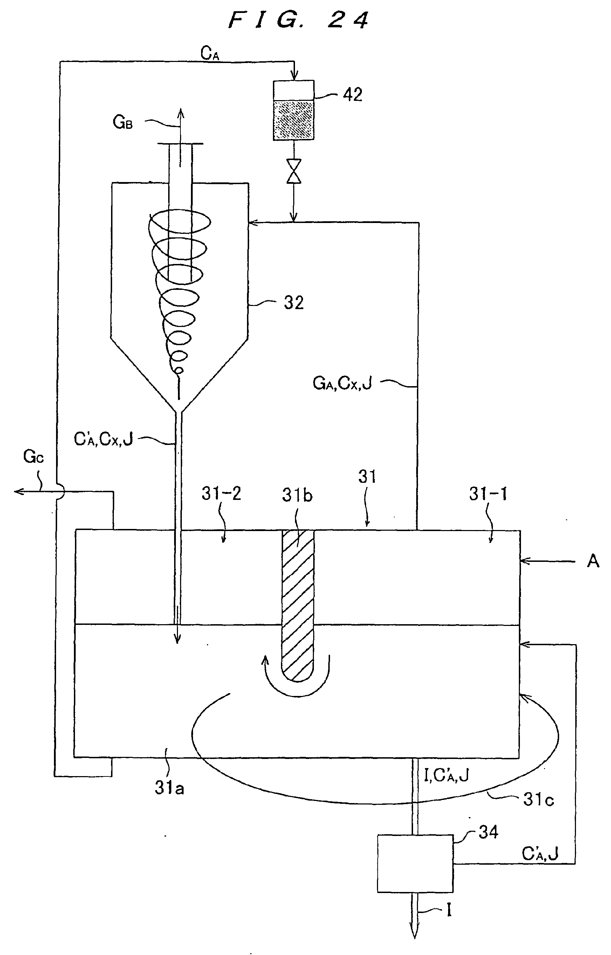

FIG. 24 is a view showing an example of a system construction of an apparatus for carrying out a combustible gas reforming method according to the present invention. The apparatus shown in FIG. 24 has a gasification apparatus 31 which is of substantially the same structure as the gasification apparatus 31 shown in FIG. 12 and a dust collecting and catalytic reaction apparatus 32 which is of substantially the same structure as the dust collecting and catalytic reaction apparatus 32 shown in FIG. 20. A mixture of incombustibles I, catalyst $C_A'$ and ash J, which is removed from the fluidized bed 31a in the gasification chamber 31-1, is delivered to the sorting apparatus 34, and the incombustibles I are selectively removed by the sorting apparatus 34, and the catalyst $C_A'$ and the ash J which remain in the sorting apparatus 34 are returned to the gasification chamber 31-1. In the gasification chamber 31-1, the raw material A is gasified and the generated gas $G_A$ is reformed by the catalyst $C_A$. The mixture of the generated gas $G_A$, the ash J, and the char $C_X$ from the gasification chamber 31-1 is delivered to the dust collecting and catalytic reaction apparatus 32.

In the dust collecting and catalytic reaction apparatus 32, as with the arrangement shown in FIG. 20, the generated gas $G'_A$ is further reformed by a gas-phase mixture of the generated gas $G_A$ and the catalyst $C_A$, thus producing a product gas $G_B$. The catalyst $C_A'$, the char $C_X$, and the ash J from the dust collecting and catalytic reaction apparatus 32 are returned to the combustion chamber 31-2 of the gasification apparatus 31.

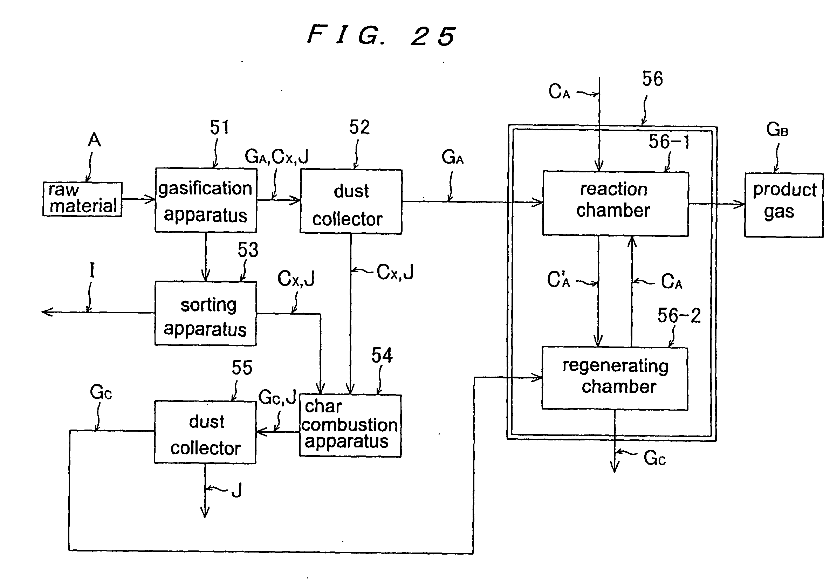

FIG. 25 is a view showing an example of a system construction of an apparatus for carrying out a combustible gas reforming method according to the present invention. As shown in FIG. 25, the apparatus employs a fluidized-bed catalytic reaction apparatus 56 as a catalytic reaction and catalyst regenerating apparatus. The fluidized-bed catalytic reaction apparatus 56 uses catalyst particles as a bed material, and has a furnace divided into a reaction chamber 56-1 where the catalyst $C_A$ reacts and a regeneration chamber 56-2 where the degraded catalyst $C_A'$ is regenerated. The reaction chamber 56-1 is in a reducing atmosphere, and the regeneration chamber 56-2 is in an oxidizing atmosphere. The reaction chamber 56-1 and the regeneration chamber 56-2 are divided from each other by a partition plate (not shown) to allow gases to pass independently through the reaction chamber 56-1 and the regeneration chamber 56-2, respectively. The divided compartments are designed depending on the amount of a generated gas $G_A$ to be processed, thereby keeping an appropriate fluidizing velocity between the compartments. The catalyst $C_A$ as the bed material circulates between the compartments.

A raw material A including coal, biomass, municipal wastes, industrial wastes, RDF, waste plastics, etc. is gasified by a gasification apparatus 51, and a generated gas $G_A$ is delivered to a dust collector 52. The dust collector 52 removes char $C_X$ and ash J contained in the generated gas $G_A$, and delivers the generated gas $G_A$ to the reaction chamber 56-1 of the fluidized-bed catalytic reaction apparatus 56. In the reaction chamber 56-1 which is in the reducing atmosphere, the generated gas $G_A$ is reformed (tar decomposition) while fluidizing the catalyst $C_A$ by the generated gas $G_A$, thus producing a product gas $G_B$.

A mixture of incombustibles I, the char $C_X$, and the ash J from the gasification apparatus 51 is delivered to a sorting apparatus 53, and the incombustibles I are selectively removed by the sorting apparatus 53 and a remaining mixture of the char $C_X$ and the ash J is supplied from the sorting apparatus 53 to a char combustion apparatus 54. In the char combustion apparatus 54, the char $C_X$ is combusted. A combustion exhaust gas $G_C$ including the ash J from the char combustion apparatus 54 is delivered to a dust collector 55, which removes the ash J. The combustion exhaust gas $G_C$ is then delivered to the regeneration chamber 56-2 of the fluidized-bed catalytic reaction apparatus 56.

The catalyst $C_A'$ which has contributed to the tar decomposition and whose catalytic function has been lowered is delivered from the reaction chamber 56-1 to the regeneration chamber 56-2. In the regeneration chamber 56-2 which is in an oxidizing atmosphere, the degraded catalyst $C_A'$ is regenerated by the heat of the combustion exhaust gas $G_C$. If the catalyst $C_A'$ delivered from the reaction chamber 56-1 contains a large amount of char $C_X$, then the regeneration chamber 56-2 is charged with an oxygen-containing gas for combustion (such as air) to combust the char $C_X$. The catalyst $C_A$ which has been regenerated by the sensible heat of the combustion exhaust gas $G_C$ and the heat of combustion of the remaining char $C_X$ is supplied again to the reaction chamber 56-1.

In the reaction chamber 56-1, the tar is decomposed (pyrolysis reaction) in the presence of the catalyst $C_A$, thus lowering the temperature in the furnace. The reaction chamber 56-1 is supplied with the quantity of heat required for pyrolysis from the heat carried in by the catalyst $C_A$ serving as the bed material supplied from the regeneration chamber 56-2 and the sensible heat of the generated gas $G_A$. The reaction chamber 56-1 of the fluidized-bed catalytic reaction apparatus 56 can be replenished with the catalyst $C_A$.

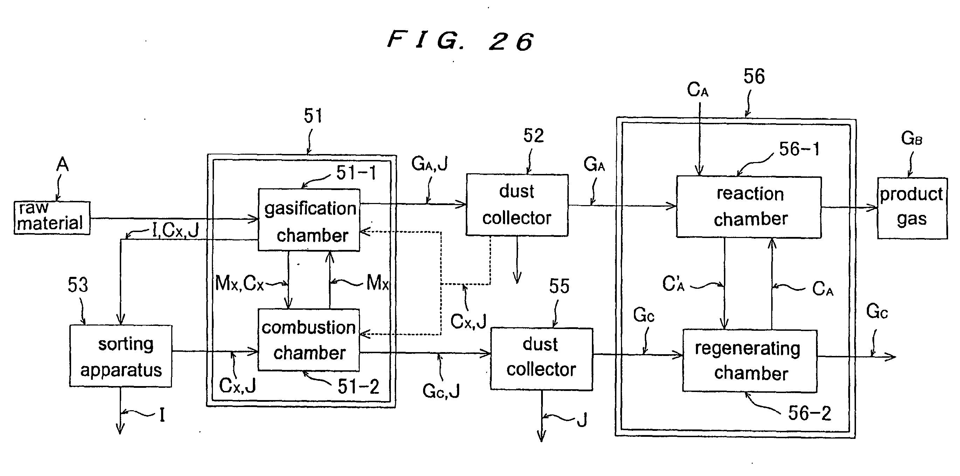

FIG. 26 is a view showing an example of system construction of an apparatus for carrying out a combustible gas reforming method according to the present invention. As with the apparatus shown in FIG. 25, the apparatus shown in FIG. 26 employs the fluidized-bed catalytic reaction apparatus 56 as a catalytic reaction and catalyst regenerating apparatus. However, the apparatus shown in FIG. 26 differs from the apparatus shown in FIG. 25 in that the gasification apparatus 51 comprises a fluidized-bed furnace which is divided into a gasification chamber 51-1 in a reducing atmosphere for gasifying a raw material A and a combustion chamber 51-2 in an oxidizing atmosphere. The gasification chamber 51-1 and the combustion chamber 51-2 are divided by a partition plate (not shown) to allow gases to pass independently through the gasification chamber 51-1 and the combustion chamber 51-2, respectively. A bed material circulates between the compartments.

A mixture of incombustibles I, char $C_X$, and ash J removed from the gasification chamber 51-1 is delivered to the sorting apparatus 53, and the incombustibles I are selectively removed by the sorting apparatus 53 and the remaining char $C_X$ and ash J are supplied from the sorting apparatus 53 to the combustion chamber 51-2. The bed material $M_X$ and the char $C_X$ from the gasification chamber 51-1 are delivered to the combustion chamber 51-2, and the char $C_X$ is combusted in the combustion chamber 51-2. The bed material $M_X$ that is heated in the combustion chamber 51-2 is returned again to the gasification chamber 51-1. The dust collecting of the generated gas $G_A$ from the gasification chamber 51-1 and the combustion exhaust gas $G_C$ from the combustion chamber 51-2 is performed respectively by the dust collector 52 and the dust collector 55, and then delivered respectively to the reaction chamber 56-1 and the regeneration chamber 56-2 of the fluidized-bed catalytic reaction apparatus 56, as with the apparatus shown in FIG. 25. The char $C_X$ and the ash J which have been removed from the generated gas $G_A$ by the dust collector 52 are returned to the combustion chamber 51-2 and the gasification chamber 51-1 for combustion and gasification, if necessary (if the amount of char $C_X$ is large). The reaction chamber of the fluidized-bed catalytic reaction apparatus 56 can be replenished with the catalyst $C_A$.

In the apparatuses shown in FIGS. 25 and 26, the fluidized-bed catalytic reaction apparatus 56 having the reaction chamber 56-1 with the fluidized bed and the regeneration chamber 56-2 with the fluidized bed is used as the catalytic reaction and catalyst regenerating apparatus. However, the catalyst reacting and reproducing apparatus is not limited to the fluidized-bed catalytic reaction apparatus 56, but may comprise an integral combination of a reaction chamber for reforming a generated gas with a catalyst and a regeneration chamber for heating and regenerating the catalyst that has been degraded by gas reforming.

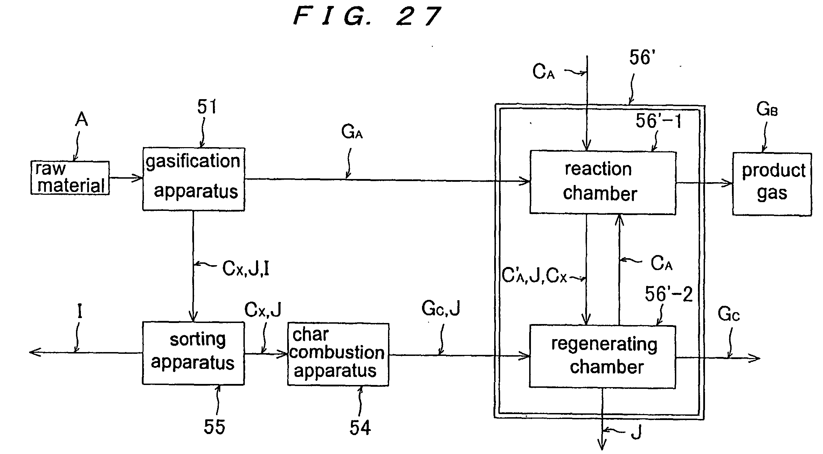

With the apparatus shown in FIG. 25, the dust collecting of the generated gas $G_A$ and the combustion exhaust gas $G_C$ that are to be supplied to the fluidized-bed catalytic reaction apparatus 56 is performed respectively in a pre-treatment process by the dust collectors 52 and 55. The fluidized-bed catalytic reaction apparatus 56 which comprises a catalyst fluidized-bed furnace may also be used as a particulate filter and thus as a fluidized-bed catalyst dedusting apparatus 56' having a dust collecting function, as shown in FIG. 27. In FIG. 27, the degraded catalyst $C_A'$, the ash J, and the char $C_X$ from a reaction chamber 56'-1 are delivered to a regeneration chamber 56'-2, and the char $C_X$ is combusted to regenerate the degraded catalyst $C_A'$ with the heat of combustion of the char $C_X$ in the regeneration chamber 56'-2. The regenerated catalyst $C_A$ is returned to the reaction chamber 56'-1, and the ash J is discharged out of the fluidized-bed catalytic reaction apparatus 56.

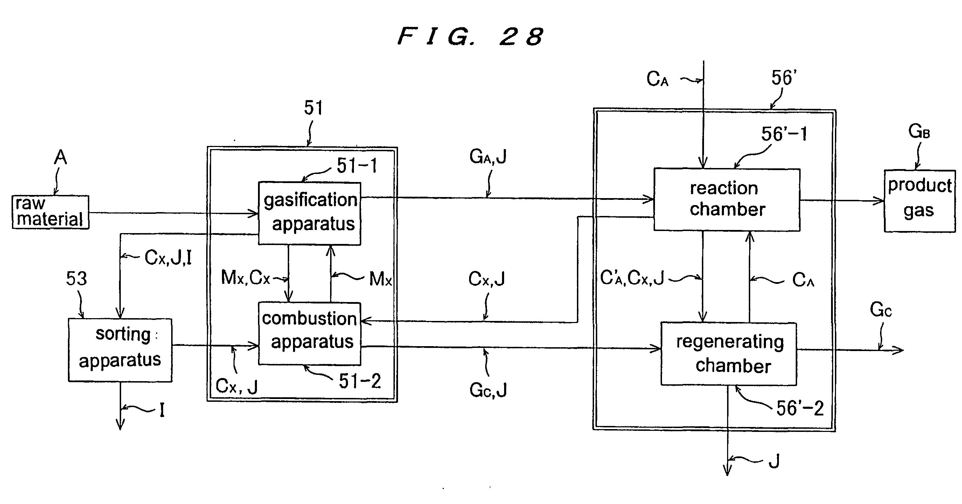

Further, with the apparatus shown in FIG. 26, the dust collecting of the generated gas $G_A$ and the combustion exhaust gas $G_C$ that are to be supplied to the fluidized-bed catalytic reaction apparatus 56 is performed, respectively, in a pre-treatment process by the dust collectors 52 and 55. The fluidized-bed catalytic reaction apparatus 56 which comprises a catalyst fluidized-bed furnace may also be used as a fluidized-bed catalyst dedusting apparatus 56' having a dust collecting function, as shown in FIG. 28. In FIG. 28, the degraded catalyst $C_A'$, the ash J, and the char $C_X$ from the reaction chamber 56'-1 are delivered to the regeneration chamber 56'-2, and the char $C_X$ is combusted to regenerate the degraded catalyst $C_A'$ with the heat of combustion of the char $C_X$ in the regeneration chamber 56'-2. The regenerated catalyst $C_A$ is returned to the reaction chamber 56'-1, and the ash J is discharged out of the fluidized-bed catalyst dedusting apparatus 56'. The char $C_X$ and the ash J from the reaction chamber 56'-1 are delivered to the combustion chamber 51-2 of the gasification apparatus 51.

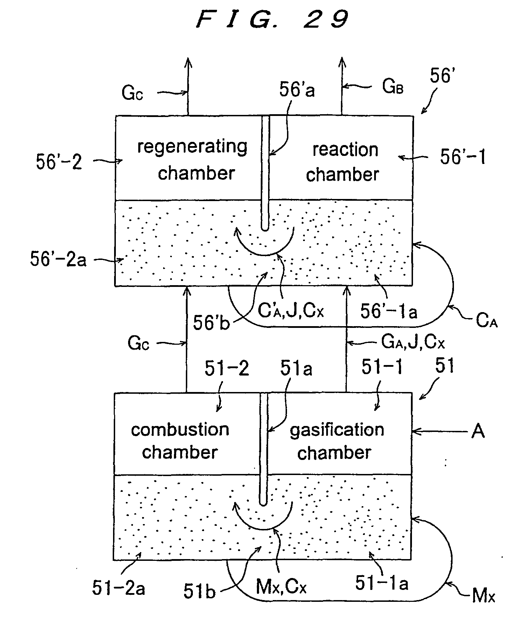

FIG. 29 is a view showing a construction of the furnace portion of the apparatus shown in FIG. 28. As shown in FIG. 29, the gasification apparatus 51 is divided into the gasification chamber 51-1 and the combustion chamber 51-2 by a partition wall 51a. A fluidized bed 51-1a in the gasification chamber 51-1 and a fluidized bed 51-2a in the combustion chamber 51-2 communicate with each other below the lower end of the partition wall 51a. The bed material $M_X$ and the char $C_X$ move from the fluidized bed 51-1a in the gasification chamber 51-1 into the fluidized bed 51-2a in the combustion chamber 51-2 through a communication passage 51b. The bed material $M_X$ which has been heated with the heat of combustion of the char $C_X$ in the combustion chamber 51-2 moves from the fluidized bed 51-2a into the fluidized bed 51-1a in the gasification chamber 51-1.

The fluidized-bed catalyst dedusting apparatus 56' is divided into the reaction chamber 56'-1 and the regeneration chamber 56'-2 by a partition wall 56'a. A fluidized bed 56'-1a in the reaction chamber 56'-1 and a fluidized bed 56'-2a in the regeneration chamber 56'-2 communicate with each other below the lower end of the partition wall 56'a. The degraded catalyst $C_A'$, the ash J, and the char $C_X$ move from the fluidized bed 56'-1a in the reaction chamber 56'-1 into the fluidized bed 56'-2a in the regeneration chamber 56'-2 through a communication passage 56'b. The catalyst $C_A$ which has been heated with the heat of combustion of the char $C_X$ in the regeneration chamber 56'-2 is supplied to the fluidized bed 56'-1a in the reaction chamber 56'-1.

The raw material A is gasified in the gasification chamber 51-1 in the gasification apparatus 51, and the mixture of the generated gas $G_A$, the ash J, and the char $C_X$ is supplied to the reaction chamber 56'-1 in the fluidized-bed catalyst dedusting apparatus 56'. The generated gas $G_A$ is reformed (tar decomposition) by the catalyst $C_A$ into the product gas $G_B$, which is discharged. The combustion exhaust gas $G_C$ from the combustion chamber 51-2 in the gasification apparatus 51 is supplied to the regeneration chamber 56'-2 in the fluidized-bed catalyst dedusting apparatus 56. The combustion exhaust gas $G_C$ contributes to the heating and regeneration of the degraded catalyst $C_A'$ in the regeneration chamber 56'-2, and is then discharged.

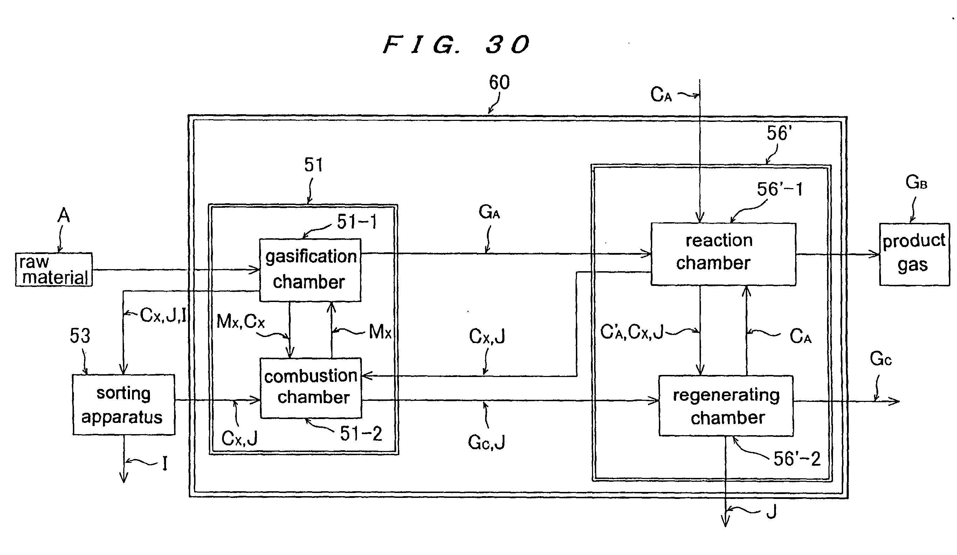

FIG. 30 is a view showing an example of a system construction of an apparatus for carrying out a combustible gas reforming method according to the present invention. The apparatus shown in FIG. 30 comprises a single integrated apparatus which integrates the gasification apparatus 51 and the fluidized-bed catalyst dedusting apparatus 56' shown in FIG. 28. As shown in FIG. 30, the gasification apparatus 51 and the fluidized-bed catalyst dedusting apparatus 56' are integrated into a single fluidized-bed furnace 60. Operation of the gasification apparatus 51 and the fluidized-bed catalyst dedusting apparatus 56' is substantially the same as the apparatus shown in FIG. 28, and will not be described in detail below.

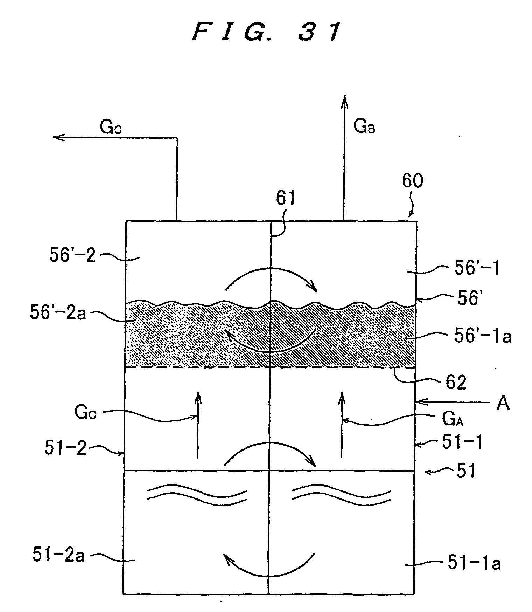

FIG. 31 is a view showing a construction of the furnace portion of the apparatus shown in FIG. 31. As shown in FIG. 31, the gasification apparatus 51 and the fluidized-bed catalyst dedusting apparatus 56' are integrated into the single fluidized-bed furnace 60, which includes the fluidized-bed catalyst dedusting apparatus 56' in its upper portion and the gasification apparatus 51 in its lower portion. The gasification chamber 51-1 and the combustion chamber 51-2 in the gasification apparatus 51, and the reaction chamber 56'-1 and the regeneration chamber 56'-2 in the fluidized-bed catalyst dedusting apparatus 56' are divided by a partition wall 61. The generated gas $G_A$ which is produced in the gasification chamber 51-1 in the gasification apparatus 51 is supplied through a distributor plate 62 at the bottom of the reaction chamber 56'-1 in the fluidized-bed catalyst dedusting apparatus 56' to the fluidized bed 56'-1a in the reaction chamber 56'-1. The combustion gas $G_C$ produced in the combustion chamber 51-2 is supplied through the distributor plate 62 at the bottom of the regeneration chamber 56'-2 to the fluidized bed 56'-2a in the regeneration chamber 56'-2.

When a raw material A is gasified in the gasification chamber 51-1 in the gasification apparatus 51, the generated gas $G_A$ is simultaneously reformed (tar decomposition) by the catalyst $C_A$. The generated gas $G_A$ is also injected through the distributor plate 62 at the bottom of the reaction chamber 56'-1 in the fluidized-bed catalyst dedusting apparatus 56' into the fluidized bed 56'-1a in the reaction chamber 56'-1. In the fluidized bed 56'-1a, the generated gas $G_A$ is brought into contact with the catalyst $C_A$, and further reformed into a completely reformed product gas $G_B$, which is then discharged. The combustion exhaust gas $G_C$ from the combustion chamber 51-2 in the gasification apparatus 51 is injected through the distributor plate 62 at the bottom of the regeneration chamber 56'-2 in the fluidized-bed catalyst dedusting apparatus 56' into the fluidized bed 56'-2a in the regeneration chamber 56'-2. The combustion exhaust gas $G_C$ is then turned into a clean combustion exhaust gas $G_C$, which is discharged.

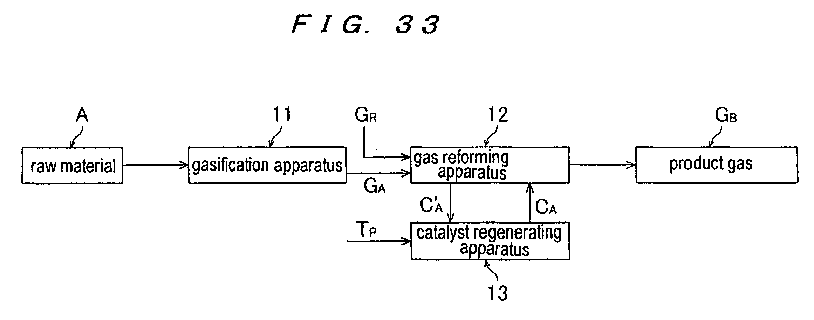

FIG. 33 is a view showing a system construction of an apparatus for carrying out a combustible gas reforming method according to the present invention. For decomposing tar by allowing the reactions of steam reforming and carbon dioxide reforming to progress, it is necessary to use a catalyst suitable for those reactions and also to provide a sufficient amount of reforming gas $G_R$ required for the reforming reactions at the inlet of a gas reforming apparatus 12. A generated gas $G_A$ from a gasification apparatus 11 usually contains $H_2O$ and $CO_2$, and $H_2O$ and $CO_2$ need to be contained at a stoichiometric ratio ranging from 1 to 3 (the stoichiometric ratio required to decompose tar is taken as 1), and hence, if necessary, as shown in FIG. 33, steam ($H_2O$ or carbon dioxide ($CO_2$ are charged as the reforming gas $G_R$ into the inlet of the gas reforming apparatus 12. The temperature in the gas reforming apparatus 12 is in the range from 700 to 1000°C, or preferably from 800 to 950°C.

In the above example, a catalyst regenerating apparatus 13 has a function to heat impurities on the catalyst $C_A$ to regenerate the catalyst $C_A$. While the function of the catalyst regenerating apparatus 13 is to heat the catalyst $C_A$, the heating of the catalyst $C_A$ is not equivalent to the regeneration of the catalyst $C_A$. The catalyst $C_A$ may need not only heating, but also some other reactions, in order to be regenerated. However, this does not necessarily mean that the catalyst $C_A$ does not need to be heated in order to be regenerated. Since certain temperatures need to be kept in the catalyst regenerating apparatus 13 and the gas reforming apparatus 12, the catalyst $C_A$ is required to receive heat in the catalyst regenerating apparatus 13. In summary, the catalyst $C_A$ which has been inactivated and degraded by depositing and adsorbing impurities in the gas reforming apparatus 12 is regenerated, and heat (maintenance of reaction temperature) required for the gas reforming apparatus 12 and the catalyst regenerating apparatus 13 is supplied.

By supplying heat to the catalyst $C_A$, the degraded catalyst $C_A'$ is regenerated. In addition, since the supplied heat is also used to keep temperatures required in the gas reforming apparatus 12 and the catalyst regenerating apparatus 13, such heat acts to heat the catalyst $C_A$. Because the reaction in the gas reforming apparatus 12 is an endothermic reaction, the heating of the catalyst $C_A$ in the catalyst regenerating apparatus 13 is important in maintaining the temperature in the gas reforming apparatus 12.

Specific regenerative reactions for regenerating the catalyst include the following reactions ① through ④ :

① Combustion (oxidizing) regeneration (regenerative gas = oxygen):

Carbon C, sulfur S, and the like deposited on the surface of the catalyst are removed by combustion. This reaction is an exothermic reaction as indicated below.

$$C + O_2 \rightarrow CO_2$$

$$S + O_2 \rightarrow SO_2$$

This reaction is a reaction to remove, by way of combustion, carbon that is generated by a side reaction of the above cracking reaction. The same regenerative process may be considered for sulfur S. Although this reaction is certainly required, oxygen ($O_2$) is also required as a regenerative gas. Oxygen may be pure oxygen, air, an exhaust gas containing residual oxygen, or the like. Since the reaction is an exothermic reaction, the generated heat may be used as a heat source.

② Hydrogenation regeneration (regenerative gas = hydrogen):

A catalyst which has been oxidized, chlorinated, or sulfurated is regenerated by way of reduction ($C_A$ represents the catalyst, typically a transition metal such as Pt or the like). This reaction is an endothermic reaction as indicated below.

$$C_A Cl + 0.5H_2 \rightarrow C_A + HCl$$

$$C_A S + H_2 \rightarrow C_A + SO_2$$

$$C_A O + H_2 \rightarrow C_A + H_2 O$$

This reaction serves to regenerate the catalyst by way of hydrogenation. The catalyst (transition metal such as Pt or the like in the catalyst) which has been oxidized, chlorinated or sulfurated is converted into a metal in a reduced state by reduction in a hydrogen-containing gas, thereby regenerating the catalyst.

③ Steam regeneration (regenerative gas = steam):

A catalyst which has chlorinated or sulfurated is regenerated by way of reduction ($C_A$ represents the catalyst, typically Ca, Al, Si, or Mg). This reaction is an endothermic reaction as indicated below.

$$C_A Cl_2 + H_2 O \rightarrow C_A O + 2HCl$$

$$C_A S + H_2 O \rightarrow C_A O + H_2 S$$

This reaction serves to regenerate the catalyst by way of hydrogenation. The catalyst which has chlorinated or sulfurated is regenerated by way of reduction in the same manner as the above process ②.

④ Heating regeneration (regenerative gas = high-temperature exhaust gas or the like):

Low-melting-point metals (Na, K, Pb, Hg, etc.) melted on the surface of the catalyst are removed by heating evaporation. This reaction is an endothermic reaction.

In the above embodiment, the heat source of the gas reforming apparatus 12 is process waste heat $T_P$, specifically, the sensible heat of the combustion exhaust gas $G_C$ that is produced by combusting the char $C_X$. However, the heat source of the gas reforming apparatus 12 is not limited to the above heat, but may be the heat generated upon the combustion (oxidizing) regeneration ① (heat generated when carbon C, sulfur S, etc. are combusted), the heat generated when part of the generated gas is combusted, or a combination of these heats. Alternatively, the quantity of heat held by the raw material itself may be used so as not to use any auxiliary fuels.

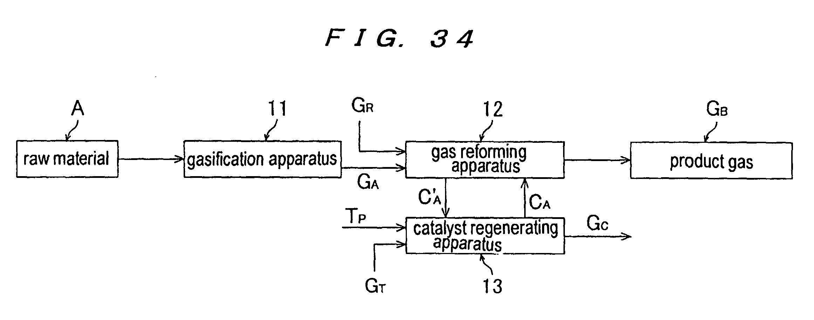

FIG. 34 is a view showing a system construction of an apparatus for carrying out a combustible gas reforming method according to the present invention. As shown in FIG. 34, the catalyst regenerating apparatus 13 is supplied with process waste heat $T_P$ and a regenerative gas $G_T$, and emits a combustion exhaust gas $G_C$. The regenerative gas $G_T$ comprises oxygen ($O_2$) (pure oxygen, air, or exhaust gas), hydrogen ($H_2$) (pure hydrogen, hydrogen-containing off-gas, or the like), or steam ($H_2O$). The catalyst $C_A$ is regenerated by any of the regenerating processes ① through ④. The temperature in the catalyst regenerating apparatus 13 is in the range from 800 to 1000°C, or preferably from 900 to 1000°C.

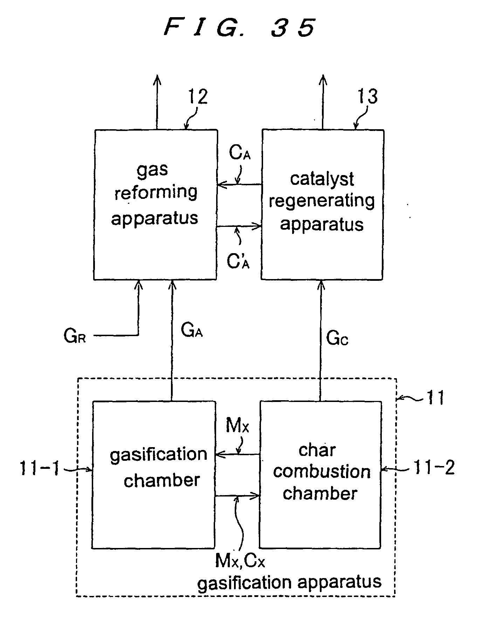

FIG. 35 is a view showing an example of a construction of a catalyst regenerating and gas reforming apparatus in which the sensible heat of the combustion exhaust gas $G_C$ is employed. A gasification apparatus 11 comprises a gasification chamber 11-1 and a char combustion chamber 11-2. A bed material $M_X$ and char $C_X$ are supplied from the gasification chamber 11-1 to the char combustion chamber 11-2. The bed material $M_X$ is supplied from the char combustion chamber 11-2 to the gasification chamber 11-1. A gas reforming apparatus 12 is supplied with a reforming gas $G_R$ and also with a generated gas $G_A$ from the gasification chamber 11-1. A catalyst regenerating apparatus 13 is supplied with a combustion exhaust gas $G_C$ from the char combustion chamber 11-2. A degraded catalyst $C_A$' is supplied from the gas reforming apparatus 12 to the catalyst regenerating apparatus 13, and a regenerated catalyst $C_A$ is supplied from the catalyst regenerating apparatus 13 to the gas reforming apparatus 12. The catalyst regenerating process may be used for the combustion (oxidizing) regeneration or the heating regeneration.

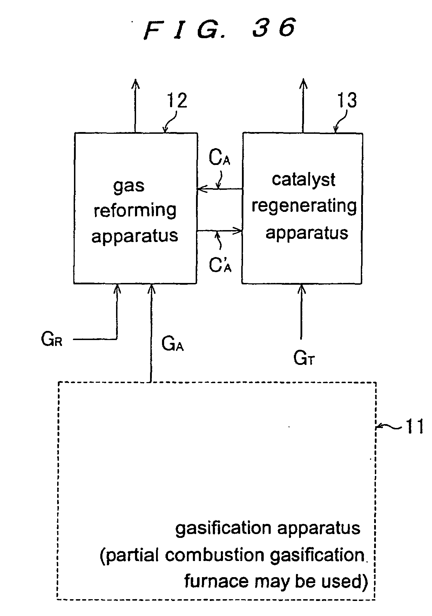

FIG. 36 is a view showing an example of a construction of a catalyst regenerating and gas reforming apparatus in which the heat of the regenerative reaction is employed. The catalyst regenerating apparatus 13 is supplied with the regenerative gas $G_T$, which regenerates the catalyst (combustion regeneration by oxygen-containing gas). The catalyst regenerating apparatus 13 thus regenerates the catalyst and serves as a heat source. In this case, since it is not necessary to use the combustion exhaust gas $G_C$ that is generated by combusting the char $C_X$, the gasification apparatus 11 may comprise a partial combustion gasification furnace. The catalyst regenerating process may be used for the combustion (oxidizing) regeneration only.

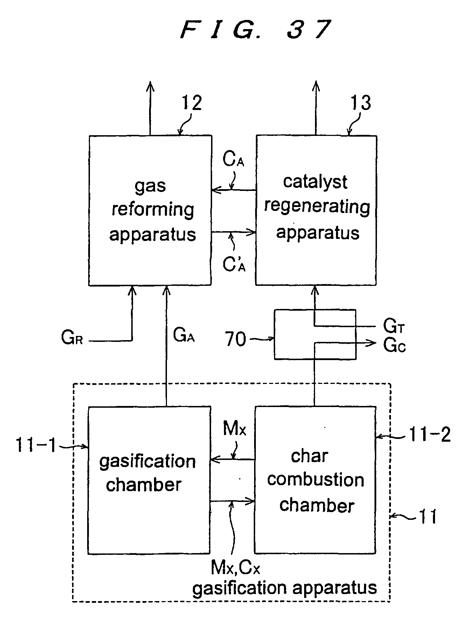

FIG. 37 is a view showing an example of a construction of a catalyst regenerating and gas reforming apparatus in which both the sensible heat of the combustion exhaust gas $G_C$ and the heat of the regenerative reaction are employed. The gas reforming apparatus 12 is supplied with the reforming gas $G_R$ and also with the generated gas $G_A$ from the gasification chamber 11-1. The regenerative gas $G_T$ to be supplied to the catalyst regenerating apparatus 13 exchanges heat with the combustion exhaust gas $G_C$ from the char combustion chamber 11-2 in a heat exchanger 70, and hence is heated and supplied to the catalyst regenerating apparatus 13. The heat exchanger 70 for heating the regenerative gas $G_T$ comprises a high-temperature heat exchanger made of special cast steel or ceramics that can be used in a temperature range of 700 to 1000°C. The catalyst regenerating process may be used for the combustion (oxidizing) regeneration, the hydrogenation regeneration, or the steam regeneration.

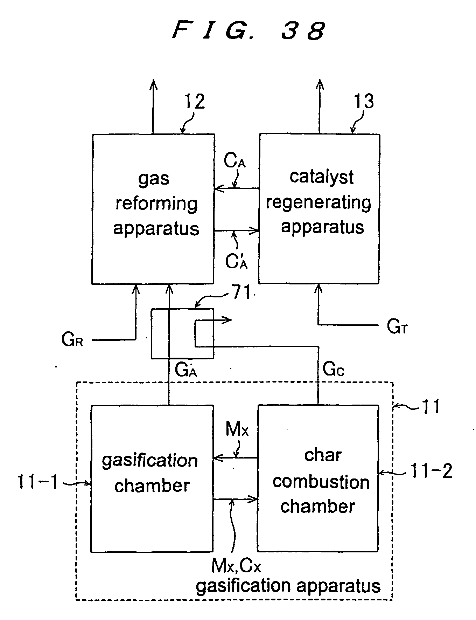

FIG. 38 is a view showing an example of a construction of a catalyst regenerating and gas reforming apparatus in which the sensible heat of the combustion exhaust gas $G_C$ and the heat of the regenerative reaction are employed. The gas reforming apparatus 12 is supplied with the reforming gas $G_R$ and also with the generated gas $G_A$ from the gasification chamber 11-1. The generated gas $G_A$ exchanges heat with the combustion exhaust gas $G_C$ from the char combustion chamber 11-2 in a heat exchanger 71, and hence is heated and supplied to the gas reforming apparatus 12. The catalyst regenerating apparatus 13 is supplied with the regenerative gas $G_T$. The heat exchanger 71 for heating the generated gas $G_A$ comprises a high-temperature heat exchanger made of special cast steel or ceramics that can be used in a reducing atmosphere in a temperature range of 700 to 1000°C. The catalyst regenerating process may be used for the combustion (oxidizing) regeneration, the hydrogenation regeneration, or the steam regeneration.

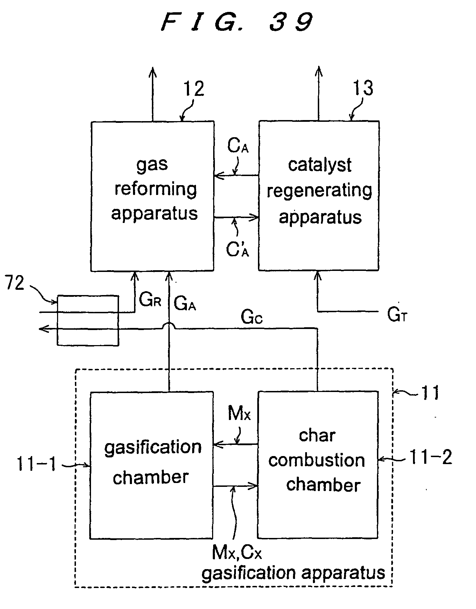

FIG. 39 is a view showing an example of a construction of a catalyst regenerating and gas reforming apparatus in which the sensible heat of the combustion exhaust gas $G_C$ and the heat of the regenerative reaction are employed. The reforming gas $G_R$ that is supplied to the gas reforming apparatus 12 exchanges heat with the combustion exhaust gas $G_C$ from the char combustion chamber 11-2 in a heat exchanger 72, and hence is heated and supplied to the gas reforming apparatus 12. The gas reforming apparatus 12 is supplied with the generated gas $G_A$ from the gasification chamber 11-1. The catalyst regenerating apparatus 13 is supplied with the regenerative gas $G_T$. The heat exchanger 72 for heating the reforming gas $G_R$ comprises a high-temperature heat exchanger made of special cast steel or ceramics that can be used in a temperature range of 700 to 1000°C. The catalyst regenerating process may be used for the combustion (oxidizing) regeneration, the hydrogenation regeneration, or the steam regeneration.

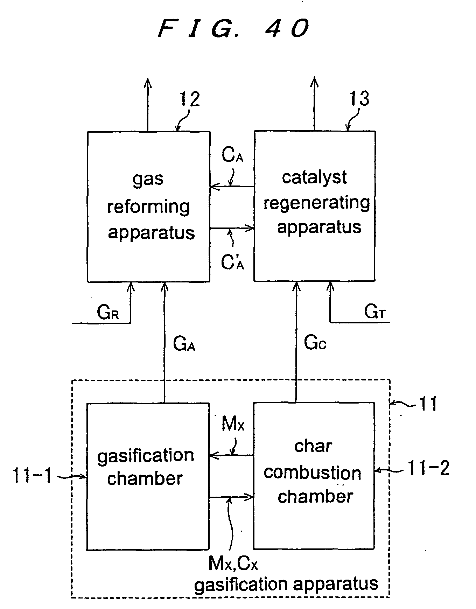

FIG. 40 is a view showing an example of a construction of a catalyst regenerating and gas reforming apparatus in which the sensible heat of the combustion exhaust gas $G_C$ and the heat of the regenerative reaction are employed. The gas reforming apparatus 12 is supplied with the reforming gas $G_R$ and also with the generated gas $G_A$ from the gasification chamber 11-1. The catalyst regenerating apparatus 13 is supplied with the regenerative gas $G_T$ and also with the combustion exhaust gas $G_C$ from the char combustion chamber 11-2. The catalyst regenerating process may be used for the combustion (oxidizing) regeneration, the hydrogenation regeneration, or the steam regeneration.

Any apparatus shown in FIGS. 37, 38, 39, and 40 may be used in the combustion (oxidizing) regeneration process, the hydrogenation regeneration process, and the steam regeneration process. However, since the hydrogenation regeneration process and the steam regeneration process are based on an endothermic reaction and do not serve as a heat source, they are effective only when the sensible heat of the combustion exhaust gas $G_C$ is sufficient in quality. In the combination of the heat of the regenerating reaction and another heat source, even an endothermic reaction such as the hydrogenation regeneration is effective as a process if heat is supplemented with another heat source, and hence the process is practical even when the heat of the regenerative reaction acts negatively.

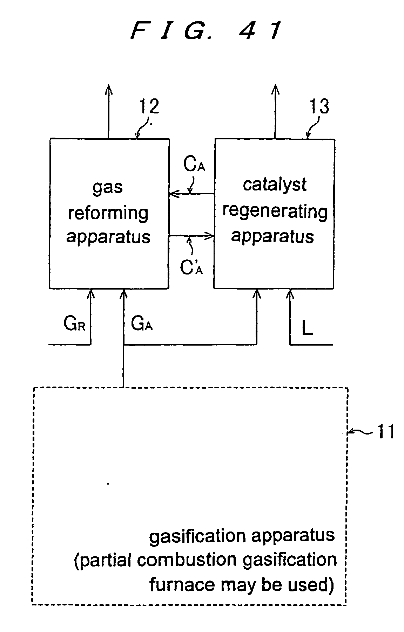

FIG. 41 is a view showing an example of a construction of a catalyst regenerating and gas reforming apparatus in which the heat of combustion of the generated gas is employed. The catalyst regenerating apparatus 13 is supplied with part of the generated gas $G_A$ from the gasification apparatus 11 and also with air L ($O_2$). In the catalyst regenerating apparatus 13, the degraded catalyst $C_A'$ is regenerated with heat by removing metals (Na, K, Pb, Hg, etc.) having low melting point melted on the surface of the catalyst by way of heating evaporation.

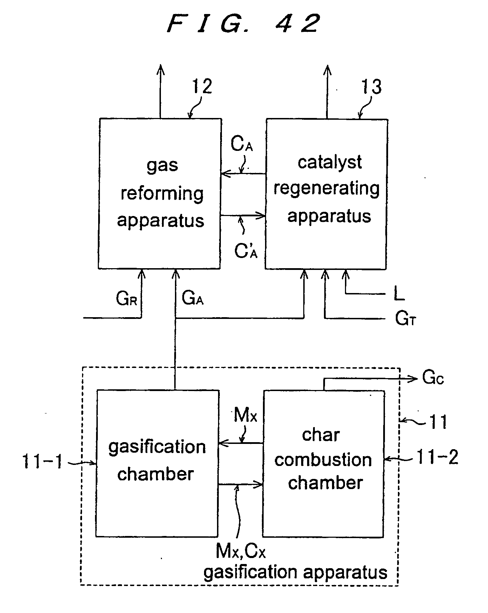

FIG. 42 is a view showing an example a construction of a catalyst regenerating and gas reforming apparatus in which the heat of the regenerative reaction and the heat of combustion of the generated gas are employed. The gas reforming apparatus 12 is supplied with the reforming gas $G_R$ and also with part of the generated gas $G_A$ from the gasification apparatus 11. The catalyst regenerating apparatus 13 is supplied with part of the generated gas $G_A$ from the gasification apparatus 11 and also with the regenerative gas $G_T$ and air L ($O_2$). The catalyst regenerating process may be used for the combustion (oxidizing) regeneration, the hydrogenation regeneration, or the steam regeneration.

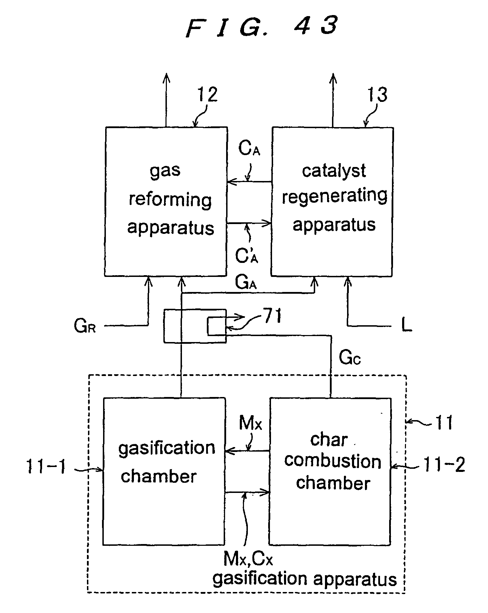

FIG. 43 is a view showing an example of a construction of a catalyst regenerating and gas reforming apparatus in which the sensible heat of the combustion exhaust gas $G_C$ and the heat of combustion of the generated gas are employed. The gas reforming apparatus 12 is supplied with the reforming gas $G_R$ and also with the generated gas $G_A$ from the gasification chamber 11-1. The generated gas $G_A$ exchanges heat with the combustion exhaust gas $G_C$ from the char combustion chamber 11-2 in the heat exchanger 71, and hence is heated and supplied. The catalyst regenerating apparatus 13 is supplied with part of the generated gas $G_A$ which has been heated by the heat exchanger 71 and also with air L ($O_2$). The catalyst regenerating process may be used for the heating regeneration.

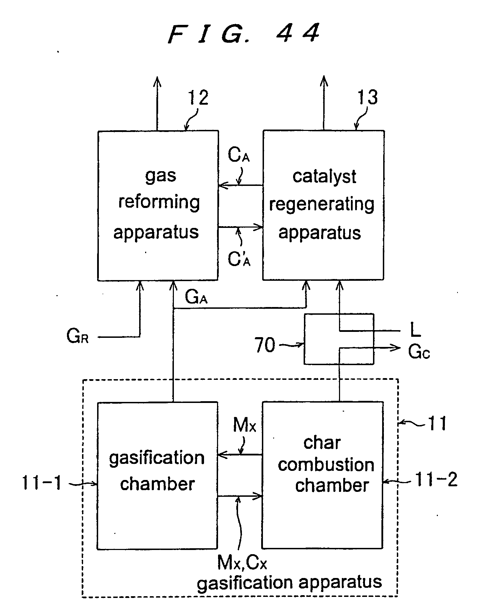

FIG. 44 is a view showing an example of a construction of a catalyst regenerating and gas reforming apparatus in which both the sensible heat of the combustion exhaust gas $G_C$ and the heat of combustion of the generated gas are employed. The gas reforming apparatus 12 is supplied with the reforming gas $G_R$ and also with part of the generated gas $G_A$ from the gasification chamber 11-1. The catalyst regenerating apparatus 13 is supplied with part of the generated gas $G_A$ from the gasification apparatus 11 and also with air L ($O_2$). The air L ($O_2$) is heated by the combustion exhaust gas $G_C$ from the char combustion chamber 11-2 in the heat exchanger 70. The catalyst regenerating process may be used for the heating regeneration.

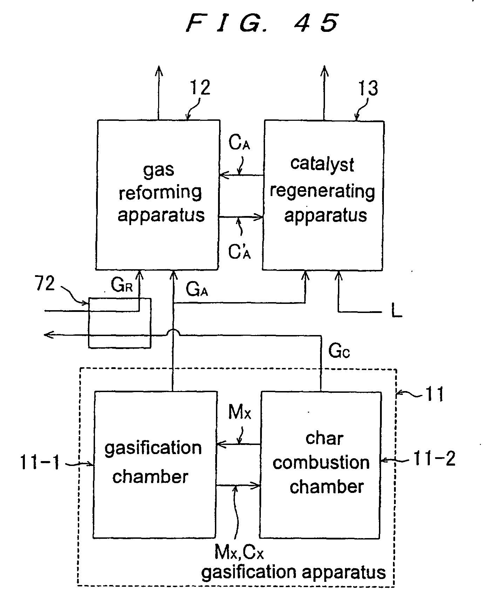

FIG. 45 is a view showing an example of a construction of a catalyst regenerating and gas reforming apparatus in which the sensible heat of the combustion exhaust gas $G_C$ and the heat of combustion of the generated gas are employed. The gas reforming apparatus 12 is supplied with the reforming gas $G_R$ that has been heated by the combustion exhaust gas $G_C$ from the char combustion chamber 11-2 in the heat exchanger 72, and also with part of the generated gas $G_A$ from the gasification chamber 11-1. The catalyst regenerating apparatus 13 is supplied with part of the generated gas $G_A$ from the gasification chamber 11-1 and also with air L ($O_2$). The catalyst regenerating process may be used for the heating regeneration.

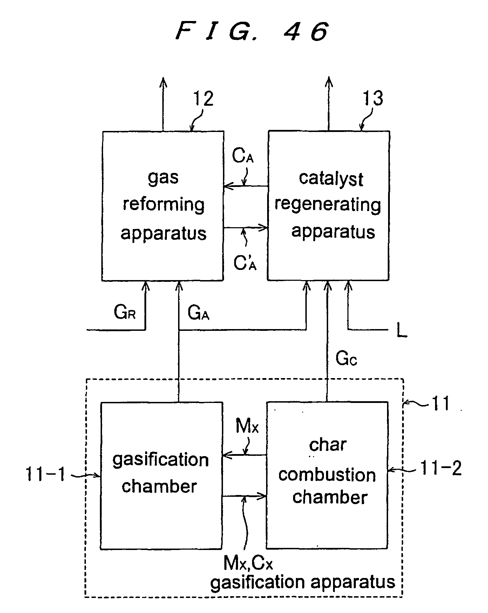

FIG. 46 is a view showing an example of a construction of a catalyst regenerating and gas reforming apparatus in which the sensible heat of the combustion exhaust gas and the heat of combustion of the generated gas are employed. The gas reforming apparatus 12 is supplied with the reforming gas $G_R$ and also with part of the generated gas $G_A$ from the gasification chamber 11-1. The catalyst regenerating apparatus 13 is supplied with part of the generated gas $G_A$ from the gasification chamber 11-1 and also with the combustion exhaust gas $G_C$ from the char combustion chamber 11-2 and air L ($O_2$). The catalyst regenerating process may be used for the heating regeneration.

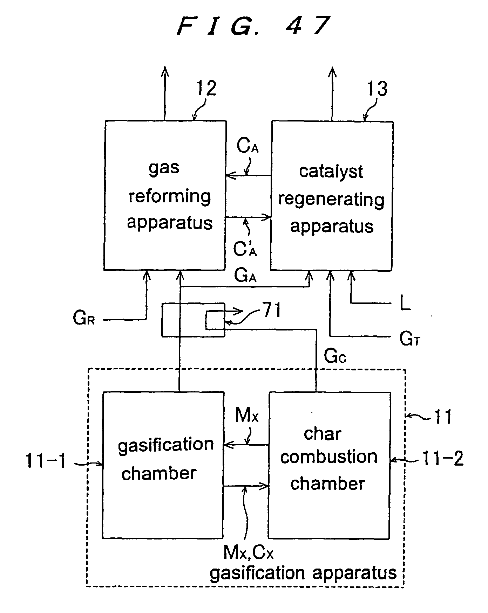

FIG. 47 is a view showing an example of a construction of a catalyst regenerating and gas reforming apparatus in which the heat of combustion of the generated gas, the sensible heat of the combustion exhaust gas $G_C$, and the heat of the regenerative reaction are employed. The gas reforming apparatus 12 is supplied with the reforming gas $G_R$ and also with part of the generated gas $G_A$ from the gasification chamber 11-1. The generated gas $G_A$ exchanges heat with the combustion exhaust gas $G_C$ from the char combustion chamber 11-2 in the heat exchanger 71, and hence is heated and supplied. The catalyst regenerating apparatus 13 is supplied with part of the generated gas $G_A$ which has been heated and also with the regenerative gas $G_T$ and air L ($O_2$). The catalyst regenerating process may be used for the combustion (oxidizing) regeneration, the hydrogenation regeneration, or the steam regeneration.

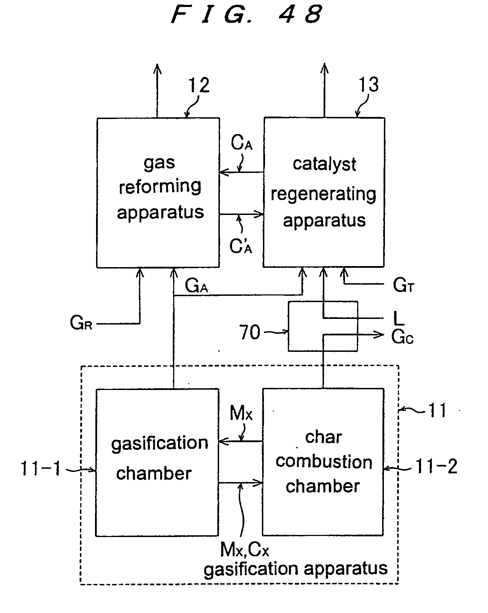

FIG. 48 is a view showing an example of a construction of a catalyst regenerating and gas reforming apparatus in which the heat of combustion of the generated gas, the sensible heat of the combustion exhaust gas $G_C$, and the heat of the regenerative reaction are employed. The gas reforming apparatus 12 is supplied with the reforming gas

$G_R$ and also with part of the generated gas $G_A$ from the gasification chamber 11-1. The catalyst regenerating apparatus 13 is supplied with the regenerative gas $G_T$ and air L $(O_2)$ that has been heated by a heat exchange with the combustion exhaust gas $G_C$ from the char combustion chamber 11-2 in the heat exchanger 70. The catalyst regenerating process may be used for the combustion (oxidizing) regeneration, the hydrogenation regeneration, or the steam regeneration.

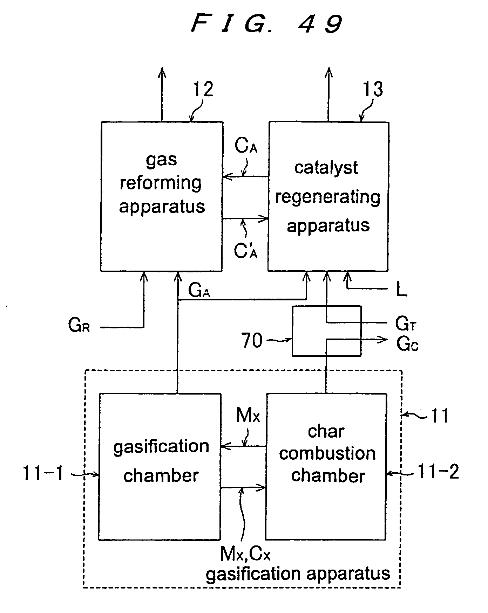

FIG. 49 is a view showing an example of a construction of a catalyst regenerating and gas reforming apparatus in which the heat of combustion of the generated gas, the sensible heat of the combustion exhaust gas $G_C$, and the heat of the regenerative reaction are employed. The gas reforming apparatus 12 is supplied with the reforming gas $G_R$ and also with part of the generated gas $G_A$ from the gasification chamber 11-1. The catalyst regenerating apparatus 13 is supplied with air L $(O_2)$ and the regenerative gas $G_T$ that has been heated by a heat exchange with the combustion exhaust gas $G_C$ from the char combustion chamber 11-2 in the heat exchanger 70. The catalyst regenerating process may be used for the heating regeneration.

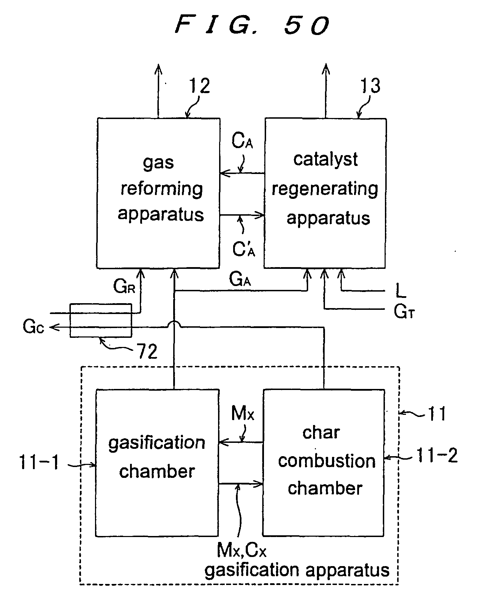

FIG. 50 is a view showing an example of a construction of a catalyst regenerating and gas reforming apparatus in which the heat of combustion of the generated gas, the sensible heat of the combustion exhaust gas $G_C$, and the heat of the regenerative reaction are employed. The gas reforming apparatus 12 is supplied with the reforming gas $G_R$ that has been heated by a heat exchange with the combustion exhaust gas $G_C$ from the char combustion chamber 11-2 in the heat exchanger 72 and also with part of the generated gas $G_A$ from the gasification chamber 11-1. The catalyst regenerating apparatus 13 is supplied with part of the generated gas $G_A$, air L $(O_2)$, and the regenerative gas $G_T$. The catalyst regenerating process may be used for the heating regeneration.

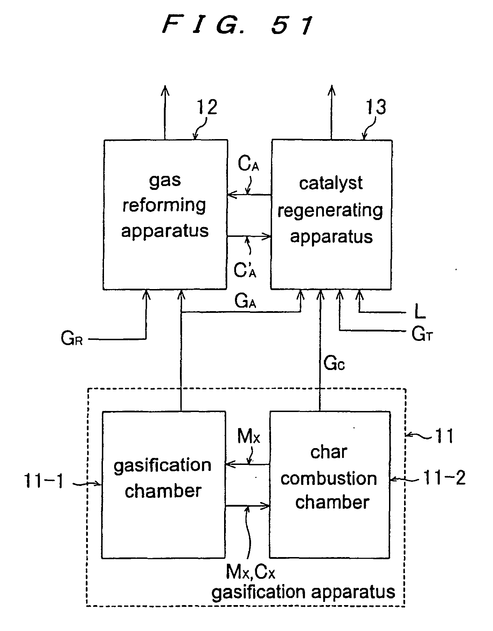

FIG. 51 is a view showing an example of a construction of a catalyst regenerating and gas reforming apparatus in which the heat of combustion of the generated gas, the sensible heat of the combustion exhaust gas $G_C$, and the heat of the regenerative reaction are employed. The gas reforming apparatus 12 is supplied with the reforming gas $G_R$ and also with part of the generated gas $G_A$ from the gasification chamber 11-1. The catalyst regenerating apparatus 13 is supplied with part of the generated gas $G_A$, air L $(O_2)$, the regenerative gas $G_T$, and the combustion exhaust gas $G_C$ from the char combustion chamber 11-2. The catalyst regenerating process may be used for the heating regeneration.

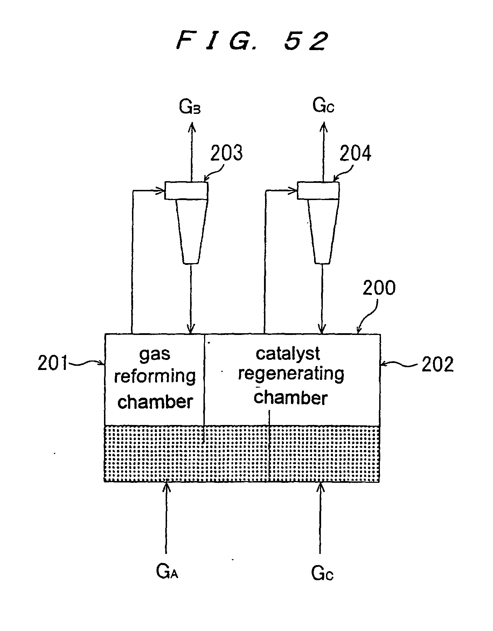

The catalyst that is degraded in the gas reforming apparatus needs to be regenerated by the catalyst regenerating apparatus. Therefore, it is necessary for the catalyst particles to circulate continuously or intermittently. In the above embodiments, as shown in FIG. 52, a gas reforming chamber 201 and a catalyst regeneration chamber 202 are integrated into a fluidized bed 200. However, the catalyst regenerating and gas reforming apparatus is also available in configurations described below. In FIG. 52, reference numerals 203, 204 represent cyclone-type dust collectors, and the gas reforming chamber 201 is supplied with the generated gas $G_A$ from its bottom and the catalyst regeneration chamber 202 is supplied with the combustion exhaust gas $G_C$ from its bottom.

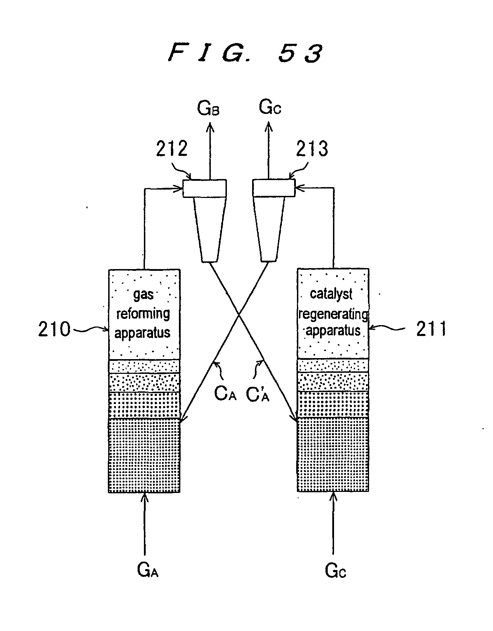

FIG. 53 is a view showing an example of a construction of a catalyst regenerating and gas reforming apparatus. The catalyst regenerating and gas reforming apparatus shown in FIG. 53 comprises a bed material circulation dual fluidized bed system having a gas reforming apparatus 210 and a catalyst regenerating apparatus 211 each comprising an entrained bed. In the respective layers of the gas reforming apparatus 210 and the catalyst regenerating apparatus 211, a gas is supplied to each column at a superficial velocity that is required for the catalyst particles to move at a terminal velocity. The degraded catalyst (particles) $C_A'$ which flies out from the gas reforming apparatus 210 is separated from the product gas $G_B$ in a cyclone-type dust collector 212, and is then supplied to the catalyst regenerating apparatus 211. The regenerated catalyst (particles) $C_A$ which flies out from the catalyst regenerating apparatus 211 is separated from the combustion exhaust gas $G_C$ in a cyclone-type dust collector 213, and is then supplied to the gas reforming apparatus 210. In this manner, the catalyst particles are continuously circulated between the two columns.

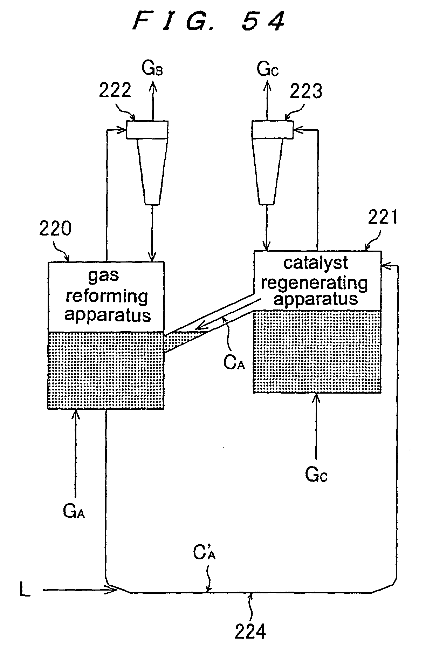

FIG. 54 is a view showing an example of a construction of a catalyst regenerating and gas reforming apparatus. The catalyst regenerating and gas reforming apparatus shown in FIG. 54 comprises a bed material circulation dual fluidized bed system having a gas reforming apparatus 220 and a catalyst regenerating apparatus 221 each comprising a dense fluidized bed. The catalyst $C_A$ heated and regenerated by the catalyst regenerating apparatus 221 overflows the catalyst regenerating apparatus 221 into the gas reforming apparatus 220. The degraded catalyst $C_A'$ is removed from the bottom of the gas reforming apparatus 220 and delivered by pneumatic transportation 224 to the catalyst regenerating apparatus 221. The pneumatic transportation 224 comprises air L or the like having a pressure suitable for delivering the degraded catalyst $C_A'$. The catalyst (particles) $C_A'$ which flies out from the gas reforming apparatus 220 is separated from the product gas $G_B$ in a cyclone-type dust collector 222, and returned to the gas reforming apparatus 220. The regenerated catalyst (particles) $C_A$ which flies out from the catalyst regenerating apparatus 221 is separated from combustion exhaust gas $G_C$ in a cyclone-type dust collector 223, and returned to the catalyst regenerating apparatus 221. In this manner, the catalyst particles are continuously circulated between the two columns.

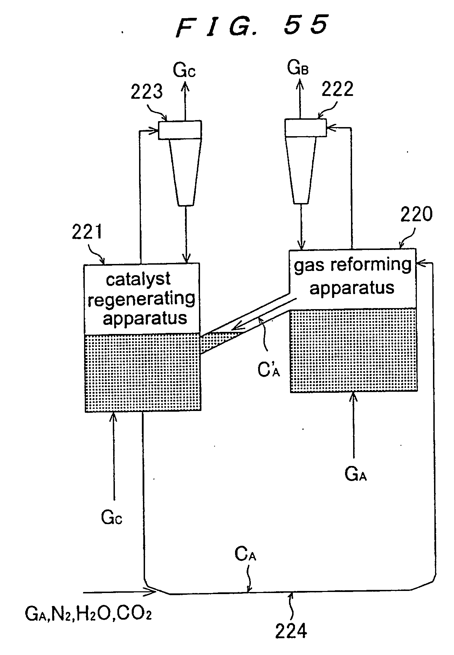

FIG. 55 is a view showing an example of a construction of a catalyst regenerating and gas reforming apparatus. The catalyst regenerating and gas reforming apparatus shown in FIG. 55 is of a design similar to the catalyst regenerating and gas reforming apparatus shown in FIG. 54, but differs therefrom in that the degraded catalyst (particles) $C_A'$ from the gas reforming apparatus 220 overflows into the catalyst regenerating apparatus 221, and the catalyst $C_A$

which is heated and regenerated by the catalyst regenerating apparatus 221 is delivered by the pneumatic transportation 224 to the gas reforming apparatus 220. The pneumatic transportation 224 comprises the generated gas $G_A$, a nitrogen gas ($N_2$), steam ($H_2O$), carbon dioxide ($CO_2$), or a combustible gas such as propane gas or the like having a pressure suitable for delivering the catalyst $C_A$.

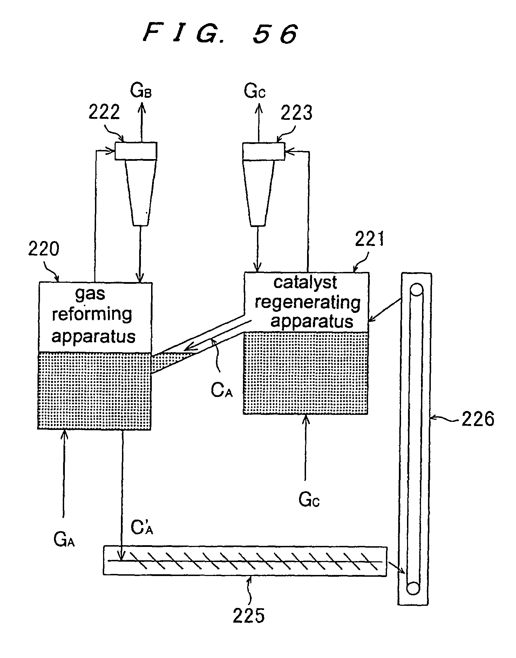

FIG. 56 is a view showing an example of a construction of a catalyst regenerating and gas reforming apparatus. The catalyst regenerating and gas reforming apparatus shown in FIG. 56 comprises a bed material circulation dual fluidized bed system having a gas reforming apparatus 220 and a catalyst regenerating apparatus 221 each comprising a dense fluidized bed. The catalyst $C_A$ heated and regenerated by the catalyst regenerating apparatus 221 overflows into the gas reforming apparatus 220, as with the catalyst regenerating and gas reforming apparatus shown in FIG. 54. The catalyst $C_A'$ degraded in the gas reforming apparatus 220 is removed from the bottom of the gas reforming apparatus 220 and delivered to the catalyst regenerating apparatus 221 by a mechanical feeding means such as a screw conveyor 225 and an elevator 226.

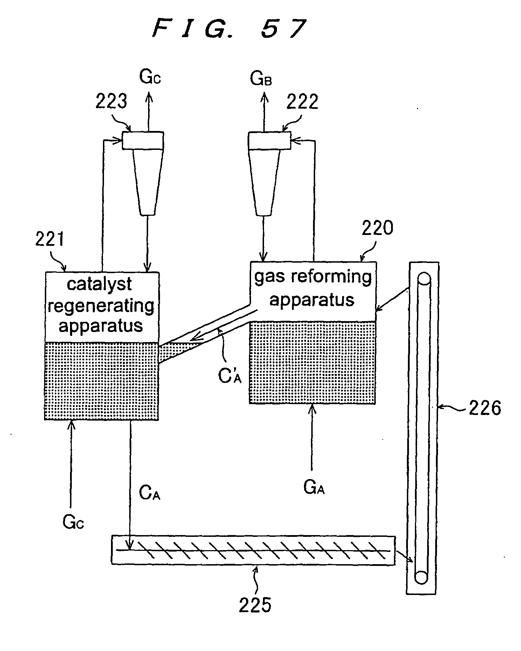

FIG. 57 is a view showing an example of a construction of a catalyst regenerating and gas reforming apparatus. The catalyst regenerating and gas reforming apparatus shown in FIG. 57 is similar to the catalyst regenerating and gas reforming apparatus shown in FIG. 56, but differs therefrom in that the degraded catalyst $C_A'$ from the gas reforming apparatus 220 overflows into the catalyst regenerating apparatus 221, and the catalyst $C_A$ heated and regenerated by the catalyst regenerating apparatus 221 is removed from the bottom of the catalyst regenerating apparatus 221 and delivered to the gas reforming apparatus 220 by a mechanical feeding means such as a screw conveyor 225 and an elevator 226.

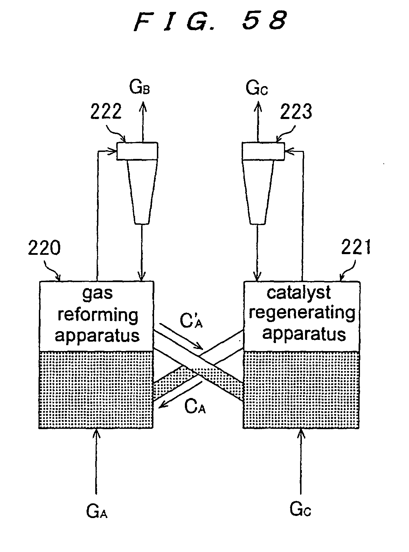

FIG. 58 is a view showing an example of a construction of a catalyst regenerating and gas reforming apparatus. The catalyst regenerating and gas reforming apparatus shown in FIG. 58 comprises a bed material circulation dual fluidized bed system having a gas reforming apparatus 220 and a catalyst regenerating apparatus 221 each comprising a dense fluidized bed. The degraded catalyst $C_A'$ from the gas reforming apparatus 220 overflows into the catalyst regenerating apparatus 221, and the catalyst $C_A$ heated and regenerated by the catalyst regenerating apparatus 221 also overflows into the gas reforming apparatus 220.

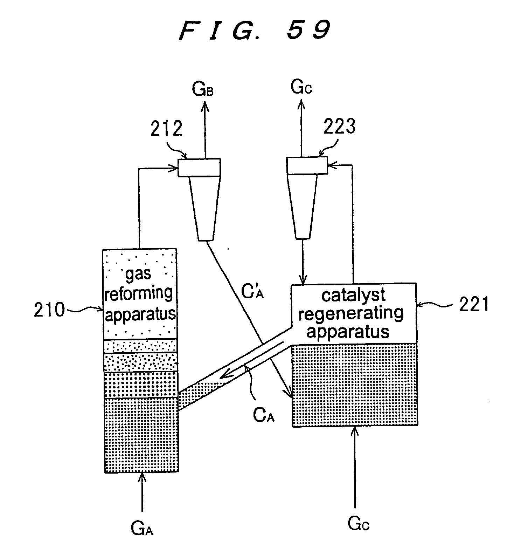

FIG. 59 is a view showing an example of a construction of a catalyst regenerating and gas reforming apparatus. The catalyst regenerating and gas reforming apparatus shown in FIG. 59 comprises a bed material circulation dual fluidized bed system having a gas reforming apparatus 210 comprising an entrained bed and a catalyst regenerating apparatus 221 comprising a dense fluidized bed. The degraded catalyst (particles) $C_A'$ which flies out from the gas reforming apparatus 210 is separated from the product gas $G_B$ in the cyclone-type dust collector 212, and is then supplied to the catalyst regenerating apparatus 221. The catalyst $C_A$ heated and regenerated by the catalyst regenerating apparatus 221 overflows into the gas reforming apparatus 210.

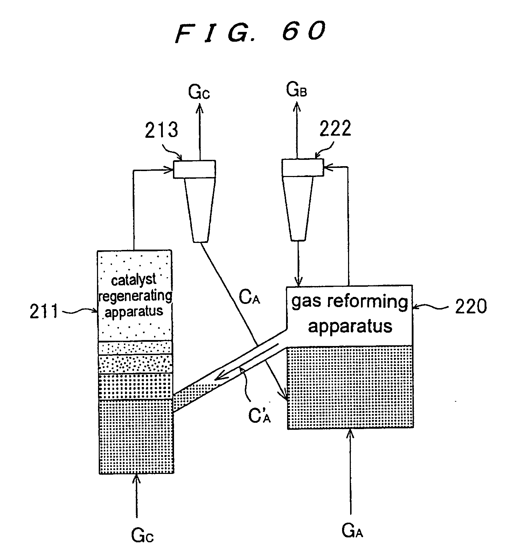

FIG. 60 is a view showing an example of a construction of a catalyst regenerating and gas reforming apparatus. The catalyst regenerating and gas reforming apparatus shown in FIG. 60 is similar to the catalyst regenerating and gas reforming apparatus shown in FIG. 59, but differ therefrom in that the gas reforming apparatus 220 comprises a dense fluidized bed and the catalyst regenerating apparatus 211 comprises an entrained bed. The heated and regenerated catalyst $C_A$ which flies out from the catalyst regenerating apparatus 211 is separated from the combustion exhaust gas $G_C$ in the cyclone-type dust collector 213, and is then delivered to the gas reforming apparatus 220. The degraded catalyst $C_A'$ from the gas reforming apparatus 220 overflows into the catalyst regenerating apparatus 211.

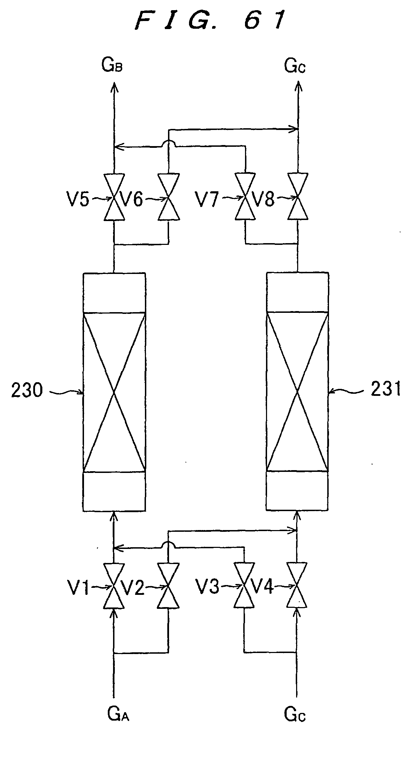

FIG. 61 is a view showing an example of a construction of a catalyst regenerating and gas reforming apparatus. The catalyst regenerating and gas reforming apparatus shown in FIG. 61 comprises a fixed bed switching system having catalyst beds 230, 231. Each of the catalyst may be particulate, cylindrical, or honeycomb-shaped. When the catalyst bed 230 is used as a gas reforming apparatus and is supplied with the generated gas $G_A$, the other catalyst bed 231 is used as a catalyst regenerating apparatus and is supplied with the combustion exhaust gas $G_C$. When the catalyst $C_A$ of the catalyst bed 230 becomes inactive upon elapse of a certain period of time, the catalyst bed 230 is supplied with the combustion exhaust gas $G_C$ to regenerate the degraded catalyst $C_A'$, and the catalyst bed 231 is supplied with the generated gas $G_A$ to reform the generated gas $G_A$. Switching between the generated gas $G_A$ and the combustion exhaust gas $G_C$ is performed by operating valves V1 through V8.

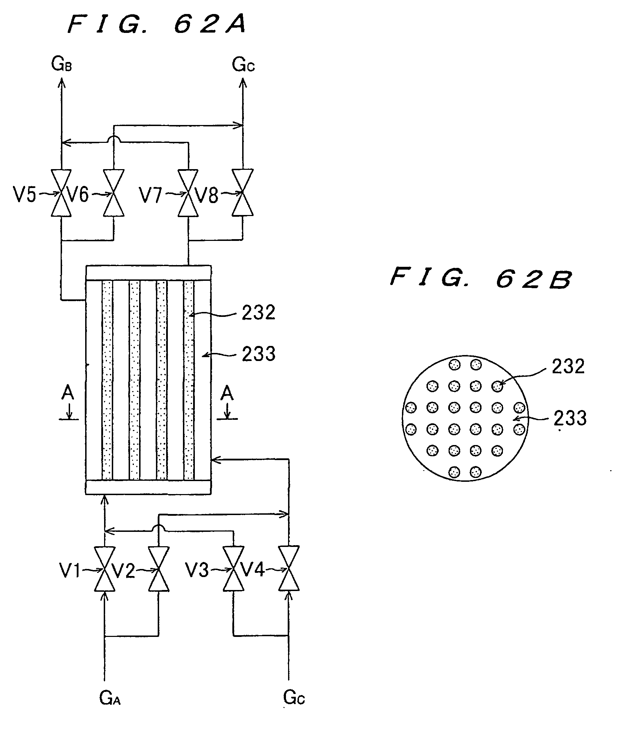

In the catalyst regenerating and gas reforming apparatus shown in FIG. 61, the catalyst is regenerated intermittently. Though no problem arises by intermittently regenerating the catalyst, since an exchange of heat is required, if the heat capacity of the catalyst is not sufficient, then the catalyst beds 230, 231 should comprise not only a catalyst, but also a heat storage such as ceramic or the like, or should comprise, as shown in FIGS. 62A and 62B, two catalyst beds 232, 233 having wide areas held in contact with each other so as to prevent the generated gas $G_A$ and the combustion exhaust gas $G_C$ from being mixed with each other, thereby performing heat conduction therebetween. FIG. 62A is a vertical cross-sectional view of the catalyst regenerating and gas reforming apparatus, and FIG. 62B is a cross-sectional view taken along line A - A of FIG. 62A.

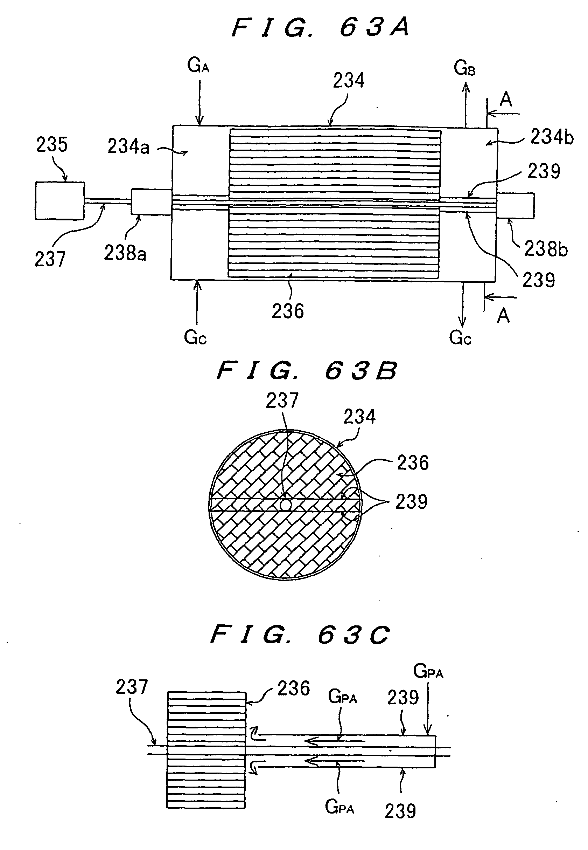

FIGS. 63A through 63C are views showing an example of a construction of a catalyst regenerating and gas reforming apparatus. The catalyst regenerating and gas reforming apparatus shown in FIGS. 63A through 63C comprises a rotary fixed-bed system. A cylindrical casing 234 houses a honeycomb-shaped packed bed (cylindrical) 236 of catalyst particles which is rotatably supported by a rotational shaft 237. Chambers 234a, 234b are defined respectively in opposite ends of the casing 234. Each of the chambers 234a, 234b is divided into upper and lower compartments by two partition plates 239 that are disposed so as to sandwich the rotational shaft 237. The packed bed 236 of catalyst particles can be rotated by an actuator 235.

The upper compartment of the chamber 234a is supplied with the generated gas $G_A$, and the lower compartment of the chamber 234a is supplied with the combustion exhaust gas $G_C$. The reformed product gas $G_B$ is discharged from the upper compartment of the chamber 234b, and the combustion exhaust gas $G_C$ is discharged from the lower compartment of the chamber 234b. A purge gas $G_{PA}$ such as a nitrogen gas ($N_2$) or the like is caused to flow between the partition plates 239 to prevent the generated gas $G_A$ and the combustion exhaust gas $G_C$ from being mixed with each other. The packed bed 236 of catalyst particles has an upper half that serves as a gas reforming region at all times, and a lower half that serves as a catalyst regenerating region at all times. The catalyst of the packed bed 236 is semicontinuously regenerated. In this case, if the heat capacity of the catalyst is not sufficient, then it is necessary that a heat storage be provided in a portion of the packed bed 236 to perform a heat transfer between the gas reforming region and the catalyst regenerating region. FIG. 63A is a vertical cross-sectional view of the catalyst regenerating and gas reforming apparatus. FIG. 63B is a cross-sectional view taken along line A - A of FIG. 63A. FIG. 63C is a view illustrative of the manner in which the purging gas $G_{PA}$ flows.

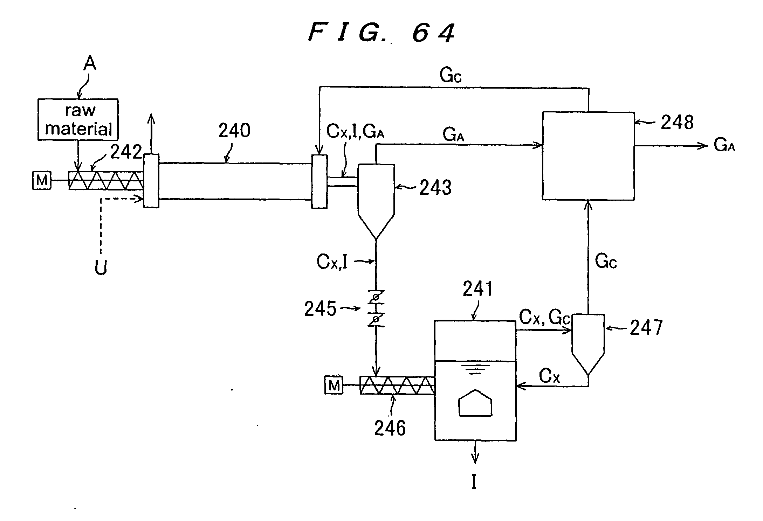

FIG. 64 is a view showing an example of a system construction of a gasification apparatus. The gasification apparatus shown in FIG. 64 has a pyrolysis kiln furnace 240 and a fluidized-bed char combustion furnace 241. A raw material A is fed by a feeding mechanism 242 into the rotary pyrolysis kiln furnace 240 which is slightly inclined, and pyrolyzed in the rotary pyrolysis kiln furnace 240 to produce a generated gas $G_A$ containing tar and also to simultaneously produce incombustibles I and char $C_X$. A steam U is charged into the rotary pyrolysis kiln furnace 240 for supplying heat and also promoting the pyrolysis.

The incombustibles I and the char $C_X$ which are discharged from the rotary pyrolysis kiln furnace 240 are temporarily stored in a hopper 243, and then charged through a double damper 245 and a feeding mechanism 246 into the fluidized-bed char combustion furnace 241. The incombustibles I and the char $C_X$ are temporarily stored in the hopper 243 because the incombustibles I and the char $C_X$ are intermittently or continuously supplied through the double damper 245 to the fluidized-bed char combustion furnace 241 for thereby preventing a combustion gas from leaking from the fluidized-bed char combustion furnace 241. The fluidized-bed char combustion furnace 241 has a dense fluidized bed comprising sand as a bed material, and air, or oxygen, or a mixture of air or oxygen, and steam is utilized as a fluidizing gas. The air is supplied to the fluidized bed at an air ratio of about 1.2 to 2 of the amount of air that is required to combust the char $C_X$. In the fluidized-bed char combustion furnace 241, the char $C_X$ is combusted, and the incombustibles I are simultaneously discharged from the lower portion of the fluidized bed.

When the char $C_X$ is combusted in the fluidized-bed char combustion furnace 241, any remaining unburned char $C_X$ and a combustion exhaust gas $G_C$ are delivered from the fluidized-bed char combustion furnace 241 to a cyclone-type dust collector 247 where the combustion exhaust gas $G_C$ and the char $C_X$ are separated from each other. The char $C_X$ is returned to the fluidized-bed char combustion furnace 241, and the combustion exhaust gas $G_C$ (900 to 1000°C) is delivered to a heat exchanger 248 in which a heat exchange is performed between the generated gas $G_A$ and the combustion exhaust gas $G_C$. The generated gas $G_A$ is heated, and delivered to a gas reforming apparatus. The combustion exhaust gas $G_C$ from the heat exchanger 248 is supplied to the rotary pyrolysis kiln furnace 240. The rotary pyrolysis kiln furnace 240 is of a double-walled structure having an inner space through which the row material A flows and an outer space through which the combustion exhaust gas $G_C$ flows to heat the inner space.

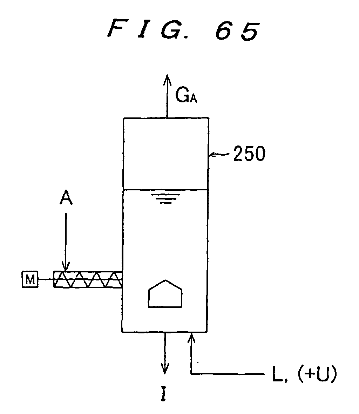

FIG. 65 is a view showing an example of a system construction of a gasification apparatus. The gasification apparatus shown in FIG. 65 has a partial combustion gasification furnace 250 which is supplied with a raw material A by a feeding mechanism. The partial combustion gasification furnace 250 is also supplied with a fluidizing gas which comprises air L (or oxygen $O_2$) supplied at an air ratio of about 0.2 to 0.5 of the amount of air that is required to combust the raw material A. A steam U may be added to the air L. By using the steam U, gasification of the raw material A can be promoted. When part of the raw material A is combusted by the charged air (or oxygen $O_2$), the temperature of the fluidized bed is maintained, and the quantity of heat required to pyrolyze and gasify the raw material A is provided. The partial combustion gasification furnace 250 has a dense fluidized bed comprising sand as a bed material. A dust collector (not shown) is provided at the outlet of the partial combustion gasification furnace 250 for trapping char $C_X$ in the generated gas $G_X$ and returning the trapped char $C_X$ to the partial combustion gasification furnace 250.

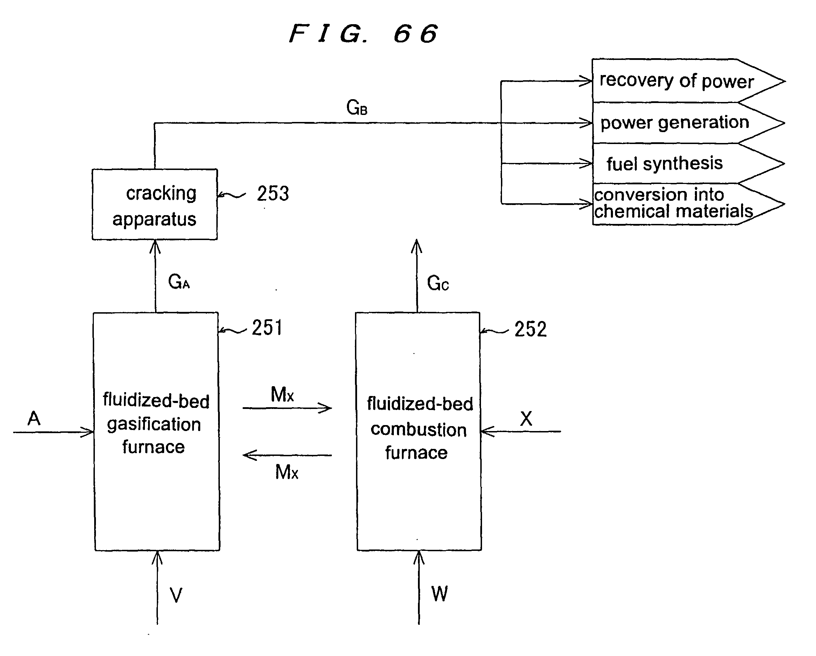

FIG. 66 is a view showing a system construction of a gasification apparatus which comprises a bed material circulation dual fluidized bed system fluidized-bed gasification furnace. The bed material circulation dual fluidized bed system fluidized-bed gasification furnace comprises a fluidized-bed gasification furnace 251 and a fluidized-bed combustion furnace 252 as major equipment. A bed material circulating means is provided for circulating a bed material $M_X$ between the fluidized-bed gasification furnace 251 and the fluidized-bed combustion furnace 252. The bed material $M_X$ comprises, at least partly, catalyst particles which comprises alumina or a calcium compound.

The fluidized-bed gasification furnace 251 is supplied with a raw material A (various wastes such as RDF or waste plastics, coal, biomass, etc.), pyrolyzes and gasifies the raw material A with a gasifying gas V such as steam, and decomposes and reforms the pyrolysis gas. Since at least part of the bed material $M_X$ comprises catalyst particles, it is possible to decompose high molecular compounds such as tar, which have heretofore posed problems, within the furnace without increasing the temperature in the furnace. When high molecular compounds such as tar are decomposed, carbon may be deposited on the surface of the catalyst particles in the fluidized-bed gasification furnace 251. A part of the bed material $M_X$ containing the char $C_X$ and the catalyst particles is supplied from the fluidized-bed gasification furnace 251 to the fluidized-bed combustion furnace 252.

A generated gas (pyrolysis gas) which is produced in the fluidized-bed gasification furnace 251 is decomposed and reformed to reduce the molecular weight of the generated gas $G_A$ by the action of the catalyst particles in the bed material $M_X$. The generated gas $G_A$ is supplied to gas turbines or gas engines for power recovery or electric power generation, various liquid fuel synthesizing processes for methanol synthesis, DME synthesis, etc., or various chemical material synthesizing processes.

The fluidized-bed combustion furnace 252 is supplied with an oxidizing agent W such as air or the like to combust the char $C_X$ (mainly unburned carbon) that has been carried together with the bed material $M_X$ from the fluidized-bed gasification furnace 251. Since carbon deposited on the surface of the catalyst particles in the fluidized-bed gasification furnace 251 is combusted in the fluidized-bed combustion furnace 252, the catalyst particles are regenerated. The bed material $M_X$ containing the regenerated catalyst particles is returned to the fluidized-bed gasification furnace 251, the bed material $M_X$ and the regenerated catalyst particles having been heated to a high temperature with the heat of combustion of combustibles such as the char $C_X$ in the fluidized-bed combustion furnace 252. The sensible heat of the bed material $M_X$ heated to the high temperature is supplied as a heat source for pyrolysis and gasification in the fluidized-bed gasification furnace 251. If the heat required in the fluidized-bed gasification furnace 251 is not obtained only by the combustion of combustibles such as the char $C_X$ from the fluidized-bed gasification furnace 251, then an auxiliary fuel X is supplied to the fluidized-bed combustion furnace 252 and combusted in the fluidized-bed combustion furnace 252. A combustion exhaust gas $G_C$ discharged from the fluidized-bed combustion furnace 252 is emitted into the atmosphere after the sensible heat is recovered therefrom, harmful substances are removed therefrom, and dust is removed therefrom.

Since the generated gas $G_A$ that has flowed out of the fluidized-bed gasification furnace 251 may contain a large amount of high molecular compounds, in some cases, the generated gas $G_A$ should preferably be converted into the gas having a low molecular weight such as hydrogen, carbon monoxide or methane, depending on the use of the generated gas $G_A$ at a subsequent stage. In such a case, a cracking apparatus 253 is provided at the subsequent stage of the fluidized-bed gasification furnace 251 for converting high molecular compounds into a product gas (reformed gas) $G_B$ having a low molecular weight. The cracking apparatus 253 should preferably be a fluidized-bed type cracking apparatus.

Absorbing catalyst particles such as a calcium compound may be used as at least part of the bed material $M_X$ in order to absorb and remove harmful substances such as chlorine compounds, sulfur compounds, and the like contained in the generated gas $G_A$ that has flowed from the fluidized-bed gasification furnace 251.

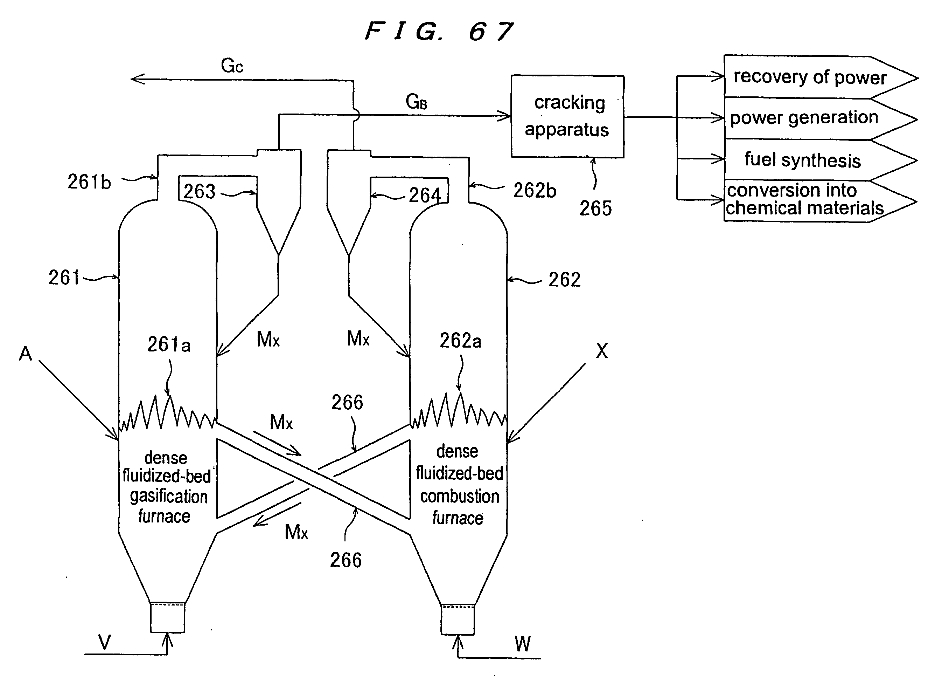

FIG. 67 is a view showing an example of a construction of a gasification apparatus system. As shown in FIG. 67, the gasification apparatus comprises a dense fluidized-bed gasification furnace 261 and a dense fluidized-bed combustion furnace 262 that are connected to each other by two bed material delivery pipes 266. A bed material $M_X$ in the dense fluidized-bed gasification furnace 261 and the dense fluidized-bed combustion furnace 262 overflows fluidized beds 261a, 262a into the other furnaces through the bed material delivery pipes 266. At least part of the bed material $M_X$ comprises catalyst particles of alumina, a calcium compound, or the like.

The dense fluidized-bed gasification furnace 261 is supplied with a raw material A, pyrolyzes and gasifies the raw material A with a gasifying agent (gasifying gas) V such as steam, and decomposes and reforms the pyrolysis gas with the gasifying agent V. Since at least part of the bed material $M_X$ comprises catalyst particles, it is possible to decompose high molecular compounds such as tar, which have heretofore posed problems, within the furnace without increasing the temperature in the furnace. When high molecular compounds such as tar are decomposed, carbon may be deposited on the surface of the catalyst particles in the dense fluidized-bed gasification furnace 261. The catalyst particles may be made of CaO, $FeSiO_2$, $MgSiO_2$, $Al_2O_3$, or the like.

Char $C_X$ generated in the dense fluidized-bed gasification furnace 261 overflows, together with the bed material $M_X$, from the fluidized-bed 261a in the dense fluidized-bed gasification furnace 261 into the bed material delivery pipe 266, and then the char $C_X$ and the bed material flow into the dense fluidized-bed combustion furnace 262. A generated gas which is produced in the dense fluidized-bed gasification furnace 261 is supplied to a subsequent process through a cyclone-type dust collector 263 which is provided at a furnace outlet 261b for recovering the bed material $M_X$ that flies out from an upper portion of the fluidized bed 261a. The bed material $M_X$ that is trapped by the cyclone-type dust collector 263 is returned to the dense fluidized-bed gasification furnace 261.

The dense fluidized-bed combustion furnace 262 is supplied with an oxidizing agent W such as air and combusts combustibles such as the char $C_X$ in the bed material $M_X$ that are supplied from the dense fluidized-bed gasification furnace 261 through the bed material delivery pipe 266. Further, carbon or the like deposited on the surface of the catalyst particles by the decomposing and reforming reactions in the dense fluidized-bed gasification furnace 261 is combusted by the oxidizing agent W containing oxygen in the dense fluidized-bed combustion furnace 262, with the result that the catalyst particles are regenerated. The bed material $M_X$ containing the regenerated catalyst particles overflows the fluidized bed 262a in the dense fluidized-bed combustion furnace 262 into the bed material delivery pipe 266, and is then returned to the dense fluidized-bed gasification furnace 261, the bed material $M_X$ and the regenerated catalyst particles having been heated to a high temperature with the heat of combustion of combustibles such as the char $C_X$ in the dense fluidized-bed combustion furnace 262. The sensible heat of the bed material $M_X$ heated to the high temperature is supplied as a heat source for pyrolysis and gasification in the fluidized-bed gasification furnace 261.

If the heat required in the dense fluidized-bed gasification furnace 261 is not supplied only by the combustion of combustibles such as the char $C_X$ in the dense fluidized-bed combustion furnace 262, then an auxiliary fuel X may be supplied to the dense fluidized-bed combustion furnace 262 and combusted to heat the bed material $M_X$ to a high temperature. A combustion exhaust gas $G_C$ discharged from the dense fluidized-bed combustion furnace 262 is emitted into the atmosphere after the scattering bed material $M_X$ is trapped by a cyclone-type dust collector 264 provided at a furnace outlet 262b of the dense fluidized-bed combustion furnace 262, the sensible heat of the bed material $M_X$ is recovered therefrom, harmful substances are removed therefrom, and dust is removed therefrom. The bed material $M_X$ trapped by the cyclone-type dust collector 264 is returned to the dense fluidized-bed combustion furnace 262.

The product gas $G_B$ that has flowed out of the cyclone-type dust collector 263 may contain high molecular compounds. When the product gas $G_B$ is preferably required to be further converted into the gas having a low molecular weight, depending on the use of the product gas $G_B$ at a subsequent stage, then the product gas $G_B$ is supplied to a cracking apparatus 265 for decomposing and reforming the high molecular compounds. The cracking apparatus 265 has a catalyst which may comprise a calcium-based catalyst, an alumina catalyst, an iron-based catalyst, a nickel-based catalyst, or the like. The catalyst may be a formed body such as honeycomb or particulate, and the cracking apparatus 265 may comprise a fixed bed, a moving bed, a fluidized bed, or the like.

In the cracking process, the carbon deposited on the surface of the catalyst needs to be combusted and removed to regenerate the catalyst. If the cracking apparatus 265 comprises a fixed apparatus, then two or more apparatuses are provided parallel to each other, and the line is switched for a reforming reaction and a catalyst regenerating reaction.

Further, the cracking apparatus 265 preferably comprises a fluidized bed. In this case, the cracking apparatus 265 is arranged to have two fluidized beds and circulate catalyst particles between the two fluidized beds, with one of the two fluidized beds being used for a reforming reaction and the other for a catalyst regenerating reaction. The fluidized bed for a reforming reaction is supplied with the generated gas $G_A$, and the fluidized bed for a catalyst regenerating reaction is supplied with a gas containing oxygen for combustion such as air or the like.

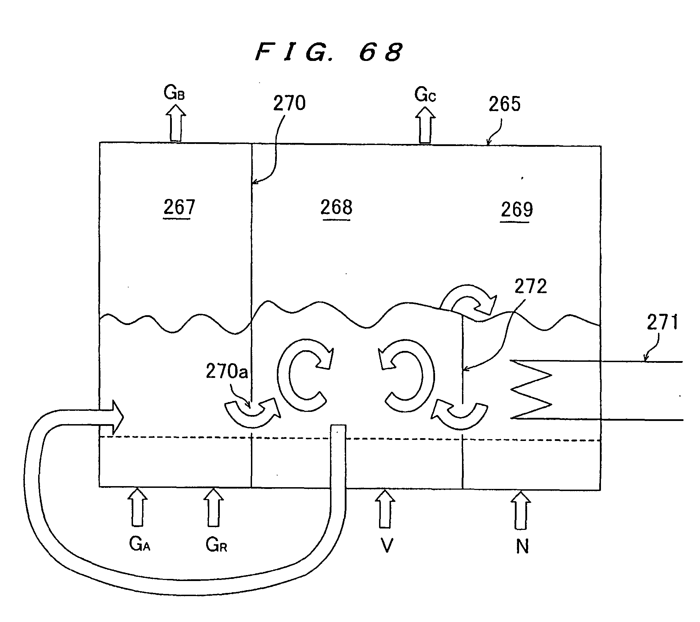

If the cracking apparatus 265 comprises a fluidized-bed type cracking apparatus, then it may have internally circulating fluidized beds as shown in FIG. 68 for easily circulating catalyst particles between the fluidized bed for a reforming reaction and the fluidized bed for a catalyst regenerating reaction. Specifically, the cracking apparatus 265 with the internally circulating fluidized beds has a reforming reaction chamber 267 and a catalyst regeneration chamber 268, within the apparatus, separated from each other by a partition wall 270 having an opening 270a disposed in the fluidized bed and interconnecting the reforming reaction chamber 267 and the catalyst regeneration chamber 268. Since catalyst particles circulate between the reforming reaction chamber 267 and the catalyst regeneration chamber 268 through the opening 270a, a product gas (reformed gas) $G_B$ and a combustion exhaust gas $G_C$ that is produced when the catalyst is regenerated can be recovered without being mixed with each other in the cracking apparatus 265.

The generated gas $G_A$ is supplied to the reforming reaction chamber 267 from its bottom. In the reforming reaction chamber 267, catalyst particles are fluidized, and high molecular compounds contained in the generated gas $G_A$ are converted into components having a low molecular weight. A reforming agent (reforming gas) such as steam required for the reforming reaction may be supplied together with the generated gas $G_A$ to the reforming reaction chamber 267 from its bottom. The product gas $G_B$ which has been converted into components having a low molecular weight is supplied to a subsequent process for power recovery, electric power generation, fuel synthesis, or conversion into chemical materials. Since carbon or the like is deposited on the surface of the catalyst particles, tending to make the catalyst particles inactive, the catalyst particles are delivered to the catalyst regeneration chamber 268 for regenerating the catalyst particles.

The catalyst regeneration chamber 268 is supplied with an oxidizing agent V from its bottom for fluidizing the catalyst particles that have been supplied from the reforming reaction chamber 267 and combusting and removing the carbon or the like that has been deposited on the surface of the catalyst particles. The catalyst particles are heated to a high temperature by combustion of carbon or the like. The regenerated catalyst particles having a high temperature are returned to the reforming reaction chamber 267. By the circulation of the catalyst particles, the heat that is required for the reforming reaction is supplied to the reforming reaction chamber 267. The combustion exhaust gas $G_C$ produced in the catalyst regeneration chamber 268 is emitted out of the system without being mixed with the product gas $G_B$ after the combustion exhaust gas $G_C$ is lowered in its temperature, dust is removed therefrom, and harmful substances are removed therefrom.

An interlayer heat transfer pipe 271 may be disposed in the catalyst regeneration chamber 268 for recovering heat to control the temperature of the fluidized bed. The temperature control performed by the interlayer heat transfer pipe 271 makes the temperature of the fluidized bed optimum for the reforming reaction. The catalyst regeneration chamber 268 for combusting the carbon or the like deposited on the surface of the catalyst particles and a heat recovery chamber 269 for recovering heat may be divided by a partition wall 272 disposed in the fluidized bed, and the catalyst particles may be circulated between the catalyst regeneration chamber 268 and the heat recovery chamber 269. In this case, a fluidizing gas N is supplied to the heat recovery chamber 269 from its bottom. The quantity of heat that is recovered in the heat recovery chamber 269 can be controlled by the amount of the fluidizing gas N that is supplied to the heat recovery chamber 269. In this manner, the temperature of the fluidized bed in the catalyst regeneration chamber 268 can easily be controlled without changing the supplied amount of the oxidizing agent V and the height of the fluidized bed.

The product gas $G_B$ that has been decomposed and reformed by the cracking apparatus 265 is supplied to gas turbines or gas engines for power recovery or electric power generation, various liquid fuel synthesizing processes for methanol synthesis or DME synthesis, various chemical material synthesizing processes, or the like.

Absorbing catalyst particles such as a calcium compound may be used as at least part of the bed material $M_X$ in order to absorb and remove harmful substances such as chlorine compounds, sulfur compounds, and the like contained in the generated gas $G_A$ that has flowed from the gasification furnace.

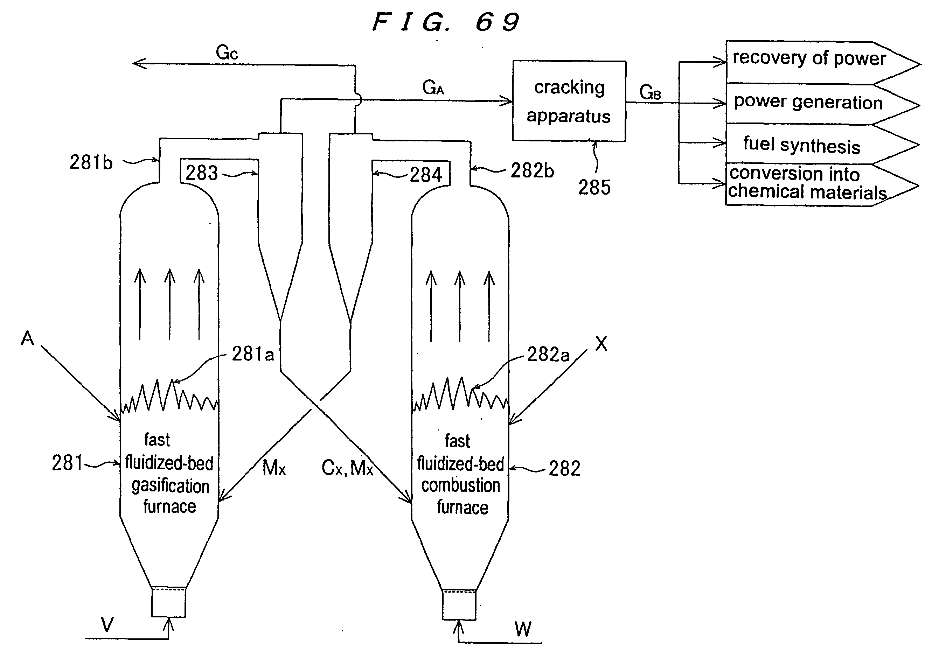

FIG. 69 is a view showing an example of a system construction of a gasification apparatus according to the present invention. As shown in FIG. 69, the gasification apparatus has two fast fluidized-bed furnaces comprising a fast fluidized-bed gasification furnace 281 and a fast fluidized-bed combustion furnace 282. The two fast fluidized-bed furnaces have respective furnace outlets 281b, 282b connected to respective cyclone-type dust collectors 283, 284. A bed material (particles) which flies out from the respective fluidized beds is separated and recovered by the cyclone-type dust collectors 283, 284, and is then supplied to the other fast fluidized-bed furnaces. At least part of the bed material $M_X$ comprises catalyst particles of alumina, a calcium compound, or the like.

The fast fluidized-bed gasification furnace 281 is supplied with a raw material A, pyrolyzes and gasifies the raw material A with a gasifying agent V such as steam or the like, and decomposes and reforms the pyrolysis gas with the gasifying agent V. Since at least part of the bed material $M_X$ comprises catalyst particles, it is possible to decompose high molecular compounds such as tar, which have heretofore posed problems, within the furnace without increasing the temperature in the furnace. When high molecular compounds such as tar are decomposed, carbon may be deposited on the surface of the catalyst particles in the fast fluidized-bed gasification furnace 281. The catalyst particles may be made of $CaO$, $FeSiO_2$, $MgSiO_2$, $Al_2O_3$, or the like.

Char $C_X$ (mainly unburned carbon) that has been produced in the fast fluidized-bed gasification furnace 281 and the bed material $M_X$ flow together with the generated gas $G_A$ out of the fast fluidized-bed gasification furnace 281, and the char $C_X$ and the bed material $M_X$ are separated and recovered by the cyclone-type dust collector 283 and supplied to the fast fluidized-bed combustion furnace 282. The generated gas $G_A$ which has been produced in the fast fluidized-bed gasification furnace 281 and separated from the char $C_X$ and the bed material $M_X$ by the cyclone-type dust collector 283 is supplied to a subsequent process.

The fast fluidized-bed combustion furnace 282 is supplied with an oxidizing agent W such as air or the like and combusts combustibles such as the char in the bed material $M_X$ that is supplied from the fast fluidized-bed gasification furnace 281. The carbon or the like deposited on the surface of the catalyst particles in the bed material $M_X$ by the decomposing and reforming reactions in the fast fluidized-bed gasification furnace 281 is combusted and removed by a gas containing oxygen in the fast fluidized-bed combustion furnace 282, with the result that the catalyst particles are regenerated. The bed material $M_X$ containing the regenerated catalyst particles which have been heated to a high temperature by the heat of combustion of carbon or the like in the fast fluidized-bed combustion furnace 282 flows together with the combustion exhaust gas $G_C$ from a furnace outlet 282b into the cyclone-type dust collector 284. The bed material $M_X$ is separated and recovered by the cyclone-type dust collector 284, and is then returned to the fast fluidized-bed gasification furnace 281.

The sensible heat of the bed material $M_X$ heated to the high temperature is supplied as a heat source for pyrolysis and gasification in the fast fluidized-bed gasification furnace 281. If the heat required in the fast fluidized-bed gasification furnace 281 is not supplied only by the combustion of combustibles such as the char $C_X$ from the fast fluidized-bed combustion furnace 282, then an auxiliary fuel X may be supplied to the fast fluidized-bed combustion furnace 282 and combusted to heat the bed material $M_X$ to a high temperature. A combustion exhaust gas $G_C$ discharged from the fast fluidized-bed combustion furnace 282 is emitted into the atmosphere after it is separated from the char and the bed material $M_X$ by the cyclone-type dust collector 284 provided at the furnace outlet 282b, the sensible heat is recovered therefrom, harmful substances are removed therefrom, and dust is removed therefrom.

The generated gas $G_A$ that has flowed out of the cyclone-type dust collector 283 may contain high molecular compounds. When the generated gas $G_A$ is preferably required to be further converted into the gas having a low molecular weight depending on the use of the generated gas $G_A$ at a subsequent stage, then the generated gas $G_A$ is supplied to a cracking apparatus 285 for decomposing and reforming the high molecular compounds. The cracking apparatus 285 has a catalyst which may comprise a calcium-based catalyst, an alumina catalyst, an iron-based catalyst, a nickel-based catalyst, or the like. The catalyst may be a formed body such as honeycomb or particulate, and the cracking apparatus 285 may comprise a fixed bed, a moving bed, a fluidized bed, or the like.

The carbon deposited on the surface of the catalyst in the cracking process performed by the cracking apparatus 285 needs to be combusted and removed to regenerate the catalyst. If the cracking apparatus 285 comprises a fixed-bed apparatus, then two or more apparatuses are provided parallel to each other, and the line is switched for a reforming reaction and a catalyst regenerating reaction. Further, the cracking apparatus 285 preferably comprises a fluidized bed. In this case, the cracking apparatus 285 is arranged to have two fluidized beds and circulate catalyst particles between the two fluidized beds, with one of the two fluidized beds being used for a reforming reaction and the other for a catalyst regenerating reaction. The fluidized bed for a reforming reaction is supplied with the generated gas $G_A$, and the fluidized bed for a catalyst regenerating reaction is supplied with a gas containing oxygen such as combustion air or the like.

If the cracking apparatus 285 comprises a fluidized-bed type cracking apparatus, then it may be constructed and operated in the same manner as the cracking apparatus shown in FIG. 68. The product gas (reformed gas) $G_B$ that has been decomposed and reformed by the cracking apparatus 285 is supplied to gas turbines or gas engines for power recovery or electric power generation, various liquid fuel synthesizing processes for methanol synthesis or DME synthesis, various chemical material synthesizing processes, or the like.

Absorbing catalyst particles such as a calcium compound or the like may be used as at least part of the bed material $M_X$ in order to absorb and remove harmful substances such as chlorine compounds, sulfur compounds, and the like contained in the generated gas $G_A$ that has flowed from the fast fluidized-bed gasification furnace 281 and separated from the bed material $M_X$ by the cyclone-type dust collector 283.

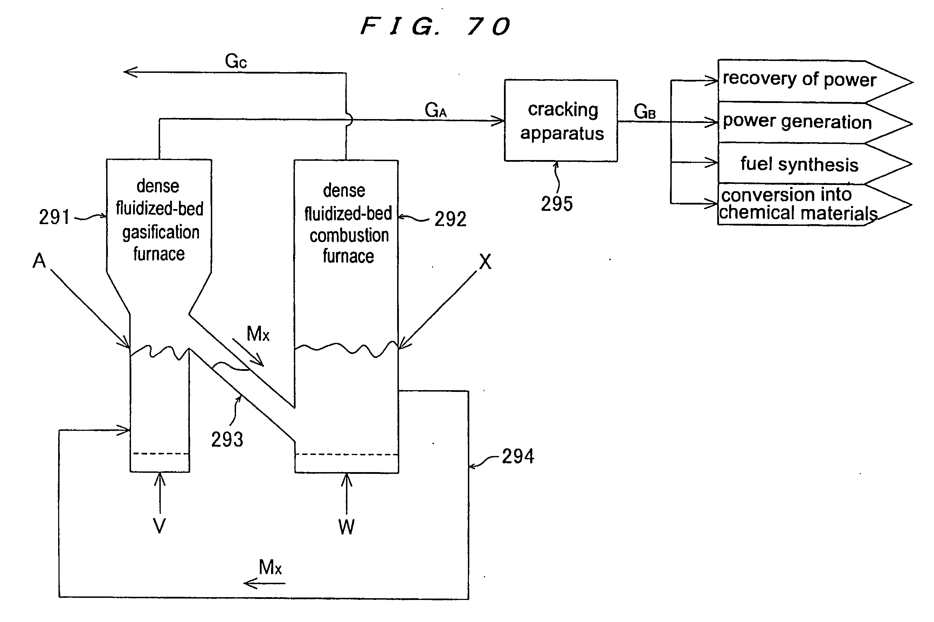

FIG. 70 is a view showing an example of a system construction of a gasification apparatus. As shown in FIG. 70, the gasification apparatus has two dense fluidized-bed furnaces comprising a dense fluidized-bed gasification furnace 291 and a dense fluidized-bed combustion furnace 292. A bed material $M_X$ moves from the dense fluidized-bed gasification furnace 291 into the dense fluidized-bed combustion furnace 292 in an overflow manner through a bed material delivery pipe 293. However, the bed material $M_X$ moves from the dense fluidized-bed combustion furnace 292 into the dense fluidized-bed gasification furnace 291 by a pneumatic transportation system comprising a pneumatic transportation pipe 294. At least part of the bed material $M_X$ comprises catalyst particles of alumina, a calcium compound, or the like.

The dense fluidized-bed gasification furnace 291 is supplied with a raw material A, pyrolyzes and gasifies the raw material A with a gasifying agent (gasifying gas) V such as steam, and decomposes and reforms the pyrolysis gas with the gasifying agent V. Since at least part of the bed material $M_X$ comprises catalyst particles, it is possible to decompose high molecular compounds such as tar, which have heretofore posed problems, within the furnace without increasing the temperature in the furnace. When high molecular compounds such as tar are decomposed, carbon may be deposited on the surface of the catalyst particles in the dense fluidized-bed gasification furnace 291. The catalyst particles may be made of CaO, $FesiO_2$, $Al_2O_3$, or the like. Char produced in the dense fluidized-bed gasification furnace 291 overflows, together with the bed material $M_X$, the fluidized bed in the dense fluidized-bed gasification furnace 291 into the bed material delivery pipe 293, and then the char and the bed material $M_X$ flow into the dense fluidized-bed combustion furnace 292. The generated gas $G_A$ produced in the dense fluidized-bed gasification furnace 291 is supplied to a subsequent process.

The dense fluidized-bed combustion furnace 292 is supplied with an oxidizing agent V such as air and combusts combustibles such as the char in the bed material $M_X$ that are supplied from the dense fluidized-bed gasification furnace 291. Further, carbon or the like deposited on the surface of the catalyst particles by the decomposing and reforming reactions in the dense fluidized-bed gasification furnace 291 is combusted and removed by a gas containing oxygen in the dense fluidized-bed combustion furnace 292, with the result that the catalyst particles are regenerated. The bed material $M_X$ containing the regenerated catalyst particles which have been heated to a high temperature by the heat of combustion of combustibles such as carbon or the like in the dense fluidized-bed combustion furnace 292 is returned through the pneumatic transportation pipe 294 to the dense fluidized-bed gasification furnace 291.

The sensible heat of the bed material $M_X$ heated to the high temperature is supplied as a heat source for pyrolysis and gasification in the dense fluidized-bed gasification furnace 291. If the heat required in the dense fluidized-bed gasification furnace 291 is not supplied only by the combustion of combustibles such as the char from the dense fluidized-bed combustion furnace 292, then an auxiliary fuel X may be supplied to the dense fluidized-bed combustion furnace 292 and combusted to heat the bed material $M_X$ to a high temperature. A combustion exhaust gas $G_C$ discharged from the dense fluidized-bed combustion furnace 292 is emitted into the atmosphere after the sensible heat is recovered therefrom, harmful substances are removed therefrom, and dust is removed therefrom.

The generated gas $G_A$ that has flowed out of the dense fluidized-bed gasification furnace 291 may contain high molecular compounds. When the generated gas $G_A$ is preferably required to be further converted into the gas having a low molecular weight depending on the use of the generated gas $G_A$ at a subsequent stage, then the generated gas $G_A$ is supplied to a cracking apparatus 295 for decomposing and reforming the high molecular compounds. The cracking apparatus 295 has a catalyst which may comprise a calcium-based catalyst, an alumina catalyst, an iron-based catalyst, a nickel-based catalyst, or the like. The catalyst may be a formed body such as honeycomb or particulate, and the cracking apparatus 295 may comprise a fixed bed, a moving bed, a fluidized bed, or the like.

The carbon deposited on the surface of the catalyst in the cracking process needs to be combusted and removed to regenerate the catalyst. If the cracking apparatus 295 comprises a fixed-bed apparatus, then two or more apparatuses are provided parallel to each other, and the line is switched for a reforming reaction and a catalyst regenerating reaction. Further, the cracking apparatus 295 preferably comprises a fluidized bed. In this case, the cracking apparatus 295 is arranged to have two fluidized beds and circulate catalyst particles between the two fluidized beds, with one of the two fluidized beds being used for a reforming reaction and the other for a catalyst regenerating reaction. The fluidized bed for a reforming reaction is supplied with the generated gas $G_A$, and the fluidized bed for a catalyst regenerating reaction is supplied with a gas containing oxygen such as combustion air or the like.

If the cracking apparatus 295 comprises a fluidized-bed type cracking apparatus, then it may be constructed and operated in the same manner as the cracking apparatus shown in FIG. 68. The product gas (reformed gas) $G_B$ that has been decomposed and reformed by the cracking apparatus 295 is supplied to gas turbines or gas engines for power recovery or electric power generation, various liquid fuel synthesizing processes for methanol synthesis, DME synthesis, etc., or various chemical material synthesizing processes, or the like.

Absorbing catalyst particles such as a calcium compound or the like may be used as at least part of the bed material in order to absorb and remove harmful substances such as chlorine compounds, sulfur compounds, and the like contained in the generated gas $G_A$ that has flowed from the dense fluidized-bed gasification furnace 291.

The terms "dense fluidized bed", "fast fluidized-bed", and "entrained bed" used above refer to a process of floating particles with a gas (supplied from the lower portion of the apparatus to float the particles with its force). These three processes differ from each other based on different amounts of the gas supplied. The amounts of the gas supplied are progressively greater in order: the dense fluidized bed (about 2 m/s) < the fast fluidized-bed (about 3 to 16 m/s) < the entrained bed (15 to 20 m/s). The dense fluidized bed, the fast fluidized-bed, and the entrained bed are defined as follows:

The dense fluidized bed is a fluidized bed in which most of the particles remain within the apparatus (fluidized-bed furnace or the like) without flying out therefrom. The void fraction in the bed is in the range of 0.6 to 0.8 (volume fraction). Air bubbles having definite interfaces are often present in the bed.

The fast fluidized-bed is a fluidized bed in which particles fly out by allowing more gas to be supplied than the dense fluidized bed. The void fraction in the fast fluidized-bed is in the range of 0.8 to 0.98 (volume fraction). The fast fluidized-bed often has a (recycling) mechanism for trapping the discharged particles above the apparatus and returning the trapped particles into the fast fluidized-bed.

The entrained bed is a bed in which particles are delivered on a gas stream by allowing more gas to be supplied than the high-speed fluidized bed. The void fraction in the entrained bed is 0.99 or higher (volume fraction).

As described above, according to the present invention defined in the claims, the following excellent advantages can be obtained:

According to the inventions defined in claims 1 and 2, the waste heat of the combustible gas reforming process is utilized as the heat source required for catalyst regenerating heat in the catalyst regenerating apparatus or gas reforming reaction in the gas reforming apparatus, or the catalyst regenerating apparatus which uses the waste heat of the combustible gas reforming process is used. Therefore, a heat source having a low value such as the sensible heat of exhaust gas that is generated in a gasification process of a raw material can be used as the heat source for regenerating the catalyst or the heat source for gas reforming. Thus, since any external energy or the heat of combustion of the generated gas may be reduced or eliminated, the yield of the generated gas can be increased. As a result, the overall efficiency can be increased.

According to the inventions defined in claims 3 and 4, the char produced by gasifying the combustibles in the gasification apparatus is combusted in the char combustion apparatus, and the heat of combustion of the char is used as the heat source required for the catalyst regenerating heat or the gas reforming reaction in the gas reforming apparatus. Because any external energy or the heat of combustion of the generated gas may be reduced or eliminated, the yield of the generated gas can be increased. As a result, the overall efficiency can be increased.

According to the invention defined in claim 5, the gasification chamber and the combustion chamber each having a fluidized bed are integrated into a furnace. In addition to the effect of the invention of claim 4, the gasification apparatus has a function to gasify a raw material A and a function to combust char. Since char generated is combusted in the same apparatus, any trouble caused by the delivery of the char is avoided. Since the raw material is gasified in the fluidized bed and the char is combusted in the fluidized bed, the diffusion of heat is excellent, and stable operation can be performed.

According to the invention defined in claim 6, the gasification apparatus comprises a gasification apparatus having a fluidized bed which uses catalyst particles as at least part of a bed material, and at the same time that the combustibles are gasified to produce the generated gas in the gasification apparatus, the generated gas is reformed (tar decomposition) by bringing the generated gas and the catalyst particles as a bed material into contact with each other. Therefore, the generated gas is reformed efficiently. In addition to the effect of claims 3 and 4, gasification of the raw material and reforming of the gas, and combustion of the char and regeneration of the catalyst can be performed in one apparatus. Consequently, a catalyst regenerating apparatus can be eliminated, and the initial cost of the apparatus can be reduced.

According to the invention defined in claim 7, the gasification apparatus comprises a gasification chamber and a combustion chamber each having a fluidized bed which uses catalyst particles as at least part of a bed material, and at the same time that the combustibles are gasified into the generated gas in the gasification chamber, the generated gas is reformed by the catalyst particles, and the degraded catalyst particles are delivered to the combustion chamber, and heated and regenerated in the combustion chamber. Consequently, in addition to the effect of the invention of claim 6, the problem of handling of particles including char from the gasification chamber to the combustion chamber can be solved, and the heat efficiency is improved.

According to the invention defined in claim 8, inasmuch as the dust collecting and catalytic reaction apparatus having a dust collecting function and a gas reforming function deducts the generated gas from the gasification apparatus before the generated gas is reformed (tar decomposition) by the catalyst, the catalyst is prevented from being degraded and from being mixed with dust. Further, separation of the catalyst is eliminated. In addition, the catalytic reaction apparatus may be of such a type as a reactor having a fixed bed which may possibly be clogged and may not be used in the presence of dust. Furthermore, the arrangement is suitable for preventing the catalyst, which decomposes tar at a low temperature, from being degraded or contaminated.

According to the invention defined in claim 9, since the catalyst degraded by reforming the generated gas is heated and regenerated by the catalyst regenerating apparatus with the heat of the combustion exhaust gas from the char combustion apparatus, in addition to the effect of the invention of claim 8, the catalyst can efficiently be regenerated or heated by the high-temperature heat of combustion of the char without using external energy or combusting part of the generated gas. It is thus possible to increase the yield of the generated gas. The overall amount of consumed energy is reduced, the running cost is low, and an LCA evaluation is high.

According to the invention defined in claim 10, since the gasification apparatus comprises a gasification chamber and a combustion chamber each having a fluidized bed, and the catalyst degraded by reforming the generated gas is heated and regenerated by the catalyst regenerating apparatus with the combustion exhaust gas from the combustion chamber, in addition to the effect of the invention of claim 9, the problem of handling of particles including char from the gasification chamber to the combustion chamber can be solved, a heat loss due to a heat radiation is reduced, and the heat efficiency is improved.

According to the invention defined in claim 11, since the gasification apparatus comprises a gasification chamber, a combustion chamber, and a dust collecting and catalyst reaction chamber each having a fluidized bed, in addition to the effect of the invention of claim 10, the problem of handling of particles including char from the dust collecting and catalyst reaction chamber to the combustion chamber can be solved, and the heat efficiency is improved. Because the dust collecting and catalyst reaction chamber is integrally combined with the gasification apparatus, the initial cost of the apparatus is lowered.

According to the invention defined in claim 12, since the catalyst degraded by reforming the generated gas in the dust collecting and catalyst reaction chamber is delivered to the combustion chamber, heated and regenerated in the combustion chamber, and then the regenerated catalyst is returned to the dust collecting and catalyst reaction chamber, in addition to the effect of the invention of claim 11, a catalyst regenerating apparatus can be eliminated. Therefore, the heat efficiency is improved and the initial cost of the apparatus is lowered.

According to the invention defined in claim 13, since the gas reforming apparatus and the catalyst regenerating apparatus comprise a fluidized-bed catalytic reaction apparatus which comprises a gas reforming chamber and a catalyst regeneration chamber each having a fluidized bed which uses catalyst particles as at least part of a bed material, the generated gas can efficiently be reformed by fluidization of catalyst particles, and catalyst particles degraded by reforming the generated gas can efficiently be heated and regenerated. A heat loss due to a heat radiation is reduced, and the heat efficiency is improved. In addition, the initial cost of the apparatus is lowered. Therefore, the overall amount of consumed energy is reduced, the running cost is low, and an LCA evaluation is high.

According to the invention defined in claim 14, because the gasification apparatus comprises a gasification chamber and a combustion chamber each having a fluidized bed, in addition to the effect of the invention of claim 13, the problem of handling of particles including char from the gasification chamber to the combustion chamber can be solved, and the heat efficiency is improved.

According to the invention defined in claim 15, because the gasification chamber, the combustion chamber, the gas reforming chamber, and the catalyst regeneration chamber are combined into a single furnace, in addition to the effect of claim 14, the heat efficiency is further improved. Further, the initial cost of the apparatus is further lowered.

According to the inventions defined in claims 16 and 17, a gas containing one or more of oxygen, steam, and hydrogen is supplied as a regenerating gas for regenerating the catalyst, and heat of reaction generated when the catalyst is regenerated and process waste heat are used to heat or regenerate catalyst particles. Therefore, a shortage of the process waste heat which uses the heat of combustion of part of the generated gas or the heat of reaction generated when the catalyst is regenerated can be supplemented with the heat of reaction, and hence the yield of the generated gas can further be improved.

According to the invention defined in claim 18, since the gasification apparatus is charged with an absorbent for absorbing chlorine compounds or sulfur compounds, the concentration of the chlorine compounds or the sulfur compounds can be reduced.

**Industrial Applicability**

The present invention is applicable to a combustible gas reforming method and a combustible gas reforming apparatus for reforming a combustible gas which is produced by gasifying a combustible raw material such as coal, biomass, municipal wastes, industrial wastes, RDF (refuse-derived fuel), and waste plastics with a gasification apparatus.

**Claims**

1.  A combustible gas reforming method comprising:

    gasifying combustibles in a gasification apparatus;
    reforming a generated gas produced by gasification in a gas reforming apparatus using a catalyst to produce a product gas; and
    regenerating the catalyst degraded in said gas reforming apparatus in a catalyst regenerating apparatus;

    wherein waste heat of the combustible gas reforming process is used as a heat source for regenerating the catalyst in said catalyst regenerating apparatus and/or a heat source for heating.

2.  A combustible gas reforming apparatus comprising:

    a gasification apparatus for gasifying combustibles;
    a gas reforming apparatus for reforming a generated gas produced in said gasification apparatus using a catalyst to produce a product gas; and
    a catalyst regenerating apparatus for regenerating the catalyst degraded in said gas reforming apparatus;

    wherein said catalyst regenerating apparatus uses waste heat of the combustible gas reforming process as a heat source for regenerating the catalyst and/or a heat source for heating.

3.  A combustible gas reforming method comprising:

    gasifying combustibles in a gasification apparatus;
    reforming a generated gas produced by gasification in a gas reforming apparatus using a catalyst to produce a product gas; and
    regenerating the catalyst degraded in said gas reforming apparatus in a catalyst regenerating apparatus;

    wherein char (unburned carbon) produced by gasifying the combustibles in said gasification apparatus is combusted in a char combustion apparatus, and the heat of combustion of the char is used as a heat source for regenerating the catalyst in said catalyst regenerating apparatus and/or a heat source for heating.

**4.** A combustible gas reforming apparatus comprising:

a gasification apparatus for gasifying combustibles;
a gas reforming apparatus for reforming a generated gas produced in said gasification apparatus using a catalyst to produce a product gas; and
a catalyst regenerating apparatus for regenerating the catalyst degraded in said gas reforming apparatus;

wherein a char combustion apparatus is provided for combusting char (unburned carbon) produced by gasifying the combustibles in said gasification apparatus, and said catalyst regenerating apparatus uses the heat of combustion of the char generated in said char combustion apparatus for heating and regenerating the catalyst.

**5.** A combustible gas reforming apparatus comprising:

a gasification apparatus for gasifying combustibles;
a gas reforming apparatus for reforming a generated gas produced in said gasification apparatus using a catalyst to produce a product gas; and
a catalyst regenerating apparatus for regenerating the catalyst degraded in said gas reforming apparatus;

wherein said gasification apparatus comprises a gasification chamber and a combustion chamber each having a fluidized bed, said gasification chamber being constructed to gasify the combustibles to produce a generated gas and said combustion chamber being constructed to combust char (unburned carbon) produced by gasifying the combustibles; and
wherein the generated gas produced in said gasification chamber is delivered to said gas reforming apparatus and reformed in said gas reforming apparatus, and a combustion exhaust gas from said combustion chamber is delivered to said catalyst regenerating apparatus to heat and regenerate the catalyst with the heat of the combustion exhaust gas.

**6.** A combustible gas reforming apparatus comprising:

a gasification apparatus for gasifying combustibles;
a gas reforming apparatus for reforming a generated gas produced in said gasification apparatus using a catalyst to produce a product gas; and
a catalyst regenerating apparatus for regenerating the catalyst degraded in said gas reforming apparatus;

wherein said gasification apparatus comprises a gasification apparatus having a fluidized bed which uses catalyst particles as at least part of a bed material, and a char combustion apparatus is provided for combusting char (unburned carbon) produced by gasifying the combustibles in said gasification apparatus; and
wherein at the same time that the combustibles are gasified to produce a generated gas in said gasification apparatus, the generated gas is reformed by the catalyst particles, and the catalyst particles degraded by reforming the generated gas are delivered to said char combustion apparatus, and heated and regenerated in said char combustion apparatus, and the regenerated catalyst particles are returned to said gasification apparatus.

**7.** A combustible gas reforming apparatus comprising:

a gasification apparatus for gasifying combustibles;
a gas reforming apparatus for reforming a generated gas produced in said gasification apparatus using a catalyst to produce a product gas; and
a catalyst regenerating apparatus for regenerating the catalyst degraded in said gas reforming apparatus;

wherein said gasification apparatus comprises a gasification chamber and a combustion chamber each having a fluidized bed which uses catalyst particles as at least part of a bed material, said gasification chamber being constructed to gasify the combustibles to produce a generated gas and said combustion chamber being constructed to combust char (unburned carbon) produced by gasifying the combustibles; and
wherein at the same time that the combustibles are gasified to produce a generated gas in said gasification chamber, the generated gas is reformed by the catalyst particles, and the catalyst particles degraded by reforming the generated gas are delivered to said combustion chamber, and heated and regenerated in said combustion chamber, and the regenerated catalyst particles are returned to said gasification chamber.

8. A combustible gas reforming apparatus comprising:

   a gasification apparatus for gasifying combustibles; and
   a gas reforming apparatus for reforming a generated gas produced in said gasification apparatus using a catalyst to produce a product gas;

   wherein said gas reforming apparatus comprises a dust collecting and catalytic reaction apparatus having a dust collecting function to remove dust contained in the generated gas and a gas reforming function to reform the generated gas with the catalyst.

9. A combustible gas reforming apparatus according to claim 8, wherein a char combustion apparatus and a catalyst regenerating apparatus are provided; and
   wherein the catalyst degraded by reforming the generated gas in said dust collecting and catalytic reaction apparatus is delivered to said catalyst regenerating apparatus, char (unburned carbon) produced when the combustibles are gasified to produce the generated gas by said gasification apparatus is delivered to said char combustion apparatus and combusted in said char combustion apparatus, and a combustion exhaust gas from said char combustion apparatus is delivered to said catalyst regenerating apparatus to heat and regenerate the catalyst.

10. A combustible gas reforming apparatus according to claim 8, wherein said gasification apparatus comprises a gasification chamber and a combustion chamber each having a fluidized bed, said gasification chamber being constructed to gasify the combustibles to produce a generated gas and said combustion chamber being constructed to combust char (unburned carbon) produced by gasifying the combustibles; and
   wherein a catalyst regenerating apparatus is further provided, the catalyst degraded by reforming the generated gas in said dust collecting and catalytic reaction apparatus is delivered to said catalyst regenerating apparatus, and a combustion exhaust gas from said combustion chamber is delivered to said catalyst regenerating apparatus to heat and regenerate the catalyst.

11. A combustible gas reforming apparatus according to claim 8, wherein said gasification apparatus comprises a gasification chamber, a combustion chamber, and a dust collecting and catalyst reaction chamber each having a fluidized bed, said gasification chamber being constructed to gasify the combustibles to produce a generated gas, said combustion chamber being constructed to combust char (unburned carbon) produced by gasifying the combustibles, and said dust collecting and catalyst reaction chamber being constructed to reform the generated gas from said gasification chamber; and
   wherein a catalyst regenerating apparatus is further provided, the catalyst degraded by reforming the generated gas in said dust collecting and catalyst reaction chamber is delivered to said catalyst regenerating apparatus, a combustion exhaust gas from said combustion chamber is delivered to said catalyst regenerating apparatus to heat and regenerate the catalyst, and the heated and regenerated catalyst is returned to said dust collecting and catalyst reaction chamber.

12. A combustible gas reforming apparatus according to claim 8, wherein said gasification apparatus comprises a fluidized-bed furnace having a gasification chamber, a combustion chamber, and a dust collecting and catalyst reaction chamber, said gasification chamber being constructed to gasify the combustibles to produce a generated gas, said combustion chamber being constructed to combust char (unburned carbon) produced by gasifying the combustibles, and said dust collecting and catalyst reaction chamber being constructed to reform the generated gas from said gasification chamber; and
   wherein the catalyst degraded by reforming the generated gas in said dust collecting and catalyst reaction chamber is delivered to said combustion chamber, heated and regenerated in said combustion chamber, and then the regenerated catalyst is returned to said dust collecting and catalyst reaction chamber.

13. A combustible gas reforming apparatus comprising:

   a gasification apparatus for gasifying combustibles;
   a gas reforming apparatus for reforming a generated gas produced in said gasification apparatus using a catalyst to produce a product gas; and
   a catalyst regenerating apparatus for regenerating the catalyst degraded in said gas reforming apparatus;
   a catalytic reaction apparatus comprising said gas reforming apparatus and said catalyst regenerating apparatus, and a char combustion apparatus for combusting char (unburned carbon) produced by gasifying the combustibles in said gasification apparatus are provided;

wherein said catalytic reaction apparatus is constructed to integrate a gas reforming chamber for reforming the generated gas using catalyst particles and a catalyst regeneration chamber for regenerating the catalyst, said catalyst regeneration chamber being constructed to heat and regenerate the catalyst degraded by reforming the generated gas in said gas reforming chamber, and return the regenerated catalyst to said gas reforming chamber; and

wherein the generated gas from said gasification apparatus is delivered to said gas reforming chamber and reformed to produce a product gas, and a combustion exhaust gas from said char combustion apparatus is delivered to said catalyst regenerating apparatus to heat and regenerate the catalyst with the heat of the combustion exhaust gas.

**14.** A combustible gas reforming apparatus according to claim 13, wherein said gasification apparatus comprises a gasification chamber and a combustion chamber each having a fluidized bed, said gasification chamber being constructed to gasify the combustibles to produce a generated gas and said combustion chamber being constructed to combust char (unburned carbon) produced by gasifying the combustibles; and

wherein the generated gas produced in said gasification chamber is delivered to said gas reforming chamber and reformed in said gas reforming chamber, and a combustion exhaust gas from said combustion chamber is delivered to said catalyst regeneration chamber to heat and regenerate the catalyst with the heat of the combustion exhaust gas.

**15.** A combustible gas reforming apparatus comprising:

a gasification apparatus for gasifying combustibles;
a gas reforming apparatus for reforming a generated gas produced in said gasification apparatus using a catalyst to produce a product gas; and
a catalyst regenerating apparatus for regenerating the catalyst degraded in said gas reforming apparatus;

wherein said gasification apparatus comprises a gasification chamber and a combustion chamber each having a fluidized bed, said gasification chamber being constructed to gasify the combustibles to produce a generated gas and said combustion chamber being constructed to combust char (unburned carbon) produced by gasifying the combustibles;

wherein said gas reforming apparatus and said catalyst regenerating apparatus have a gas reforming chamber and a catalyst regeneration chamber each having a fluidized bed which uses catalyst particles as at least part of a bed material, said catalyst regeneration chamber being constructed to heat and regenerate the catalyst degraded by gas reforming in said gas reforming chamber, and return the regenerated catalyst to said gas reforming chamber;

wherein said gasification chamber, said combustion chamber, said gas reforming chamber, and said catalyst regeneration chamber are integrated into a single furnace, the generated gas from said gasification apparatus is delivered to said gas reforming chamber and reformed to produce a product gas in said gas reforming chamber, and a combustion exhaust gas from said combustion chamber is delivered to said catalyst regeneration chamber to heat and regenerate the catalyst with the heat of the combustion exhaust gas.

**16.** A combustible gas reforming method according to claim 1 or 3, wherein said catalyst regenerating apparatus is supplied with a gas containing one or more of oxygen, steam, and hydrogen as a regenerating gas, and heat of reaction produced when the catalyst is regenerated is used together with process waste heat to heat and regenerate the catalyst particles.

**17.** A combustible gas reforming apparatus according to any one of claims 2, 4, and 5 through 15, wherein said catalyst regenerating apparatus is supplied with a gas containing one or more of oxygen, steam, and hydrogen as a regenerating gas, and heat of reaction produced when the catalyst is regenerated is used together with process waste heat to heat and regenerate the catalyst particles.

**18.** A combustible gas reforming apparatus according to any one of claims 2, 4, and 5 through 17, wherein said gasification apparatus is charged with an absorbent for absorbing chlorine compounds or sulfur compounds when the raw material is gasified.

# F I G. 1

A      301     G$_A$     302      G$_B$

| raw material | → | gasification apparatus | → | gas reforming apparatus | → | product gas |

C'$_A$           C$_A$

303

catalyst regenerating apparatus

T$_E$

# F I G. 2

EP 1 431 373 A1

# F I G. 3

A    11    $G_A$    12    $G_B$

| raw material | → | gasification apparatus | → | gas reforming apparatus | → | product gas |

$C_X$ →     14

$C'_A$ →     $C_A$ ←

| char combustion apparatus | $G_C$ → | catalyst regenerating apparatus | 13 |

42

## F I G. 4

# F I G. 5

EP 1 431 373 A1

*FIG. 6*

EP 1 431 373 A1

F I G. 7

## F I G. 8

# FIG. 9

11

$C_A$

A

raw material

11-1

gasification chamber

$G'_A, C_X, J$

15

dust collector

$G_B$

product gas

$C_X, J, I, C'_A$

$C_X, J$

$C_A$

$M_X, C_X$

$M_X$

18

sorting apparatus

combustion chamber

$C_X, J$

11-2

$G_C, J$

17

dust collector

$G_C$

13

catalyst regenerating apparatus

$G_C$

I

J

$C'_A$

## F I G. 1 0

## F I G. 1 1

F I G. 1 2

## F I G. 1 3

F I G. 1 4

## F I G. 1 5

# F I G. 1 6

# FIG. 17

EP 1 431 373 A1

38

dust collector

37

heat recovery apparatus

$G_B$    40-3    40c    $G_C$    40-2    40    40b    40-1

| dedusting and catalyst chamber | combustion chamber | gasification chamber |

A

$C'_A$    $C'_A$

41b

41    41a    40a    40e    34

J,$C_x$    40d    L    sorting apparatus    $C_x$,J

I

$C_x$,J,$G_A$

# F I G. 1 8

# F I G. 1 9

$O_X$

$J, C_X, G_A \longrightarrow$

$32-1$

$32$

$32c$

$\longrightarrow G_B$

$32-2$

$32b$

$C_A$

$32-3$

# F I G. 20

# F I G. 2 1

# F I G. 2 2

EP 1 431 373 A1

# F I G.   2 3

$G_B$

42

$G_A$

32

$C'_A, M_X, J$

$C'_A, M_X, J$

$G_C$

43

43a

A

43-2

43-1

43-2a

43-1a

$C_A$

34

$C'_A, C_X, M_X$

$I, C'_A, M_X, J$

$I$

# F I G . 2 4

FIG. 25

# F I G. 2 6

EP 1 431 373 A1

65

# FIG. 27

FIG. 28

# F I G. 2 9

FIG. 30

# F I G. 3 1

F I G. 32

# F I G. 33

FIG. 34

EP 1 431 373 A1

# F I G. 3 5

# F I G. 36

gas reforming apparatus 12

$C_A$

catalyst regenerating apparatus 13

$C'_A$

$G_R$    $G_A$    $G_T$

gasification apparatus
(partial combustion gasification
furnace may be used) ~11

# F I G. 3 7

gas reforming apparatus — 12

catalyst regenerating apparatus — 13

$C_A$

$C'_A$

$G_R$

$G_A$

70 — $G_T$ $G_C$

$M_x$

11-1 — gasification chamber

char combustion chamber — 11-2

— 11

$M_x, C_x$

gasification apparatus

# F I G. 3 8

# F I G. 3 9

gas reforming apparatus — 12

catalyst regenerating apparatus — 13

$C_A$

$C'_A$

72

$G_R$  $G_A$

$G_C$

$G_T$

gasification chamber

char combustion chamber — 11

11-1

11-2

$M_X$

$M_X, C_X$

gasification apparatus

# F I G. 4 0

# F I G. 4 1

## F I G.  4 2

EP 1 431 373 A1

# F I G. 4 3

## F I G. 4 4

# F I G. 4 5

gas reforming apparatus 12

catalyst regenerating apparatus 13

$C_A$

$C'_A$

72

$G_R$

$G_A$

L

$G_C$

11

gasification chamber 11-1

$M_x$

char combustion chamber 11-2

$M_x, C_x$
gasification apparatus

## F I G. 4 6

# F I G. 4 7

# F I G. 4 8

# F I G. 4 9

# F I G. 5 0

# F I G. 5 1

# F I G. 5 2

$G_B$      $G_C$

203     204

200

201     gas reforming chamber     catalyst regenerating chamber     202

$G_A$      $G_C$

# F I G. 53

# F I G.  5 4

# F I G. 5 5

# F I G. 5 6

# F I G. 5 7

# F I G. 5 8

# F I G. 5 9

FIG. 60

## F I G.  6 1

FIG. 62A

FIG. 62B

# F I G. 6 3 A

$G_A$     234     $G_B$     A

235     234a     234b

239

237     238a     238b

239

236

$G_C$     $G_C$     A

# F I G. 6 3 B

237     234

236

239

# F I G. 6 3 C

237     236     $G_{PA}$     $G_{PA}$

239

$G_{PA}$     239

# F I G. 6 4

EP 1 431 373 A1

F I G. 6 5

F I G. 66

# F I G. 6 7

recovery of power

power generation

fuel synthesis

conversion into chemical materials

cracking apparatus

$G_B$

$G_C$

261b

263

264

262b

265

261

262

261a

Mx

Mx

262a

A

X

Mx

266

dense fluidized-bed gasification furnace

dense fluidized-bed combustion furnace

Mx

266

V

W

F I G. 6 8

265

269

268

267

270

272

271

270a

$G_C$

$G_B$

$G_R$

$G_A$

N

V

# F I G. 6 9

EP 1 431 373 A1

$G_C$

$G_A$

cracking
apparatus

$G_B$

recovery of power

power generation

fuel synthesis

conversion into
chemical materials

281b

283

284

282b

285

A

281a

X

281

fast
fluidized-bed
gasification
furnace

$M_X$

$C_X, M_X$

282a

fast
fluidized-bed
combustion
furnace

282

V

W

EP 1 431 373 A1

## F I G. 7 0

## INTERNATIONAL SEARCH REPORT

International application No.

PCT/JP02/10148

**A. CLASSIFICATION OF SUBJECT MATTER**
Int.Cl$^7$ C10K1/26

According to International Patent Classification (IPC) or to both national classification and IPC

**B. FIELDS SEARCHED**

Minimum documentation searched (classification system followed by classification symbols)
Int.Cl$^7$ C10K1/26

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 00/27951 A1 (Ebara Corp.),<br>18 May, 2000 (18.05.00),<br>Full text<br>& EP 1136542 A1 | 3,4,7,16-18<br>8,12<br>1,2,5,6,<br>9-11,13-15 |
| X<br>Y<br>A | JP 9-310075 A (Japan Electric Cable Technology<br>Center, Inc.),<br>02 December, 1997 (02.12.97),<br>Full text<br>(Family: none) | 3,4,6,18<br>8,12<br>1,2,5,7,<br>9-11,13-15 |
| X<br>Y | JP 9-111254 A (The Kansai Electric Power Co.,<br>Inc., The Chugoku Electric Power Co., Inc.,<br>Mitsubishi Heavy Industries, Ltd.),<br>28 April, 1997 (28.04.97),<br>Full text<br>(Family: none) | 8,12<br>3,4,6,7,<br>16-18 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 December, 2002 (17.12.02) | Date of mailing of the international search report<br>14 January, 2003 (14.01.03) |
|---|---|
| Name and mailing address of the ISA/<br>Japanese Patent Office | Authorized officer |
| Facsimile No. | Telephone No. |

Form PCT/ISA/210 (second sheet) (July 1998)

110

**INTERNATIONAL SEARCH REPORT**

International application No.

PCT/JP02/10148

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 55-161887 A  (Ishikawajima-Harima Heavy Industries Co., Ltd.), 16 December, 1980 (16.12.80), Full text (Family: none) | 8,12<br>3,4,6,7,<br>16-18 |

Form PCT/ISA/210 (continuation of second sheet) (July 1998)

## INTERNATIONAL SEARCH REPORT

| International application No. |
| --- |
| PCT/JP02/10148 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

    The matter common to the inventions according to claims 1 to 18 is that"
a combustible material is gasified in a gasification unit, and a formed gas
produced by said gasification is reformed in a gas reforming unit using a
catalyst, to produce a product gas".
    In the technical field of an inflammable gas, "when a gas produced by the
gasification of a combustible material is reformed with a catalyst, a catalyst
deteriorated by char or the like is regenerated by burning it" has been found
to have been known before the filing date of this international application
(WO 00/27951 A1, US 4436532 A, EP 100531 A2,
(continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

                         ☒    No protest accompanied the payment of additional search fees.

Form PCT/ISA/210 (continuation of first sheet (1)) (July 1998)

**INTERNATIONAL SEARCH REPORT**

International application No.

PCT/JP02/10148

Continuation of Box No.II of continuation of first sheet(1)

JP 9-310075 A), and therefore, said matter is not a special technical feature (a technical feature that defines a contribution which an invention makes over the prior art). Accordingly, there is no technical relationship involving a special technical feature among inventions according to claims 1 to 18, and therefore, this international application does not comply with the requirement of unity of invention (PCT Rule 13.1 and 13.2).

Form PCT/ISA/210 (extra sheet) (July 1998)